# EUROPEAN PATENT APPLICATION

(11) **EP 4 776 713 A2**
(43) Date of publication of application: **15.07.2026**
(21) Application number: 26182628.3
(22) Date of filing: 16.05.2024
(51) Int. Cl.: H04W 64/00

(54) **DETERMINATION OF CAPABILITY OF USER EQUIPMENT TO MEASUREA DOWNLINK POSITIONING REFERENCE SIGNALACROSS A PLURALITY OF FREQUENCY HOPS**

(30) Priority: 25.05.2023 GR 20230100420
(62) Divisional of application: 24734325.4
(71) Applicant: QUALCOMM Incorporated, San Diego, CA 92121-1714 (US)
(72) Inventor: MANOLAKOS, Alexandros, San Diego (US); DUAN, Weimin, San Diego (US); LY, Hung Dinh, San Diego (US)
(74) Representative: Reddie & Grose LLP

(57) **Abstract**

Aspects of the disclosure are directed to a waveform capability exchange. In some designs, knowledge of waveform(s) for downlink reference signal (DL-RS) supported by wireless network component (e.g., transmission reception point (TRP)) may facilitate a device to make waveform-specific decisions. Additional aspects of the disclosure are directed to wireless network component-initiated (e.g., TRP-initiated) capability change indications for DL-RS. Further aspects of the disclosure are directed to DL-RS pre-configurations for on-demand DL-RS.

## Description

### BACKGROUND OF THE DISCLOSURE

### 1. Field of the Disclosure

Aspects of the disclosure relate generally to wireless communications.

### 2. Description of the Related Art

Wireless communication systems have developed through various generations, including a first-generation analog wireless phone service (1G), a second-generation (2G) digital wireless phone service (including interim 2.5G and 2.75G networks), a third-generation (3G) high speed data, Internet-capable wireless service and a fourth-generation (4G) service (e.g., Long Term Evolution (LTE) or WiMax). There are presently many different types of wireless communication systems in use, including cellular and personal communications service (PCS) systems. Examples of known cellular systems include the cellular analog advanced mobile phone system (AMPS), and digital cellular systems based on code division multiple access (CDMA), frequency division multiple access (FDMA), time division multiple access (TDMA), the Global System for Mobile communications (GSM), etc.

A fifth generation (5G) wireless standard, referred to as New Radio (NR), enables higher data transfer speeds, greater numbers of connections, and better coverage, among other improvements. The 5G standard, according to the Next Generation Mobile Networks Alliance, is designed to provide higher data rates as compared to previous standards, more accurate positioning (e.g., based on reference signals for positioning (RS-P), such as downlink, uplink, or sidelink positioning reference signals (PRS)), and other technical enhancements. These enhancements, as well as the use of higher frequency bands, advances in PRS processes and technology, and high-density deployments for 5G, enable highly accurate 5G-based positioning.

### SUMMARY

The following presents a simplified summary relating to one or more aspects disclosed herein. Thus, the following summary should not be considered an extensive overview relating to all contemplated aspects, nor should the following summary be considered to identify key or critical elements relating to all contemplated aspects or to delineate the scope associated with any particular aspect. Accordingly, the following summary has the sole purpose to present certain concepts relating to one or more aspects relating to the mechanisms disclosed herein in a simplified form to precede the detailed description presented below.

In an aspect, a method of operating a wireless network component includes transmitting a downlink (DL) reference signal (DL-RS) waveform capability for on-demand RS to a device, the DL-RS waveform capability indicating a set of waveform types supported by the wireless network component for DL-RS; and receiving an on-demand DL-RS request from the device that requests a DL-RS configuration associated with a waveform type from the set of waveform types.

In an aspect, a method of operating a device includes receiving a downlink reference signal (DL-RS) waveform capability for on-demand RS from a wireless network component, the DL-RS waveform capability indicating a set of waveform types supported by the wireless network component for DL-RS; selecting a waveform type for a DL-RS configuration associated with a DL-RS procedure; and transmitting an on-demand DL-RS request to the wireless network component that requests a DL-RS configuration for the DL-RS procedure, the DL-RS configuration associated with the waveform type.

In an aspect, a method of operating a wireless network component includes transmitting a set of downlink reference signal (DL-RS) capabilities of the wireless network component to a device; determining that one or more DL-RS capabilities from the set of DL-RS capabilities has changed; and transmitting a DL-RS capability change indication that indicates the one or more changed DL-RS capabilities to the device in response to the determination.

In an aspect, a method of operating a device includes receiving a set of downlink reference signal (DL-RS) capabilities of a wireless network component; and receiving a DL-RS capability change indication that is initiated by the wireless network component and that indicates one or more changed DL-RS capabilities of the wireless network component relative to the set of DL-RS capabilities.

In an aspect, a method of operating a wireless network component includes receiving a set of downlink reference signal (DL-RS) pre-configurations for on-demand RS from a device; receiving an on-demand DL-RS request from the device that requests a first DL-RS configuration from the set of DL-RS pre-configurations for a DL-RS procedure; determining to transition from the first DL-RS configuration to a second DL-RS configuration from the set of DL-RS pre-configurations for the DL-RS procedure; and transmitting a DL-RS configuration update request to the device in response to the determination, the DL-RS configuration update request configured to request the transition from the first DL-RS configuration to the second DL-RS configuration.

In an aspect, a method of operating a device includes transmitting a set of downlink reference signal (DL-RS) pre-configurations for on-demand RS to a wireless network component; transmitting an on-demand DL-RS request to the wireless network component that requests a first DL-RS configuration from the set of DL-RS pre-configurations for a DL-RS procedure; and receiving a DL-RS configuration update request from the wireless network component that is configured to request the transition from the first DL-RS configuration to a second DL-RS configuration.

In an aspect, a wireless network component includes a memory; and at least one processor communicatively coupled to the memory, the at least one processor configured to: transmit a downlink (DL) reference signal (DL-RS) waveform capability for on-demand RS to a device, the DL-RS waveform capability indicating a set of waveform types supported by the wireless network component for DL-RS; and receive an on-demand DL-RS request from the device that requests a DL-RS configuration associated with a waveform type from the set of waveform types.

In an aspect, a device includes a memory; and at least one processor communicatively coupled to the memory, the at least one processor configured to: receive a downlink reference signal (DL-RS) waveform capability for on-demand RS from a wireless network component, the DL-RS waveform capability indicating a set of waveform types supported by the wireless network component for DL-RS; select a waveform type for a DL-RS configuration associated with a DL-RS procedure; and transmit an on-demand DL-RS request to the wireless network component that requests a DL-RS configuration for the DL-RS procedure, the DL-RS configuration associated with the waveform type.

In an aspect, a wireless network component includes a memory; and at least one processor communicatively coupled to the memory, the at least one processor configured to: transmit a set of downlink reference signal (DL-RS) capabilities of the wireless network component to a device; determine that one or more DL-RS capabilities from the set of DL-RS capabilities has changed; and transmit a DL-RS capability change indication that indicates the one or more changed DL-RS capabilities to the device in response to the determination.

In an aspect, a device includes a memory; and at least one processor communicatively coupled to the memory, the at least one processor configured to: receive a set of downlink reference signal (DL-RS) capabilities of a wireless network component; and receive a DL-RS capability change indication that is initiated by the wireless network component and that indicates one or more changed DL-RS capabilities of the wireless network component relative to the set of DL-RS capabilities.

In an aspect, a wireless network component includes a memory; and at least one processor communicatively coupled to the memory, the at least one processor configured to: receive a set of downlink reference signal (DL-RS) pre-configurations for on-demand RS from a device; receive an on-demand DL-RS request from the device that requests a first DL-RS configuration from the set of DL-RS pre-configurations for a DL-RS procedure; determine to transition from the first DL-RS configuration to a second DL-RS configuration from the set of DL-RS pre-configurations for the DL-RS procedure; and transmit a DL-RS configuration update request to the device in response to the determination, the DL-RS configuration update request configured to request the transition from the first DL-RS configuration to the second DL-RS configuration.

In an aspect, a device includes a memory; and at least one processor communicatively coupled to the memory, the at least one processor configured to: transmit a set of downlink reference signal (DL-RS) pre-configurations for on-demand RS to a wireless network component; transmit an on-demand DL-RS request to the wireless network component that requests a first DL-RS configuration from the set of DL-RS pre-configurations for a DL-RS procedure; and receive a DL-RS configuration update request from the wireless network component that is configured to request the transition from the first DL-RS configuration to a second DL-RS configuration.

In an aspect, a wireless network component includes means for transmitting a downlink (DL) reference signal (DL-RS) waveform capability for on-demand RS to a device, the DL-RS waveform capability indicating a set of waveform types supported by the wireless network component for DL-RS; and means for receiving an on-demand DL-RS request from the device that requests a DL-RS configuration associated with a waveform type from the set of waveform types.

In an aspect, a device includes means for receiving a downlink reference signal (DL-RS) waveform capability for on-demand RS from a wireless network component, the DL-RS waveform capability indicating a set of waveform types supported by the wireless network component for DL-RS; means for selecting a waveform type for a DL-RS configuration associated with a DL-RS procedure; and means for transmitting an on-demand DL-RS request to the wireless network component that requests a DL-RS configuration for the DL-RS procedure, the DL-RS configuration associated with the waveform type.

In an aspect, a wireless network component includes means for transmitting a set of downlink reference signal (DL-RS) capabilities of the wireless network component to a device; means for determining that one or more DL-RS capabilities from the set of DL-RS capabilities has changed; and means for transmitting a DL-RS capability change indication that indicates the one or more changed DL-RS capabilities to the device in response to the determination.

In an aspect, a device includes means for receiving a set of downlink reference signal (DL-RS) capabilities of a wireless network component; and means for receiving a DL-RS capability change indication that is initiated by the wireless network component and that indicates one or more changed DL-RS capabilities of the wireless network component relative to the set of DL-RS capabilities.

In an aspect, a wireless network component includes means for receiving a set of downlink reference signal (DL-RS) pre-configurations for on-demand RS from a device; means for receiving an on-demand DL-RS request from the device that requests a first DL-RS configuration from the set of DL-RS pre-configurations for a DL-RS procedure; means for determining to transition from the first DL-RS configuration to a second DL-RS configuration from the set of DL-RS pre-configurations for the DL-RS procedure; and means for transmitting a DL-RS configuration update request to the device in response to the determination, the DL-RS configuration update request configured to request the transition from the first DL-RS configuration to the second DL-RS configuration.

In an aspect, a device includes means for transmitting a set of downlink reference signal (DL-RS) pre-configurations for on-demand RS to a wireless network component; means for transmitting an on-demand DL-RS request to the wireless network component that requests a first DL-RS configuration from the set of DL-RS pre-configurations for a DL-RS procedure; and means for receiving a DL-RS configuration update request from the wireless network component that is configured to request the transition from the first DL-RS configuration to a second DL-RS configuration.

In an aspect, a non-transitory computer-readable medium storing computer-executable instructions that, when executed by a wireless network component, cause the wireless network component to: transmit a downlink (DL) reference signal (DL-RS) waveform capability for on-demand RS to a device, the DL-RS waveform capability indicating a set of waveform types supported by the wireless network component for DL-RS; and receive an on-demand DL-RS request from the device that requests a DL-RS configuration associated with a waveform type from the set of waveform types.

In an aspect, a non-transitory computer-readable medium storing computer-executable instructions that, when executed by a device, cause the device to: receive a downlink reference signal (DL-RS) waveform capability for on-demand RS from a wireless network component, the DL-RS waveform capability indicating a set of waveform types supported by the wireless network component for DL-RS; select a waveform type for a DL-RS configuration associated with a DL-RS procedure; and transmit an on-demand DL-RS request to the wireless network component that requests a DL-RS configuration for the DL-RS procedure, the DL-RS configuration associated with the waveform type.

In an aspect, a non-transitory computer-readable medium storing computer-executable instructions that, when executed by a wireless network component, cause the wireless network component to: transmit a set of downlink reference signal (DL-RS) capabilities of the wireless network component to a device; determine that one or more DL-RS capabilities from the set of DL-RS capabilities has changed; and transmit a DL-RS capability change indication that indicates the one or more changed DL-RS capabilities to the device in response to the determination.

In an aspect, a non-transitory computer-readable medium storing computer-executable instructions that, when executed by a device, cause the device to: receive a set of downlink reference signal (DL-RS) capabilities of a wireless network component; and receive a DL-RS capability change indication that is initiated by the wireless network component and that indicates one or more changed DL-RS capabilities of the wireless network component relative to the set of DL-RS capabilities.

In an aspect, a non-transitory computer-readable medium storing computer-executable instructions that, when executed by a wireless network component, cause the wireless network component to: receive a set of downlink reference signal (DL-RS) pre-configurations for on-demand RS from a device; receive an on-demand DL-RS request from the device that requests a first DL-RS configuration from the set of DL-RS pre-configurations for a DL-RS procedure; determine to transition from the first DL-RS configuration to a second DL-RS configuration from the set of DL-RS pre-configurations for the DL-RS procedure; and transmit a DL-RS configuration update request to the device in response to the determination, the DL-RS configuration update request configured to request the transition from the first DL-RS configuration to the second DL-RS configuration.

In an aspect, a non-transitory computer-readable medium storing computer-executable instructions that, when executed by a device, cause the device to: transmit a set of downlink reference signal (DL-RS) pre-configurations for on-demand RS to a wireless network component; transmit an on-demand DL-RS request to the wireless network component that requests a first DL-RS configuration from the set of DL-RS pre-configurations for a DL-RS procedure; and receive a DL-RS configuration update request from the wireless network component that is configured to request the transition from the first DL-RS configuration to a second DL-RS configuration.

Other objects and advantages associated with the aspects disclosed herein will be apparent to those skilled in the art based on the accompanying drawings and detailed description.

### BRIEF DESCRIPTION OF THE DRAWINGS

The accompanying drawings are presented to aid in the description of various aspects of the disclosure and are provided solely for illustration of the aspects and not limitation thereof.
FIG. 1 illustrates an example wireless communications system, according to aspects of the disclosure.
FIGS. 2A, 2B, and 2C illustrate example wireless network structures, according to aspects of the disclosure.
FIGS. 3A, 3B, and 3C are simplified block diagrams of several sample aspects of components that may be employed in a user equipment (UE), a base station, and a network entity, respectively, and configured to support communications as taught herein.
FIG. 4 is a diagram illustrating an example frame structure, according to aspects of the disclosure.
FIG. 5 is a diagram illustrating various downlink channels within an example downlink slot, according to aspects of the disclosure.
FIG. 6 is a diagram of an example positioning reference signal (PRS) configuration for the PRS transmissions of a given base station, according to aspects of the disclosure.
FIG. 7 is a diagram illustrating an example downlink positioning reference signal (DL-PRS) configuration for two transmission-reception points (TRPs) operating in the same positioning frequency layer, according to aspects of the disclosure.
FIG. 8 illustrates an location management function (LMF)-initiated on-demand PRS procedure, in accordance with aspects of the disclosure.
FIG. 9A illustrates a TRP Information Exchange procedure, in accordance with aspects of the disclosure.
FIG. 9B illustrates a PRS Configuration Exchange procedure, in accordance with aspects of the disclosure.
FIGS. 10A and 10B illustrate different types of radar.
FIG. 11 illustrates an example call flow for a New Radio (NR)-based sensing procedure in which the network configures the sensing parameters, according to aspects of the disclosure.
FIG. 12 illustrates an exemplary process of communications according to an aspect of the disclosure.
FIG. 13 illustrates an exemplary process of communications according to an aspect of the disclosure.
FIG. 14 illustrates an exemplary process of communications according to an aspect of the disclosure.
FIG. 15 illustrates an exemplary process of communications according to an aspect of the disclosure.
FIG. 16 illustrates an example implementation of the processes of FIGS. 14-15, respectively, in accordance with aspects of the disclosure.
FIG. 17 illustrates an exemplary process of communications according to an aspect of the disclosure.
FIG. 18 illustrates an exemplary process of communications according to an aspect of the disclosure.
FIG. 19 illustrates an example implementation of the processes of FIGS. 17-18, respectively, in accordance with aspects of the disclosure.

### DETAILED DESCRIPTION

Aspects of the disclosure are provided in the following description and related drawings directed to various examples provided for illustration purposes. Alternate aspects may be devised without departing from the scope of the disclosure. Additionally, well-known elements of the disclosure will not be described in detail or will be omitted so as not to obscure the relevant details of the disclosure.

Aspects of the disclosure are directed to a waveform capability exchange. In some designs, knowledge of waveform(s) for downlink positioning reference signal (DL-PRS) supported by wireless network component (e.g., transmission reception point (TRP)) may facilitate a position estimation entity (e.g., location management function (LMF)) to make waveform-specific decisions. Additional aspects of the disclosure are directed to wireless network component-initiated (e.g., TRP-initiated) capability change indications for DL-PRS. Further aspects of the disclosure are directed to DL-PRS pre-configurations for on-demand DL-PRS.

Particular aspects of the subject matter described in this disclosure can be implemented to realize one or more of the following potential advantages.

Aspects of the disclosure are directed to a TRP-LMF waveform capability exchange. In some designs, knowledge of waveform(s) for DL-PRS supported by TRP may facilitate the LMF to make waveform-specific decisions. For example, some waveforms may be associated with higher network power consumption than others. Such aspects may thereby provide various technical advantages, including more control over network power consumption for DL-PRS procedures, which may reduce power consumptions on communications networks such as "green" networks.

Additional aspects of the disclosure are directed to wireless network component-initiated (e.g., TRP-initiated) capability change indications for DL-PRS. For example, certain TRP capabilities may be gained or lost after the TRP Information Exchange procedure. In this case, wireless network component-initiated (e.g., TRP-initiated) capability change indications for DL-PRS may allow the position estimation entity (e.g., LMF) to update the DL-RS configuration (i.e., DL-PRS configuration) to accommodate (or better utilize) the changed wireless network component capability. Such aspects may provide various technical advantages, such as reduced position estimation latency, reduce power consumption at wireless network component, improved position estimation accuracy, and so on.

Further aspects of the disclosure are directed to DL-PRS pre-configurations for on-demand DL-PRS. Such aspects may provide various technical advantages, such as permitting the wireless network component (e.g., TRP) to initiate a transition from one DL-PRS (pre-)configuration to another, which may facilitate reduced position estimation latency, reduce power consumption at wireless network component, improved position estimation accuracy, and so on.

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage or mode of operation.

Those of skill in the art will appreciate that the information and signals described below may be represented using any of a variety of different technologies and techniques. For example, data, instructions, commands, information, signals, bits, symbols, and chips that may be referenced throughout the description below may be represented by voltages, currents, electromagnetic waves, magnetic fields or particles, optical fields or particles, or any combination thereof, depending in part on the particular application, in part on the desired design, in part on the corresponding technology, etc.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, the sequence(s) of actions described herein can be considered to be embodied entirely within any form of non-transitory computer-readable storage medium having stored therein a corresponding set of computer instructions that, upon execution, would cause or instruct an associated processor of a device to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

As used herein, the terms "user equipment" (UE) and "base station" are not intended to be specific or otherwise limited to any particular radio access technology (RAT), unless otherwise noted. In general, a UE may be any wireless communication device (e.g., a mobile phone, router, tablet computer, laptop computer, consumer asset locating device, wearable (e.g., smartwatch, glasses, augmented reality (AR) / virtual reality (VR) headset, etc.), vehicle (e.g., automobile, motorcycle, bicycle, etc.), Internet of Things (IoT) device, etc.) used by a user to communicate over a wireless communications network. A UE may be mobile or may (e.g., at certain times) be stationary, and may communicate with a radio access network (RAN). As used herein, the term "UE" may be referred to interchangeably as an "access terminal" or "AT," a "client device," a "wireless device," a "subscriber device," a "subscriber terminal," a "subscriber station," a "user terminal" or "UT," a "mobile device," a "mobile terminal," a "mobile station," or variations thereof. Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, wireless local area network (WLAN) networks (e.g., based on the Institute of Electrical and Electronics Engineers (IEEE) 802.11 specification, etc.) and so on.

A base station may operate according to one of several RATs in communication with UEs depending on the network in which it is deployed, and may be alternatively referred to as an access point (AP), a network node, a NodeB, an evolved NodeB (eNB), a next generation eNB (ng-eNB), a New Radio (NR) Node B (also referred to as a gNB or gNodeB), etc. A base station may be used primarily to support wireless access by UEs, including supporting data, voice, and/or signaling connections for the supported UEs. In some systems a base station may provide purely edge node signaling functions while in other systems it may provide additional control and/or network management functions. A communication link through which UEs can send signals to a base station is called an uplink (UL) channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, a forward traffic channel, etc.). As used herein the term traffic channel (TCH) can refer to either an uplink / reverse or downlink / forward traffic channel.

The term "base station" may refer to a single physical transmission-reception point (TRP) or to multiple physical TRPs that may or may not be co-located. For example, where the term "base station" refers to a single physical TRP, the physical TRP may be an antenna of the base station corresponding to a cell (or several cell sectors) of the base station. Where the term "base station" refers to multiple co-located physical TRPs, the physical TRPs may be an array of antennas (e.g., as in a multiple-input multiple-output (MIMO) system or where the base station employs beamforming) of the base station. Where the term "base station" refers to multiple non-co-located physical TRPs, the physical TRPs may be a distributed antenna system (DAS) (a network of spatially separated antennas connected to a common source via a transport medium) or a remote radio head (RRH) (a remote base station connected to a serving base station). Alternatively, the non-co-located physical TRPs may be the serving base station receiving the measurement report from the UE and a neighbor base station whose reference radio frequency (RF) signals the UE is measuring. Because a TRP is the point from which a base station transmits and receives wireless signals, as used herein, references to transmission from or reception at a base station are to be understood as referring to a particular TRP of the base station.

In some implementations that support positioning of UEs, a base station may not support wireless access by UEs (e.g., may not support data, voice, and/or signaling connections for UEs), but may instead transmit reference signals to UEs to be measured by the UEs, and/or may receive and measure signals transmitted by the UEs. Such a base station may be referred to as a positioning beacon (e.g., when transmitting signals to UEs) and/or as a location measurement unit (e.g., when receiving and measuring signals from UEs).

An "RF signal" comprises an electromagnetic wave of a given frequency that transports information through the space between a transmitter and a receiver. As used herein, a transmitter may transmit a single "RF signal" or multiple "RF signals" to a receiver. However, the receiver may receive multiple "RF signals" corresponding to each transmitted RF signal due to the propagation characteristics of RF signals through multipath channels. The same transmitted RF signal on different paths between the transmitter and receiver may be referred to as a "multipath" RF signal. As used herein, an RF signal may also be referred to as a "wireless signal" or simply a "signal" where it is clear from the context that the term "signal" refers to a wireless signal or an RF signal.

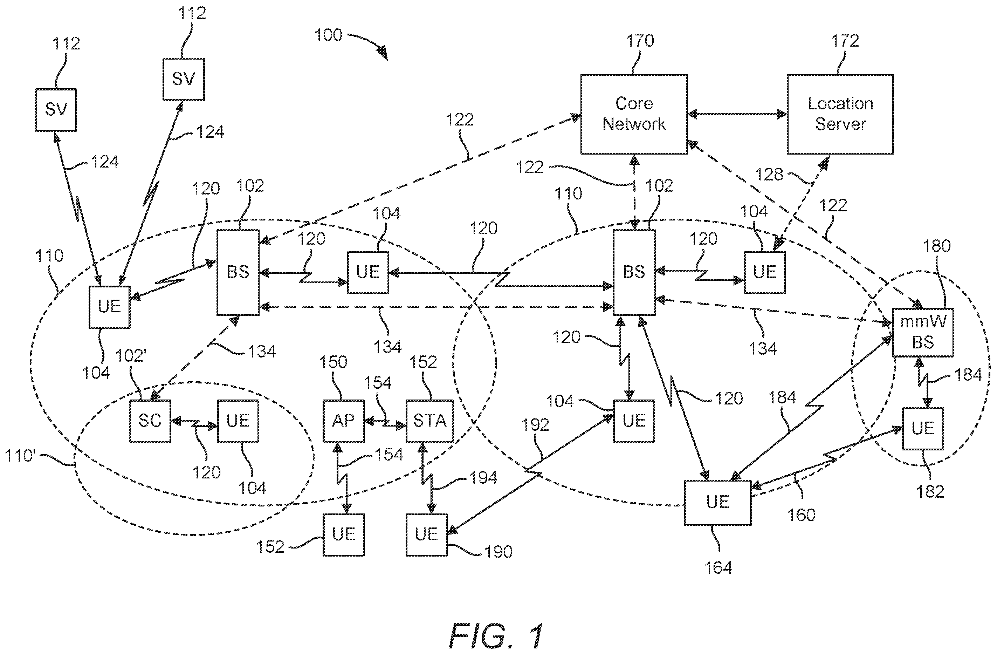

FIG. 1 illustrates an example wireless communications system 100, according to aspects of the disclosure. The wireless communications system 100 (which may also be referred to as a wireless wide area network (WWAN)) may include various base stations 102 (labeled "BS") and various UEs 104. The base stations 102 may include macro cell base stations (high power cellular base stations) and/or small cell base stations (low power cellular base stations). In an aspect, the macro cell base stations may include eNBs and/or ng-eNBs where the wireless communications system 100 corresponds to an LTE network, or gNBs where the wireless communications system 100 corresponds to a NR network, or a combination of both, and the small cell base stations may include femtocells, picocells, microcells, etc.

The base stations 102 may collectively form a RAN and interface with a core network 170 (e.g., an evolved packet core (EPC) or a 5G core (5GC)) through backhaul links 122, and through the core network 170 to one or more location servers 172 (e.g., a location management function (LMF) or a secure user plane location (SUPL) location platform (SLP)). The location server(s) 172 may be part of core network 170 or may be external to core network 170. A location server 172 may be integrated with a base station 102. A UE 104 may communicate with a location server 172 directly or indirectly. For example, a UE 104 may communicate with a location server 172 via the base station 102 that is currently serving that UE 104. A UE 104 may also communicate with a location server 172 through another path, such as via an application server (not shown), via another network, such as via a wireless local area network (WLAN) access point (AP) (e.g., AP 150 described below), and so on. For signaling purposes, communication between a UE 104 and a location server 172 may be represented as an indirect connection (e.g., through the core network 170, etc.) or a direct connection (e.g., as shown via direct connection 128), with the intervening nodes (if any) omitted from a signaling diagram for clarity.

In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC / 5GC) over backhaul links 134, which may be wired or wireless.

The base stations 102 may wirelessly communicate with the UEs 104. Each of the base stations 102 may provide communication coverage for a respective geographic coverage area 110. In an aspect, one or more cells may be supported by a base station 102 in each geographic coverage area 110. A "cell" is a logical communication entity used for communication with a base station (e.g., over some frequency resource, referred to as a carrier frequency, component carrier, carrier, band, or the like), and may be associated with an identifier (e.g., a physical cell identifier (PCI), an enhanced cell identifier (ECI), a virtual cell identifier (VCI), a cell global identifier (CGI), etc.) for distinguishing cells operating via the same or a different carrier frequency. In some cases, different cells may be configured according to different protocol types (e.g., machine-type communication (MTC), narrowband IoT (NB-IoT), enhanced mobile broadband (eMBB), or others) that may provide access for different types of UEs. Because a cell is supported by a specific base station, the term "cell" may refer to either or both of the logical communication entity and the base station that supports it, depending on the context. In addition, because a TRP is typically the physical transmission point of a cell, the terms "cell" and "TRP" may be used interchangeably. In some cases, the term "cell" may also refer to a geographic coverage area of a base station (e.g., a sector), insofar as a carrier frequency can be detected and used for communication within some portion of geographic coverage areas 110.

While neighboring macro cell base station 102 geographic coverage areas 110 may partially overlap (e.g., in a handover region), some of the geographic coverage areas 110 may be substantially overlapped by a larger geographic coverage area 110. For example, a small cell base station 102' (labeled "SC" for "small cell") may have a geographic coverage area 110' that substantially overlaps with the geographic coverage area 110 of one or more macro cell base stations 102. A network that includes both small cell and macro cell base stations may be known as a heterogeneous network. A heterogeneous network may also include home eNBs (HeNBs), which may provide service to a restricted group known as a closed subscriber group (CSG).

The communication links 120 between the base stations 102 and the UEs 104 may include uplink (also referred to as reverse link) transmissions from a UE 104 to a base station 102 and/or downlink (DL) (also referred to as forward link) transmissions from a base station 102 to a UE 104. The communication links 120 may use MIMO antenna technology, including spatial multiplexing, beamforming, and/or transmit diversity. The communication links 120 may be through one or more carrier frequencies. Allocation of carriers may be asymmetric with respect to downlink and uplink (e.g., more or less carriers may be allocated for downlink than for uplink).

The wireless communications system 100 may further include a wireless local area network (WLAN) access point (AP) 150 in communication with WLAN stations (STAs) 152 via communication links 154 in an unlicensed frequency spectrum (e.g., 5 GHz). When communicating in an unlicensed frequency spectrum, the WLAN STAs 152 and/or the WLAN AP 150 may perform a clear channel assessment (CCA) or listen before talk (LBT) procedure prior to communicating in order to determine whether the channel is available.

The small cell base station 102' may operate in a licensed and/or an unlicensed frequency spectrum. When operating in an unlicensed frequency spectrum, the small cell base station 102' may employ LTE or NR technology and use the same 5 GHz unlicensed frequency spectrum as used by the WLAN AP 150. The small cell base station 102', employing LTE / 5G in an unlicensed frequency spectrum, may boost coverage to and/or increase capacity of the access network. NR in unlicensed spectrum may be referred to as NR-U. LTE in an unlicensed spectrum may be referred to as LTE-U, licensed assisted access (LAA), or MULTEFIRE^{®}.

The wireless communications system 100 may further include a millimeter wave (mmW) base station 180 that may operate in mmW frequencies and/or near mmW frequencies in communication with a UE 182. Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band have high path loss and a relatively short range. The mmW base station 180 and the UE 182 may utilize beamforming (transmit and/or receive) over a mmW communication link 184 to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed herein.

Transmit beamforming is a technique for focusing an RF signal in a specific direction. Traditionally, when a network node (e.g., a base station) broadcasts an RF signal, it broadcasts the signal in all directions (omni-directionally). With transmit beamforming, the network node determines where a given target device (e.g., a UE) is located (relative to the transmitting network node) and projects a stronger downlink RF signal in that specific direction, thereby providing a faster (in terms of data rate) and stronger RF signal for the receiving device(s). To change the directionality of the RF signal when transmitting, a network node can control the phase and relative amplitude of the RF signal at each of the one or more transmitters that are broadcasting the RF signal. For example, a network node may use an array of antennas (referred to as a "phased array" or an "antenna array") that creates a beam of RF waves that can be "steered" to point in different directions, without actually moving the antennas. Specifically, the RF current from the transmitter is fed to the individual antennas with the correct phase relationship so that the radio waves from the separate antennas add together to increase the radiation in a desired direction, while cancelling to suppress radiation in undesired directions.

Transmit beams may be quasi-co-located, meaning that they appear to the receiver (e.g., a UE) as having the same parameters, regardless of whether or not the transmitting antennas of the network node themselves are physically co-located. In NR, there are four types of quasi-co-location (QCL) relations. Specifically, a QCL relation of a given type means that certain parameters about a second reference RF signal on a second beam can be derived from information about a source reference RF signal on a source beam. Thus, if the source reference RF signal is QCL Type A, the receiver can use the source reference RF signal to estimate the Doppler shift, Doppler spread, average delay, and delay spread of a second reference RF signal transmitted on the same channel. If the source reference RF signal is QCL Type B, the receiver can use the source reference RF signal to estimate the Doppler shift and Doppler spread of a second reference RF signal transmitted on the same channel. If the source reference RF signal is QCL Type C, the receiver can use the source reference RF signal to estimate the Doppler shift and average delay of a second reference RF signal transmitted on the same channel. If the source reference RF signal is QCL Type D, the receiver can use the source reference RF signal to estimate the spatial receive parameter of a second reference RF signal transmitted on the same channel.

In receive beamforming, the receiver uses a receive beam to amplify RF signals detected on a given channel. For example, the receiver can increase the gain setting and/or adjust the phase setting of an array of antennas in a particular direction to amplify (e.g., to increase the gain level of) the RF signals received from that direction. Thus, when a receiver is said to beamform in a certain direction, it means the beam gain in that direction is high relative to the beam gain along other directions, or the beam gain in that direction is the highest compared to the beam gain in that direction of all other receive beams available to the receiver. This results in a stronger received signal strength (e.g., reference signal received power (RSRP), reference signal received quality (RSRQ), signal-to-interference-plus-noise ratio (SINR), etc.) of the RF signals received from that direction.

Transmit and receive beams may be spatially related. A spatial relation means that parameters for a second beam (e.g., a transmit or receive beam) for a second reference signal can be derived from information about a first beam (e.g., a receive beam or a transmit beam) for a first reference signal. For example, a UE may use a particular receive beam to receive a reference downlink reference signal (e.g., synchronization signal block (SSB)) from a base station. The UE can then form a transmit beam for sending an uplink reference signal (e.g., sounding reference signal (SRS)) to that base station based on the parameters of the receive beam.

Note that a "downlink" beam may be either a transmit beam or a receive beam, depending on the entity forming it. For example, if a base station is forming the downlink beam to transmit a reference signal to a UE, the downlink beam is a transmit beam. If the UE is forming the downlink beam, however, it is a receive beam to receive the downlink reference signal. Similarly, an "uplink" beam may be either a transmit beam or a receive beam, depending on the entity forming it. For example, if a base station is forming the uplink beam, it is an uplink receive beam, and if a UE is forming the uplink beam, it is an uplink transmit beam.

The electromagnetic spectrum is often subdivided, based on frequency/wavelength, into various classes, bands, channels, etc. In 5G NR two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the INTERNATIONAL TELECOMMUNICATION UNION^{®} as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, FR4, FR4-a or FR4-1, and/or FR5, or may be within the EHF band.

In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 104/182 and the cell in which the UE 104/182 either performs the initial radio resource control (RRC) connection establishment procedure or initiates the RRC connection re-establishment procedure. The primary carrier carries all common and UE-specific control channels, and may be a carrier in a licensed frequency (however, this is not always the case). A secondary carrier is a carrier operating on a second frequency (e.g., FR2) that may be configured once the RRC connection is established between the UE 104 and the anchor carrier and that may be used to provide additional radio resources. In some cases, the secondary carrier may be a carrier in an unlicensed frequency. The secondary carrier may contain only necessary signaling information and signals, for example, those that are UE-specific may not be present in the secondary carrier, since both primary uplink and downlink carriers are typically UE-specific. This means that different UEs 104/182 in a cell may have different downlink primary carriers. The same is true for the uplink primary carriers. The network is able to change the primary carrier of any UE 104/182 at any time. This is done, for example, to balance the load on different carriers. Because a "serving cell" (whether a PCell or an SCell) corresponds to a carrier frequency / component carrier over which some base station is communicating, the term "cell," "serving cell," "component carrier," "carrier frequency," and the like can be used interchangeably.

For example, still referring to FIG. 1, one of the frequencies utilized by the macro cell base stations 102 may be an anchor carrier (or "PCell") and other frequencies utilized by the macro cell base stations 102 and/or the mmW base station 180 may be secondary carriers ("SCells"). The simultaneous transmission and/or reception of multiple carriers enables the UE 104/182 to significantly increase its data transmission and/or reception rates. For example, two 20 MHz aggregated carriers in a multi-carrier system would theoretically lead to a two-fold increase in data rate (i.e., 40 MHz), compared to that attained by a single 20 MHz carrier.

The wireless communications system 100 may further include a UE 164 that may communicate with a macro cell base station 102 over a communication link 120 and/or the mmW base station 180 over a mmW communication link 184. For example, the macro cell base station 102 may support a PCell and one or more SCells for the UE 164 and the mmW base station 180 may support one or more SCells for the UE 164.

In some cases, the UE 164 and the UE 182 may be capable of sidelink communication. Sidelink-capable UEs (SL-UEs) may communicate with base stations 102 over communication links 120 using the Uu interface (i.e., the air interface between a UE and a base station). SL-UEs (e.g., UE 164, UE 182) may also communicate directly with each other over a wireless sidelink 160 using the PC5 interface (i.e., the air interface between sidelink-capable UEs). A wireless sidelink (or just "sidelink") is an adaptation of the core cellular (e.g., LTE, NR) standard that allows direct communication between two or more UEs without the communication needing to go through a base station. Sidelink communication may be unicast or multicast, and may be used for device-to-device (D2D) media-sharing, vehicle-to-vehicle (V2V) communication, vehicle-to-everything (V2X) communication (e.g., cellular V2X (cV2X) communication, enhanced V2X (eV2X) communication, etc.), emergency rescue applications, etc. One or more of a group of SL-UEs utilizing sidelink communications may be within the geographic coverage area 110 of a base station 102. Other SL-UEs in such a group may be outside the geographic coverage area 110 of a base station 102 or be otherwise unable to receive transmissions from a base station 102. In some cases, groups of SL-UEs communicating via sidelink communications may utilize a one-to-many (1:M) system in which each SL-UE transmits to every other SL-UE in the group. In some cases, a base station 102 facilitates the scheduling of resources for sidelink communications. In other cases, sidelink communications are carried out between SL-UEs without the involvement of a base station 102.

In an aspect, the sidelink 160 may operate over a wireless communication medium of interest, which may be shared with other wireless communications between other vehicles and/or infrastructure access points, as well as other RATs. A "medium" may be composed of one or more time, frequency, and/or space communication resources (e.g., encompassing one or more channels across one or more carriers) associated with wireless communication between one or more transmitter / receiver pairs. In an aspect, the medium of interest may correspond to at least a portion of an unlicensed frequency band shared among various RATs. Although different licensed frequency bands have been reserved for certain communication systems (e.g., by a government entity such as the Federal Communications Commission (FCC) in the United States), these systems, in particular those employing small cell access points, have recently extended operation into unlicensed frequency bands such as the Unlicensed National Information Infrastructure (U-NII) band used by wireless local area network (WLAN) technologies, most notably IEEE 802.11x WLAN technologies generally referred to as "Wi-Fi." Example systems of this type include different variants of CDMA systems, TDMA systems, FDMA systems, orthogonal FDMA (OFDMA) systems, single-carrier FDMA (SC-FDMA) systems, and so on.

Note that although FIG. 1 only illustrates two of the UEs as SL-UEs (i.e., UEs 164 and 182), any of the illustrated UEs may be SL-UEs. Further, although only UE 182 was described as being capable of beamforming, any of the illustrated UEs, including UE 164, may be capable of beamforming. Where SL-UEs are capable of beamforming, they may beamform towards each other (i.e., towards other SL-UEs), towards other UEs (e.g., UEs 104), towards base stations (e.g., base stations 102, 180, small cell 102', access point 150), etc. Thus, in some cases, UEs 164 and 182 may utilize beamforming over sidelink 160.

In the example of FIG. 1, any of the illustrated UEs (shown in FIG. 1 as a single UE 104 for simplicity) may receive signals 124 from one or more Earth orbiting space vehicles (SVs) 112 (e.g., satellites). In an aspect, the SVs 112 may be part of a satellite positioning system that a UE 104 can use as an independent source of location information. A satellite positioning system typically includes a system of transmitters (e.g., SVs 112) positioned to enable receivers (e.g., UEs 104) to determine their location on or above the Earth based, at least in part, on positioning signals (e.g., signals 124) received from the transmitters. Such a transmitter typically transmits a signal marked with a repeating pseudo-random noise (PN) code of a set number of chips. While typically located in SVs 112, transmitters may sometimes be located on ground-based control stations, base stations 102, and/or other UEs 104. A UE 104 may include one or more dedicated receivers specifically designed to receive signals 124 for deriving geo location information from the SVs 112.

In a satellite positioning system, the use of signals 124 can be augmented by various satellite-based augmentation systems (SBAS) that may be associated with or otherwise enabled for use with one or more global and/or regional navigation satellite systems. For example an SBAS may include an augmentation system(s) that provides integrity information, differential corrections, etc., such as the Wide Area Augmentation System (WAAS), the European Geostationary Navigation Overlay Service (EGNOS), the Multifunctional Satellite Augmentation System (MSAS), the Global Positioning System (GPS) Aided Geo Augmented Navigation or GPS and Geo Augmented Navigation system (GAGAN), and/or the like. Thus, as used herein, a satellite positioning system may include any combination of one or more global and/or regional navigation satellites associated with such one or more satellite positioning systems.

In an aspect, SVs 112 may additionally or alternatively be part of one or more non-terrestrial networks (NTNs). In an NTN, an SV 112 is connected to an earth station (also referred to as a ground station, NTN gateway, or gateway), which in turn is connected to an element in a 5G network, such as a modified base station 102 (without a terrestrial antenna) or a network node in a 5GC. This element would in turn provide access to other elements in the 5G network and ultimately to entities external to the 5G network, such as Internet web servers and other user devices. In that way, a UE 104 may receive communication signals (e.g., signals 124) from an SV 112 instead of, or in addition to, communication signals from a terrestrial base station 102.

The wireless communications system 100 may further include one or more UEs, such as UE 190, that connects indirectly to one or more communication networks via one or more device-to-device (D2D) peer-to-peer (P2P) links (referred to as "sidelinks"). In the example of FIG. 1, UE 190 has a D2D P2P link 192 with one of the UEs 104 connected to one of the base stations 102 (e.g., through which UE 190 may indirectly obtain cellular connectivity) and a D2D P2P link 194 with WLAN STA 152 connected to the WLAN AP 150 (through which UE 190 may indirectly obtain WLAN-based Internet connectivity). In an example, the D2D P2P links 192 and 194 may be supported with any well-known D2D RAT, such as LTE Direct (LTE-D), WI-FI DIRECT^{®}, BLUETOOTH^{®}, and so on.

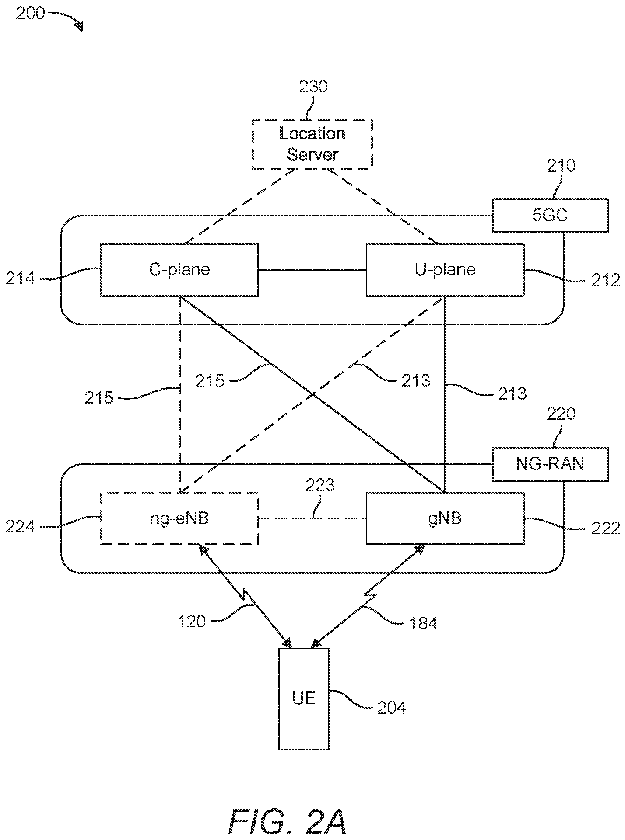

FIG. 2A illustrates an example wireless network structure 200. For example, a 5GC 210 (also referred to as a Next Generation Core (NGC)) can be viewed functionally as control plane (C-plane) functions 214 (e.g., UE registration, authentication, network access, gateway selection, etc.) and user plane (U-plane) functions 212, (e.g., UE gateway function, access to data networks, IP routing, etc.) which operate cooperatively to form the core network. User plane interface (NG-U) 213 and control plane interface (NG-C) 215 connect the gNB 222 to the 5GC 210 and specifically to the user plane functions 212 and control plane functions 214, respectively. In an additional configuration, an ng-eNB 224 may also be connected to the 5GC 210 via NG-C 215 to the control plane functions 214 and NG-U 213 to user plane functions 212. Further, ng-eNB 224 may directly communicate with gNB 222 via a backhaul connection 223. In some configurations, a Next Generation RAN (NG-RAN) 220 may have one or more gNBs 222, while other configurations include one or more of both ng-eNBs 224 and gNBs 222. Either (or both) gNB 222 or ng-eNB 224 may communicate with one or more UEs 204 (e.g., any of the UEs described herein).

Another optional aspect may include a location server 230, which may be in communication with the 5GC 210 to provide location assistance for UE(s) 204. The location server 230 can be implemented as a plurality of separate servers (e.g., physically separate servers, different software modules on a single server, different software modules spread across multiple physical servers, etc.), or alternately may each correspond to a single server. The location server 230 can be configured to support one or more location services for UEs 204 that can connect to the location server 230 via the core network, 5GC 210, and/or via the Internet (not illustrated). Further, the location server 230 may be integrated into a component of the core network, or alternatively may be external to the core network (e.g., a third party server, such as an original equipment manufacturer (OEM) server or service server).

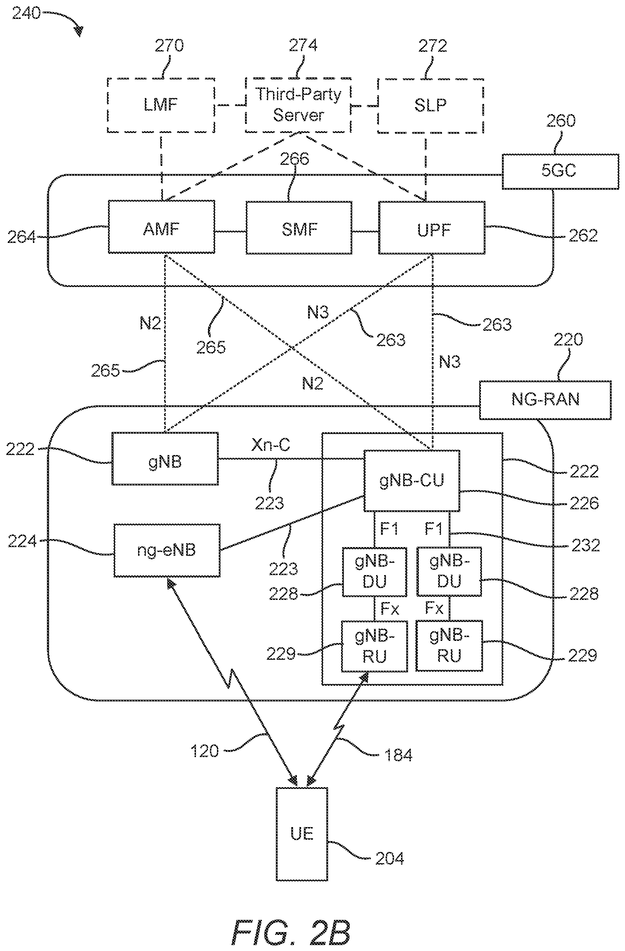

FIG. 2B illustrates another example wireless network structure 240. A 5GC 260 (which may correspond to 5GC 210 in FIG. 2A) can be viewed functionally as control plane functions, provided by an access and mobility management function (AMF) 264, and user plane functions, provided by a user plane function (UPF) 262, which operate cooperatively to form the core network (i.e., 5GC 260). The functions of the AMF 264 include registration management, connection management, reachability management, mobility management, lawful interception, transport for session management (SM) messages between one or more UEs 204 (e.g., any of the UEs described herein) and a session management function (SMF) 266, transparent proxy services for routing SM messages, access authentication and access authorization, transport for short message service (SMS) messages between the UE 204 and the short message service function (SMSF) (not shown), and security anchor functionality (SEAF). The AMF 264 also interacts with an authentication server function (AUSF) (not shown) and the UE 204, and receives the intermediate key that was established as a result of the UE 204 authentication process. In the case of authentication based on a UMTS (universal mobile telecommunications system) subscriber identity module (USIM), the AMF 264 retrieves the security material from the AUSF. The functions of the AMF 264 also include security context management (SCM). The SCM receives a key from the SEAF that it uses to derive access-network specific keys. The functionality of the AMF 264 also includes location services management for regulatory services, transport for location services messages between the UE 204 and a location management function (LMF) 270 (which acts as a location server 230), transport for location services messages between the NG-RAN 220 and the LMF 270, evolved packet system (EPS) bearer identifier allocation for interworking with the EPS, and UE 204 mobility event notification. In addition, the AMF 264 also supports functionalities for non-3GPP^{®} (Third Generation Partnership Project) access networks.

Functions of the UPF 262 include acting as an anchor point for intra/inter-RAT mobility (when applicable), acting as an external protocol data unit (PDU) session point of interconnect to a data network (not shown), providing packet routing and forwarding, packet inspection, user plane policy rule enforcement (e.g., gating, redirection, traffic steering), lawful interception (user plane collection), traffic usage reporting, quality of service (QoS) handling for the user plane (e.g., uplink/ downlink rate enforcement, reflective QoS marking in the downlink), uplink traffic verification (service data flow (SDF) to QoS flow mapping), transport level packet marking in the uplink and downlink, downlink packet buffering and downlink data notification triggering, and sending and forwarding of one or more "end markers" to the source RAN node. The UPF 262 may also support transfer of location services messages over a user plane between the UE 204 and a location server, such as an SLP 272.

The functions of the SMF 266 include session management, UE Internet protocol (IP) address allocation and management, selection and control of user plane functions, configuration of traffic steering at the UPF 262 to route traffic to the proper destination, control of part of policy enforcement and QoS, and downlink data notification. The interface over which the SMF 266 communicates with the AMF 264 is referred to as the N11 interface.

Another optional aspect may include an LMF 270, which may be in communication with the 5GC 260 to provide location assistance for UEs 204. The LMF 270 can be implemented as a plurality of separate servers (e.g., physically separate servers, different software modules on a single server, different software modules spread across multiple physical servers, etc.), or alternately may each correspond to a single server. The LMF 270 can be configured to support one or more location services for UEs 204 that can connect to the LMF 270 via the core network, 5GC 260, and/or via the Internet (not illustrated). The SLP 272 may support similar functions to the LMF 270, but whereas the LMF 270 may communicate with the AMF 264, NG-RAN 220, and UEs 204 over a control plane (e.g., using interfaces and protocols intended to convey signaling messages and not voice or data), the SLP 272 may communicate with UEs 204 and external clients (e.g., third-party server 274) over a user plane (e.g., using protocols intended to carry voice and/or data like the transmission control protocol (TCP) and/or IP).

Yet another optional aspect may include a third-party server 274, which may be in communication with the LMF 270, the SLP 272, the 5GC 260 (e.g., via the AMF 264 and/or the UPF 262), the NG-RAN 220, and/or the UE 204 to obtain location information (e.g., a location estimate) for the UE 204. As such, in some cases, the third-party server 274 may be referred to as a location services (LCS) client or an external client. The third-party server 274 can be implemented as a plurality of separate servers (e.g., physically separate servers, different software modules on a single server, different software modules spread across multiple physical servers, etc.), or alternately may each correspond to a single server.

User plane interface 263 and control plane interface 265 connect the 5GC 260, and specifically the UPF 262 and AMF 264, respectively, to one or more gNBs 222 and/or ng-eNBs 224 in the NG-RAN 220. The interface between gNB(s) 222 and/or ng-eNB(s) 224 and the AMF 264 is referred to as the "N2" interface, and the interface between gNB(s) 222 and/or ng-eNB(s) 224 and the UPF 262 is referred to as the "N3" interface. The gNB(s) 222 and/or ng-eNB(s) 224 of the NG-RAN 220 may communicate directly with each other via backhaul connections 223, referred to as the "Xn-C" interface. One or more of gNBs 222 and/or ng-eNBs 224 may communicate with one or more UEs 204 over a wireless interface, referred to as the "Uu" interface.

The functionality of a gNB 222 may be divided between a gNB central unit (gNB-CU) 226, one or more gNB distributed units (gNB-DUs) 228, and one or more gNB radio units (gNB-RUs) 229. A gNB-CU 226 is a logical node that includes the base station functions of transferring user data, mobility control, radio access network sharing, positioning, session management, and the like, except for those functions allocated exclusively to the gNB-DU(s) 228. More specifically, the gNB-CU 226 generally host the radio resource control (RRC), service data adaptation protocol (SDAP), and packet data convergence protocol (PDCP) protocols of the gNB 222. A gNB-DU 228 is a logical node that generally hosts the radio link control (RLC) and medium access control (MAC) layer of the gNB 222. Its operation is controlled by the gNB-CU 226. One gNB-DU 228 can support one or more cells, and one cell is supported by only one gNB-DU 228. The interface 232 between the gNB-CU 226 and the one or more gNB-DUs 228 is referred to as the "F1" interface. The physical (PHY) layer functionality of a gNB 222 is generally hosted by one or more standalone gNB-RUs 229 that perform functions such as power amplification and signal transmission/reception. The interface between a gNB-DU 228 and a gNB-RU 229 is referred to as the "Fx" interface. Thus, a UE 204 communicates with the gNB-CU 226 via the RRC, SDAP, and PDCP layers, with a gNB-DU 228 via the RLC and MAC layers, and with a gNB-RU 229 via the PHY layer.

Deployment of communication systems, such as 5G NR systems, may be arranged in multiple manners with various components or constituent parts. In a 5G NR system, or network, a network node, a network entity, a mobility element of a network, a RAN node, a core network node, a network element, or a network equipment, such as a base station, or one or more units (or one or more components) performing base station functionality, may be implemented in an aggregated or disaggregated architecture. For example, a base station (such as a Node B (NB), evolved NB (eNB), NR base station, 5G NB, access point (AP), a transmit receive point (TRP), or a cell, etc.) may be implemented as an aggregated base station (also known as a standalone base station or a monolithic base station) or a disaggregated base station.

An aggregated base station may be configured to utilize a radio protocol stack that is physically or logically integrated within a single RAN node. A disaggregated base station may be configured to utilize a protocol stack that is physically or logically distributed among two or more units (such as one or more central or centralized units (CUs), one or more distributed units (DUs), or one or more radio units (RUs)). In some aspects, a CU may be implemented within a RAN node, and one or more DUs may be co-located with the CU, or alternatively, may be geographically or virtually distributed throughout one or multiple other RAN nodes. The DUs may be implemented to communicate with one or more RUs. Each of the CU, DU and RU also can be implemented as virtual units, i.e., a virtual central unit (VCU), a virtual distributed unit (VDU), or a virtual radio unit (VRU).

Base station-type operation or network design may consider aggregation characteristics of base station functionality. For example, disaggregated base stations may be utilized in an integrated access backhaul (IAB) network, an open radio access network (O-RAN (such as the network configuration sponsored by the O-RAN ALLIANCE^{®})), or a virtualized radio access network (vRAN, also known as a cloud radio access network (C-RAN)). Disaggregation may include distributing functionality across two or more units at various physical locations, as well as distributing functionality for at least one unit virtually, which can enable flexibility in network design. The various units of the disaggregated base station, or disaggregated RAN architecture, can be configured for wired or wireless communication with at least one other unit.

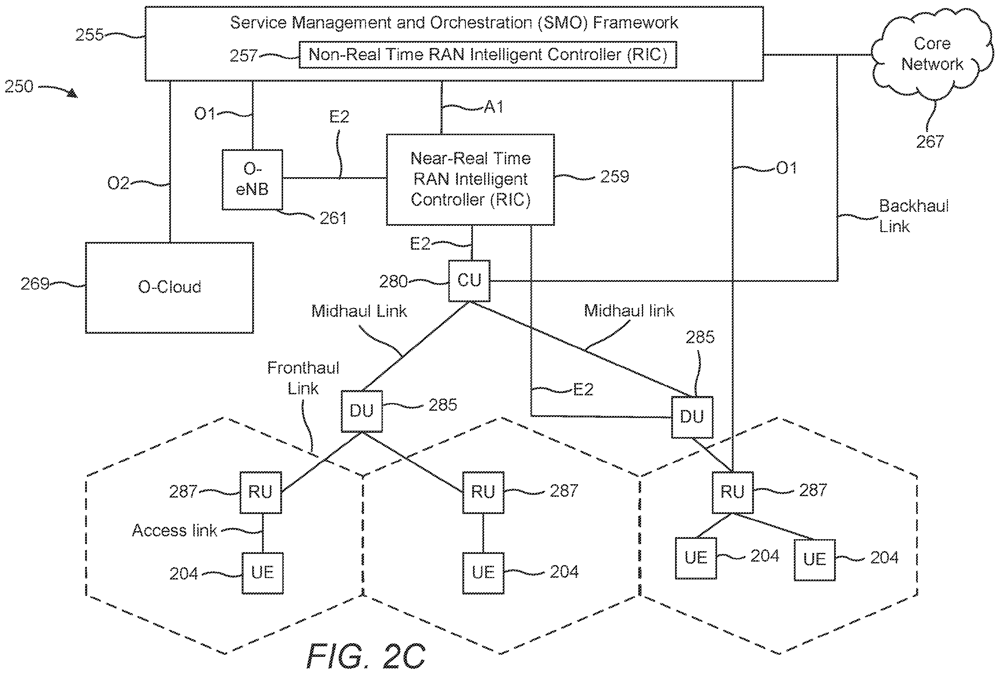

FIG. 2C illustrates an example disaggregated base station architecture 250, according to aspects of the disclosure. The disaggregated base station architecture 250 may include one or more central units (CUs) 280 (e.g., gNB-CU 226) that can communicate directly with a core network 267 (e.g., 5GC 210, 5GC 260) via a backhaul link, or indirectly with the core network 267 through one or more disaggregated base station units (such as a Near-Real Time (Near-RT) RAN Intelligent Controller (RIC) 259 via an E2 link, or a Non-Real Time (Non-RT) RIC 257 associated with a Service Management and Orchestration (SMO) Framework 255, or both). A CU 280 may communicate with one or more DUs 285 (e.g., gNB-DUs 228) via respective midhaul links, such as an F1 interface. The DUs 285 may communicate with one or more radio units (RUs) 287 (e.g., gNB-RUs 229) via respective fronthaul links. The RUs 287 may communicate with respective UEs 204 via one or more radio frequency (RF) access links. In some implementations, the UE 204 may be simultaneously served by multiple RUs 287.

Each of the units, i.e., the CUs 280, the DUs 285, the RUs 287, as well as the Near-RT RICs 259, the Non-RT RICs 257 and the SMO Framework 255, may include one or more interfaces or be coupled to one or more interfaces configured to receive or transmit signals, data, or information (collectively, signals) via a wired or wireless transmission medium. Each of the units, or an associated processor or controller providing instructions to the communication interfaces of the units, can be configured to communicate with one or more of the other units via the transmission medium. For example, the units can include a wired interface configured to receive or transmit signals over a wired transmission medium to one or more of the other units. Additionally, the units can include a wireless interface, which may include a receiver, a transmitter or transceiver (such as a RF transceiver), configured to receive or transmit signals, or both, over a wireless transmission medium to one or more of the other units.

In some aspects, the CU 280 may host one or more higher layer control functions. Such control functions can include RRC, PDCP, service data adaptation protocol (SDAP), or the like. Each control function can be implemented with an interface configured to communicate signals with other control functions hosted by the CU 280. The CU 280 may be configured to handle user plane functionality (i.e., Central Unit - User Plane (CU-UP)), control plane functionality (i.e., Central Unit - Control Plane (CU-CP)), or a combination thereof. In some implementations, the CU 280 can be logically split into one or more CU-UP units and one or more CU-CP units. The CU-UP unit can communicate bidirectionally with the CU-CP unit via an interface, such as the E1 interface when implemented in an O-RAN configuration. The CU 280 can be implemented to communicate with the DU 285, as necessary, for network control and signaling.

The DU 285 may correspond to a logical unit that includes one or more base station functions to control the operation of one or more RUs 287. In some aspects, the DU 285 may host one or more of a RLC layer, a MAC layer, and one or more high PHY layers (such as modules for forward error correction (FEC) encoding and decoding, scrambling, modulation and demodulation, or the like) depending, at least in part, on a functional split, such as those defined by the 3rd Generation Partnership Project (3GPP^{®}). In some aspects, the DU 285 may further host one or more low PHY layers. Each layer (or module) can be implemented with an interface configured to communicate signals with other layers (and modules) hosted by the DU 285, or with the control functions hosted by the CU 280.

Lower-layer functionality can be implemented by one or more RUs 287. In some deployments, an RU 287, controlled by a DU 285, may correspond to a logical node that hosts RF processing functions, or low-PHY layer functions (such as performing fast Fourier transform (FFT), inverse FFT (iFFT), digital beamforming, physical random access channel (PRACH) extraction and filtering, or the like), or both, based at least in part on the functional split, such as a lower layer functional split. In such an architecture, the RU(s) 287 can be implemented to handle over the air (OTA) communication with one or more UEs 204. In some implementations, real-time and non-real-time aspects of control and user plane communication with the RU(s) 287 can be controlled by the corresponding DU 285. In some scenarios, this configuration can enable the DU(s) 285 and the CU 280 to be implemented in a cloud-based RAN architecture, such as a vRAN architecture.

The SMO Framework 255 may be configured to support RAN deployment and provisioning of non-virtualized and virtualized network elements. For non-virtualized network elements, the SMO Framework 255 may be configured to support the deployment of dedicated physical resources for RAN coverage requirements which may be managed via an operations and maintenance interface (such as an O1 interface). For virtualized network elements, the SMO Framework 255 may be configured to interact with a cloud computing platform (such as an open cloud (O-Cloud) 269) to perform network element life cycle management (such as to instantiate virtualized network elements) via a cloud computing platform interface (such as an O2 interface). Such virtualized network elements can include, but are not limited to, CUs 280, DUs 285, RUs 287 and Near-RT RICs 259. In some implementations, the SMO Framework 255 can communicate with a hardware aspect of a 4G RAN, such as an open eNB (O-eNB) 261, via an O1 interface. Additionally, in some implementations, the SMO Framework 255 can communicate directly with one or more RUs 287 via an O1 interface. The SMO Framework 255 also may include a Non-RT RIC 257 configured to support functionality of the SMO Framework 255.

The Non-RT RIC 257 may be configured to include a logical function that enables non-real-time control and optimization of RAN elements and resources, artificial intelligence/machine learning (AI/ML) workflows including model training and updates, or policy-based guidance of applications/features in the Near-RT RIC 259. The Non-RT RIC 257 may be coupled to or communicate with (such as via an A1 interface) the Near-RT RIC 259. The Near-RT RIC 259 may be configured to include a logical function that enables near-real-time control and optimization of RAN elements and resources via data collection and actions over an interface (such as via an E2 interface) connecting one or more CUs 280, one or more DUs 285, or both, as well as an O-eNB, with the Near-RT RIC 259.

In some implementations, to generate AI/ML models to be deployed in the Near-RT RIC 259, the Non-RT RIC 257 may receive parameters or external enrichment information from external servers. Such information may be utilized by the Near-RT RIC 259 and may be received at the SMO Framework 255 or the Non-RT RIC 257 from non-network data sources or from network functions. In some examples, the Non-RT RIC 257 or the Near-RT RIC 259 may be configured to tune RAN behavior or performance. For example, the Non-RT RIC 257 may monitor long-term trends and patterns for performance and employ AI/ML models to perform corrective actions through the SMO Framework 255 (such as reconfiguration via O1) or via creation of RAN management policies (such as A1 policies).

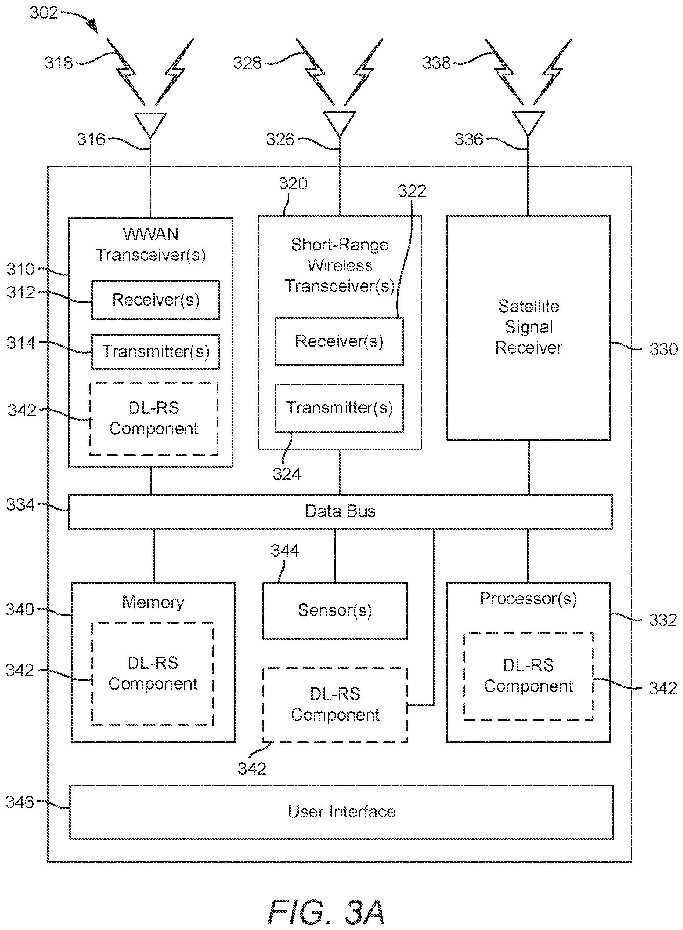

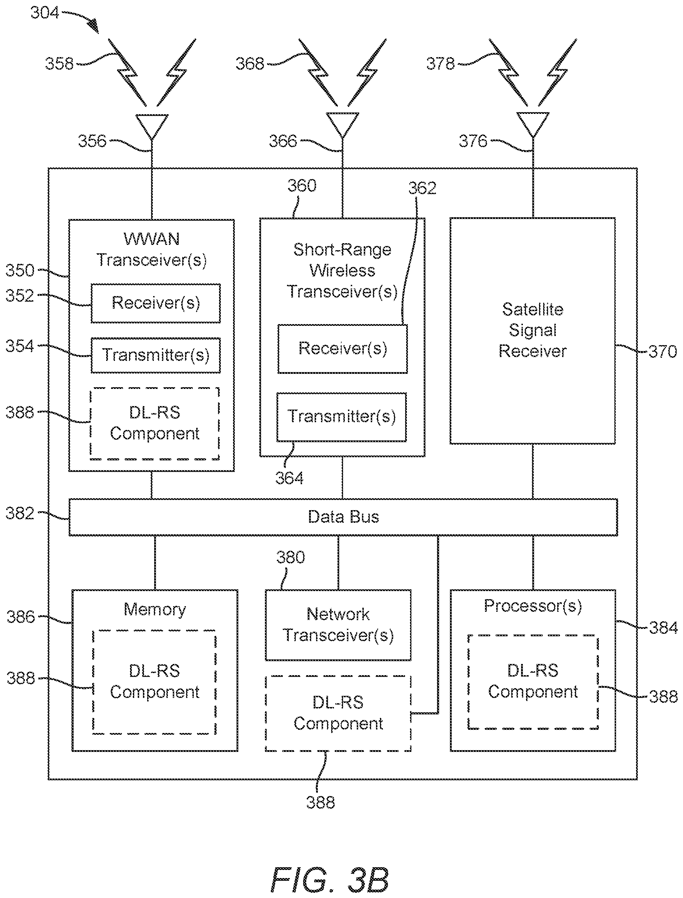

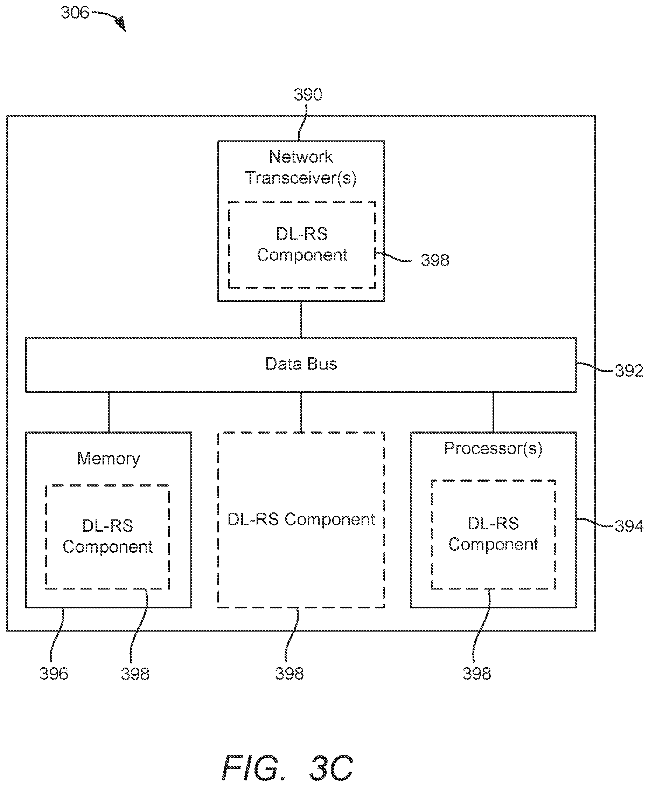

FIGS. 3A, 3B, and 3C illustrate several example components (represented by corresponding blocks) that may be incorporated into a UE 302 (which may correspond to any of the UEs described herein), a base station 304 (which may correspond to any of the base stations described herein), and a network entity 306 (which may correspond to or embody any of the network functions described herein, including the location server 230 and the LMF 270, or alternatively may be independent from the NG-RAN 220 and/or 5GC 210/260 infrastructure depicted in FIGS. 2A and 2B, such as a private network) to support the operations described herein. It will be appreciated that these components may be implemented in different types of apparatuses in different implementations (e.g., in an ASIC, in a system-on-chip (SoC), etc.). The illustrated components may also be incorporated into other apparatuses in a communication system. For example, other apparatuses in a system may include components similar to those described to provide similar functionality. Also, a given apparatus may contain one or more of the components. For example, an apparatus may include multiple transceiver components that enable the apparatus to operate on multiple carriers and/or communicate via different technologies.

The UE 302 and the base station 304 each include one or more wireless wide area network (WWAN) transceivers 310 and 350, respectively, providing means for communicating (e.g., means for transmitting, means for receiving, means for measuring, means for tuning, means for refraining from transmitting, etc.) via one or more wireless communication networks (not shown), such as an NR network, an LTE network, a GSM network, and/or the like. The WWAN transceivers 310 and 350 may each be connected to one or more antennas 316 and 356, respectively, for communicating with other network nodes, such as other UEs, access points, base stations (e.g., eNBs, gNBs), etc., via at least one designated RAT (e.g., NR, LTE, GSM, etc.) over a wireless communication medium of interest (e.g., some set of time/frequency resources in a particular frequency spectrum). The WWAN transceivers 310 and 350 may be variously configured for transmitting and encoding signals 318 and 358 (e.g., messages, indications, information, and so on), respectively, and, conversely, for receiving and decoding signals 318 and 358 (e.g., messages, indications, information, pilots, and so on), respectively, in accordance with the designated RAT. Specifically, the WWAN transceivers 310 and 350 include one or more transmitters 314 and 354, respectively, for transmitting and encoding signals 318 and 358, respectively, and one or more receivers 312 and 352, respectively, for receiving and decoding signals 318 and 358, respectively.

The UE 302 and the base station 304 each also include, at least in some cases, one or more short-range wireless transceivers 320 and 360, respectively. The short-range wireless transceivers 320 and 360 may be connected to one or more antennas 326 and 366, respectively, and provide means for communicating (e.g., means for transmitting, means for receiving, means for measuring, means for tuning, means for refraining from transmitting, etc.) with other network nodes, such as other UEs, access points, base stations, etc., via at least one designated RAT (e.g., Wi-Fi, LTE Direct, BLUETOOTH^{®}, ZIGBEE^{®}, Z-WAVE^{®}, PC5, dedicated short-range communications (DSRC), wireless access for vehicular environments (WAVE), near-field communication (NFC), ultra-wideband (UWB), etc.) over a wireless communication medium of interest. The short-range wireless transceivers 320 and 360 may be variously configured for transmitting and encoding signals 328 and 368 (e.g., messages, indications, information, and so on), respectively, and, conversely, for receiving and decoding signals 328 and 368 (e.g., messages, indications, information, pilots, and so on), respectively, in accordance with the designated RAT. Specifically, the short-range wireless transceivers 320 and 360 include one or more transmitters 324 and 364, respectively, for transmitting and encoding signals 328 and 368, respectively, and one or more receivers 322 and 362, respectively, for receiving and decoding signals 328 and 368, respectively. As specific examples, the short-range wireless transceivers 320 and 360 may be Wi-Fi transceivers, BLUETOOTH^{®} transceivers, ZIGBEE^{®} and/or Z-WAVE^{®} transceivers, NFC transceivers, UWB transceivers, or vehicle-to-vehicle (V2V) and/or vehicle-to-everything (V2X) transceivers.

The UE 302 and the base station 304 also include, at least in some cases, satellite signal receivers 330 and 370. The satellite signal receivers 330 and 370 may be connected to one or more antennas 336 and 376, respectively, and may provide means for receiving and/or measuring satellite positioning/communication signals 338 and 378, respectively. Where the satellite signal receivers 330 and 370 are satellite positioning system receivers, the satellite positioning/communication signals 338 and 378 may be global positioning system (GPS) signals, global navigation satellite system (GLONASS^{®}) signals, Galileo signals, Beidou signals, Indian Regional Navigation Satellite System (NAVIC), Quasi-Zenith Satellite System (QZSS), etc. Where the satellite signal receivers 330 and 370 are non-terrestrial network (NTN) receivers, the satellite positioning/communication signals 338 and 378 may be communication signals (e.g., carrying control and/or user data) originating from a 5G network. The satellite signal receivers 330 and 370 may comprise any suitable hardware and/or software for receiving and processing satellite positioning/communication signals 338 and 378, respectively. The satellite signal receivers 330 and 370 may request information and operations as appropriate from the other systems, and, at least in some cases, perform calculations to determine locations of the UE 302 and the base station 304, respectively, using measurements obtained by any suitable satellite positioning system algorithm.

The base station 304 and the network entity 306 each include one or more network transceivers 380 and 390, respectively, providing means for communicating (e.g., means for transmitting, means for receiving, etc.) with other network entities (e.g., other base stations 304, other network entities 306). For example, the base station 304 may employ the one or more network transceivers 380 to communicate with other base stations 304 or network entities 306 over one or more wired or wireless backhaul links. As another example, the network entity 306 may employ the one or more network transceivers 390 to communicate with one or more base station 304 over one or more wired or wireless backhaul links, or with other network entities 306 over one or more wired or wireless core network interfaces.

A transceiver may be configured to communicate over a wired or wireless link. A transceiver (whether a wired transceiver or a wireless transceiver) includes transmitter circuitry (e.g., transmitters 314, 324, 354, 364) and receiver circuitry (e.g., receivers 312, 322, 352, 362). A transceiver may be an integrated device (e.g., embodying transmitter circuitry and receiver circuitry in a single device) in some implementations, may comprise separate transmitter circuitry and separate receiver circuitry in some implementations, or may be embodied in other ways in other implementations. The transmitter circuitry and receiver circuitry of a wired transceiver (e.g., network transceivers 380 and 390 in some implementations) may be coupled to one or more wired network interface ports. Wireless transmitter circuitry (e.g., transmitters 314, 324, 354, 364) may include or be coupled to a plurality of antennas (e.g., antennas 316, 326, 356, 366), such as an antenna array, that permits the respective apparatus (e.g., UE 302, base station 304) to perform transmit "beamforming," as described herein. Similarly, wireless receiver circuitry (e.g., receivers 312, 322, 352, 362) may include or be coupled to a plurality of antennas (e.g., antennas 316, 326, 356, 366), such as an antenna array, that permits the respective apparatus (e.g., UE 302, base station 304) to perform receive beamforming, as described herein. In an aspect, the transmitter circuitry and receiver circuitry may share the same plurality of antennas (e.g., antennas 316, 326, 356, 366), such that the respective apparatus can only receive or transmit at a given time, not both at the same time. A wireless transceiver (e.g., WWAN transceivers 310 and 350, short-range wireless transceivers 320 and 360) may also include a network listen module (NLM) or the like for performing various measurements.

As used herein, the various wireless transceivers (e.g., transceivers 310, 320, 350, and 360, and network transceivers 380 and 390 in some implementations) and wired transceivers (e.g., network transceivers 380 and 390 in some implementations) may generally be characterized as "a transceiver," "at least one transceiver," or "one or more transceivers." As such, whether a particular transceiver is a wired or wireless transceiver may be inferred from the type of communication performed. For example, backhaul communication between network devices or servers will generally relate to signaling via a wired transceiver, whereas wireless communication between a UE (e.g., UE 302) and a base station (e.g., base station 304) will generally relate to signaling via a wireless transceiver.

The UE 302, the base station 304, and the network entity 306 also include other components that may be used in conjunction with the operations as disclosed herein. The UE 302, the base station 304, and the network entity 306 include one or more processors 332, 384, and 394, respectively, for providing functionality relating to, for example, wireless communication, and for providing other processing functionality. The processors 332, 384, and 394 may therefore provide means for processing, such as means for determining, means for calculating, means for receiving, means for transmitting, means for indicating, etc. In an aspect, the processors 332, 384, and 394 may include, for example, one or more general purpose processors, multi-core processors, central processing units (CPUs), ASICs, digital signal processors (DSPs), field programmable gate arrays (FPGAs), other programmable logic devices or processing circuitry, or various combinations thereof.

The UE 302, the base station 304, and the network entity 306 include memory circuitry implementing memories 340, 386, and 396 (e.g., each including a memory device), respectively, for maintaining information (e.g., information indicative of reserved resources, thresholds, parameters, and so on). The memories 340, 386, and 396 may therefore provide means for storing, means for retrieving, means for maintaining, etc. In some cases, the UE 302, the base station 304, and the network entity 306 may include DL-RS component 342, 388, and 398, respectively. The DL-RS component 342, 388, and 398 may be hardware circuits that are part of or coupled to the processors 332, 384, and 394, respectively, that, when executed, cause the UE 302, the base station 304, and the network entity 306 to perform the functionality described herein. In other aspects, the DL-RS component 342, 388, and 398 may be external to the processors 332, 384, and 394 (e.g., part of a modem processing system, integrated with another processing system, etc.). Alternatively, the DL-RS component 342, 388, and 398 may be memory modules stored in the memories 340, 386, and 396, respectively, that, when executed by the processors 332, 384, and 394 (or a modem processing system, another processing system, etc.), cause the UE 302, the base station 304, and the network entity 306 to perform the functionality described herein. FIG. 3A illustrates possible locations of the DL-RS component 342, which may be, for example, part of the one or more WWAN transceivers 310, the memory 340, the one or more processors 332, or any combination thereof, or may be a standalone component. FIG. 3B illustrates possible locations of the DL-RS component 388, which may be, for example, part of the one or more WWAN transceivers 350, the memory 386, the one or more processors 384, or any combination thereof, or may be a standalone component. FIG. 3C illustrates possible locations of the DL-RS component 398, which may be, for example, part of the one or more network transceivers 390, the memory 396, the one or more processors 394, or any combination thereof, or may be a standalone component.

The UE 302 may include one or more sensors 344 coupled to the one or more processors 332 to provide means for sensing or detecting movement and/or orientation information that is independent of motion data derived from signals received by the one or more WWAN transceivers 310, the one or more short-range wireless transceivers 320, and/or the satellite signal receiver 330. By way of example, the sensor(s) 344 may include an accelerometer (e.g., a micro-electrical mechanical systems (MEMS) device), a gyroscope, a geomagnetic sensor (e.g., a compass), an altimeter (e.g., a barometric pressure altimeter), and/or any other type of movement detection sensor. Moreover, the sensor(s) 344 may include a plurality of different types of devices and combine their outputs in order to provide motion information. For example, the sensor(s) 344 may use a combination of a multi-axis accelerometer and orientation sensors to provide the ability to compute positions in two-dimensional (2D) and/or three-dimensional (3D) coordinate systems.

In addition, the UE 302 includes a user interface 346 providing means for providing indications (e.g., audible and/or visual indications) to a user and/or for receiving user input (e.g., upon user actuation of a sensing device such a keypad, a touch screen, a microphone, and so on). Although not shown, the base station 304 and the network entity 306 may also include user interfaces.

Referring to the one or more processors 384 in more detail, in the downlink, IP packets from the network entity 306 may be provided to the processor 384. The one or more processors 384 may implement functionality for an RRC layer, a packet data convergence protocol (PDCP) layer, a radio link control (RLC) layer, and a medium access control (MAC) layer. The one or more processors 384 may provide RRC layer functionality associated with broadcasting of system information (e.g., master information block (MIB), system information blocks (SIBs)), RRC connection control (e.g., RRC connection paging, RRC connection establishment, RRC connection modification, and RRC connection release), inter-RAT mobility, and measurement configuration for UE measurement reporting; PDCP layer functionality associated with header compression/decompression, security (ciphering, deciphering, integrity protection, integrity verification), and handover support functions; RLC layer functionality associated with the transfer of upper layer PDUs, error correction through automatic repeat request (ARQ), concatenation, segmentation, and reassembly of RLC service data units (SDUs), re-segmentation of RLC data PDUs, and reordering of RLC data PDUs; and MAC layer functionality associated with mapping between logical channels and transport channels, scheduling information reporting, error correction, priority handling, and logical channel prioritization.

The transmitter 354 and the receiver 352 may implement Layer-1 (L1) functionality associated with various signal processing functions. Layer-1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The transmitter 354 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an orthogonal frequency division multiplexing (OFDM) subcarrier, multiplexed with a reference signal (e.g., pilot) in the time and/or frequency domain, and then combined together using an inverse fast Fourier transform (IFFT) to produce a physical channel carrying a time domain OFDM symbol stream. The OFDM symbol stream is spatially precoded to produce multiple spatial streams. Channel estimates from a channel estimator may be used to determine the coding and modulation scheme, as well as for spatial processing. The channel estimate may be derived from a reference signal and/or channel condition feedback transmitted by the UE 302. Each spatial stream may then be provided to one or more different antennas 356. The transmitter 354 may modulate an RF carrier with a respective spatial stream for transmission.

At the UE 302, the receiver 312 receives a signal through its respective antenna(s) 316. The receiver 312 recovers information modulated onto an RF carrier and provides the information to the one or more processors 332. The transmitter 314 and the receiver 312 implement Layer-1 functionality associated with various signal processing functions. The receiver 312 may perform spatial processing on the information to recover any spatial streams destined for the UE 302. If multiple spatial streams are destined for the UE 302, they may be combined by the receiver 312 into a single OFDM symbol stream. The receiver 312 then converts the OFDM symbol stream from the time-domain to the frequency domain using a fast Fourier transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 304. These soft decisions may be based on channel estimates computed by a channel estimator. The soft decisions are then decoded and de-interleaved to recover the data and control signals that were originally transmitted by the base station 304 on the physical channel. The data and control signals are then provided to the one or more processors 332, which implements Layer-3 (L3) and Layer-2 (L2) functionality.

In the downlink, the one or more processors 332 provides demultiplexing between transport and logical channels, packet reassembly, deciphering, header decompression, and control signal processing to recover IP packets from the core network. The one or more processors 332 are also responsible for error detection.

Similar to the functionality described in connection with the downlink transmission by the base station 304, the one or more processors 332 provides RRC layer functionality associated with system information (e.g., MIB, SIBs) acquisition, RRC connections, and measurement reporting; PDCP layer functionality associated with header compression/decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through hybrid automatic repeat request (HARQ), priority handling, and logical channel prioritization.

Channel estimates derived by the channel estimator from a reference signal or feedback transmitted by the base station 304 may be used by the transmitter 314 to select the appropriate coding and modulation schemes, and to facilitate spatial processing. The spatial streams generated by the transmitter 314 may be provided to different antenna(s) 316. The transmitter 314 may modulate an RF carrier with a respective spatial stream for transmission.

The uplink transmission is processed at the base station 304 in a manner similar to that described in connection with the receiver function at the UE 302. The receiver 352 receives a signal through its respective antenna(s) 356. The receiver 352 recovers information modulated onto an RF carrier and provides the information to the one or more processors 384.

In the uplink, the one or more processors 384 provides demultiplexing between transport and logical channels, packet reassembly, deciphering, header decompression, control signal processing to recover IP packets from the UE 302. IP packets from the one or more processors 384 may be provided to the core network. The one or more processors 384 are also responsible for error detection.

For convenience, the UE 302, the base station 304, and/or the network entity 306 are shown in FIGS. 3A, 3B, and 3C as including various components that may be configured according to the various examples described herein. It will be appreciated, however, that the illustrated components may have different functionality in different designs. In particular, various components in FIGS. 3A to 3C are optional in alternative configurations and the various aspects include configurations that may vary due to design choice, costs, use of the device, or other considerations. For example, in case of FIG. 3A, a particular implementation of UE 302 may omit the WWAN transceiver(s) 310 (e.g., a wearable device or tablet computer or personal computer (PC) or laptop may have Wi-Fi and/or BLUETOOTH^{®} capability without cellular capability), or may omit the short-range wireless transceiver(s) 320 (e.g., cellular-only, etc.), or may omit the satellite signal receiver 330, or may omit the sensor(s) 344, and so on. In another example, in case of FIG. 3B, a particular implementation of the base station 304 may omit the WWAN transceiver(s) 350 (e.g., a Wi-Fi "hotspot" access point without cellular capability), or may omit the short-range wireless transceiver(s) 360 (e.g., cellular-only, etc.), or may omit the satellite signal receiver 370, and so on. For brevity, illustration of the various alternative configurations is not provided herein, but would be readily understandable to one skilled in the art.

The various components of the UE 302, the base station 304, and the network entity 306 may be communicatively coupled to each other over data buses 334, 382, and 392, respectively. In an aspect, the data buses 334, 382, and 392 may form, or be part of, a communication interface of the UE 302, the base station 304, and the network entity 306, respectively. For example, where different logical entities are embodied in the same device (e.g., gNB and location server functionality incorporated into the same base station 304), the data buses 334, 382, and 392 may provide communication between them.

The components of FIGS. 3A, 3B, and 3C may be implemented in various ways. In some implementations, the components of FIGS. 3A, 3B, and 3C may be implemented in one or more circuits such as, for example, one or more processors and/or one or more ASICs (which may include one or more processors). Here, each circuit may use and/or incorporate at least one memory component for storing information or executable code used by the circuit to provide this functionality. For example, some or all of the functionality represented by blocks 310 to 346 may be implemented by processor and memory component(s) of the UE 302 (e.g., by execution of appropriate code and/or by appropriate configuration of processor components). Similarly, some or all of the functionality represented by blocks 350 to 388 may be implemented by processor and memory component(s) of the base station 304 (e.g., by execution of appropriate code and/or by appropriate configuration of processor components). Also, some or all of the functionality represented by blocks 390 to 398 may be implemented by processor and memory component(s) of the network entity 306 (e.g., by execution of appropriate code and/or by appropriate configuration of processor components). For simplicity, various operations, acts, and/or functions are described herein as being performed "by a UE," "by a base station," "by a network entity," etc. However, as will be appreciated, such operations, acts, and/or functions may actually be performed by specific components or combinations of components of the UE 302, base station 304, network entity 306, etc., such as the processors 332, 384, 394, the transceivers 310, 320, 350, and 360, the memories 340, 386, and 396, the DL-RS component 342, 388, and 398, etc.

In some designs, the network entity 306 may be implemented as a core network component. In other designs, the network entity 306 may be distinct from a network operator or operation of the cellular network infrastructure (e.g., NG RAN 220 and/or 5GC 210/260). For example, the network entity 306 may be a component of a private network that may be configured to communicate with the UE 302 via the base station 304 or independently from the base station 304 (e.g., over a non-cellular communication link, such as Wi-Fi).

NR supports a number of cellular network-based positioning technologies, including downlink-based, uplink-based, and downlink-and-uplink-based positioning methods. Downlink-based positioning methods include observed time difference of arrival (OTDOA) in LTE, downlink time difference of arrival (DL-TDOA) in NR, and downlink angle-of-departure (DL-AoD) in NR. In an OTDOA or DL-TDOA positioning procedure, a UE measures the differences between the times of arrival (ToAs) of reference signals (e.g., positioning reference signals (PRS)) received from pairs of base stations, referred to as reference signal time difference (RSTD) or time difference of arrival (TDOA) measurements, and reports them to a positioning entity. More specifically, the UE receives the identifiers (IDs) of a reference base station (e.g., a serving base station) and multiple non-reference base stations in assistance data. The UE then measures the RSTD between the reference base station and each of the non-reference base stations. Based on the known locations of the involved base stations and the RSTD measurements, the positioning entity (e.g., the UE for UE-based positioning or a location server for UE-assisted positioning) can estimate the UE's location.

For DL-AoD positioning, the positioning entity uses a measurement report from the UE of received signal strength measurements of multiple downlink transmit beams to determine the angle(s) between the UE and the transmitting base station(s). The positioning entity can then estimate the location of the UE based on the determined angle(s) and the known location(s) of the transmitting base station(s).

Uplink-based positioning methods include uplink time difference of arrival (UL-TDOA) and uplink angle-of-arrival (UL-AoA). UL-TDOA is similar to DL-TDOA, but is based on uplink reference signals (e.g., sounding reference signals (SRS)) transmitted by the UE to multiple base stations. Specifically, a UE transmits one or more uplink reference signals that are measured by a reference base station and a plurality of non-reference base stations. Each base station then reports the reception time (referred to as the relative time of arrival (RTOA)) of the reference signal(s) to a positioning entity (e.g., a location server) that knows the locations and relative timing of the involved base stations. Based on the reception-to-reception (Rx-Rx) time difference between the reported RTOA of the reference base station and the reported RTOA of each non-reference base station, the known locations of the base stations, and their known timing offsets, the positioning entity can estimate the location of the UE using TDOA.

For UL-AoA positioning, one or more base stations measure the received signal strength of one or more uplink reference signals (e.g., SRS) received from a UE on one or more uplink receive beams. The positioning entity uses the signal strength measurements and the angle(s) of the receive beam(s) to determine the angle(s) between the UE and the base station(s). Based on the determined angle(s) and the known location(s) of the base station(s), the positioning entity can then estimate the location of the UE.

Downlink-and-uplink-based positioning methods include enhanced cell-ID (E-CID) positioning and multi-round-trip-time (RTT) positioning (also referred to as "multi-cell RTT" and "multi-RTT"). In an RTT procedure, a first entity (e.g., a base station or a UE) transmits a first RTT-related signal (e.g., a PRS or SRS) to a second entity (e.g., a UE or base station), which transmits a second RTT-related signal (e.g., an SRS or PRS) back to the first entity. Each entity measures the time difference between the time of arrival (ToA) of the received RTT-related signal and the transmission time of the transmitted RTT-related signal. This time difference is referred to as a reception-to-transmission (Rx-Tx) time difference. The Rx-Tx time difference measurement may be made, or may be adjusted, to include only a time difference between nearest slot boundaries for the received and transmitted signals. Both entities may then send their Rx-Tx time difference measurement to a location server (e.g., an LMF 270), which calculates the round trip propagation time (i.e., RTT) between the two entities from the two Rx-Tx time difference measurements (e.g., as the sum of the two Rx-Tx time difference measurements). Alternatively, one entity may send its Rx-Tx time difference measurement to the other entity, which then calculates the RTT. The distance between the two entities can be determined from the RTT and the known signal speed (e.g., the speed of light). For multi-RTT positioning, a first entity (e.g., a UE or base station) performs an RTT positioning procedure with multiple second entities (e.g., multiple base stations or UEs) to enable the location of the first entity to be determined (e.g., using multilateration) based on distances to, and the known locations of, the second entities. RTT and multi-RTT methods can be combined with other positioning techniques, such as UL-AoA and DL-AoD, to improve location accuracy.

The E-CID positioning method is based on radio resource management (RRM) measurements. In E-CID, the UE reports the serving cell ID, the timing advance (TA), and the identifiers, estimated timing, and signal strength of detected neighbor base stations. The location of the UE is then estimated based on this information and the known locations of the base station(s).

To assist positioning operations, a location server (e.g., location server 230, LMF 270, SLP 272) may provide assistance data to the UE. For example, the assistance data may include identifiers of the base stations (or the cells/TRPs of the base stations) from which to measure reference signals, the reference signal configuration parameters (e.g., the number of consecutive slots including PRS, periodicity of the consecutive slots including PRS, muting sequence, frequency hopping sequence, reference signal identifier, reference signal bandwidth, etc.), and/or other parameters applicable to the particular positioning method. Alternatively, the assistance data may originate directly from the base stations themselves (e.g., in periodically broadcasted overhead messages, etc.). In some cases, the UE may be able to detect neighbor network nodes itself without the use of assistance data.

In the case of an OTDOA or DL-TDOA positioning procedure, the assistance data may further include an expected RSTD value and an associated uncertainty, or search window, around the expected RSTD. In some cases, the value range of the expected RSTD may be +/- 500 microseconds (µs). In some cases, when any of the resources used for the positioning measurement are in FR1, the value range for the uncertainty of the expected RSTD may be +/- 32 µs. In other cases, when all of the resources used for the positioning measurement(s) are in FR2, the value range for the uncertainty of the expected RSTD may be +/- 8 µs.

A location estimate may be referred to by other names, such as a position estimate, location, position, position fix, fix, or the like. A location estimate may be geodetic and comprise coordinates (e.g., latitude, longitude, and possibly altitude) or may be civic and comprise a street address, postal address, or some other verbal description of a location. A location estimate may further be defined relative to some other known location or defined in absolute terms (e.g., using latitude, longitude, and possibly altitude). A location estimate may include an expected error or uncertainty (e.g., by including an area or volume within which the location is expected to be included with some specified or default level of confidence).

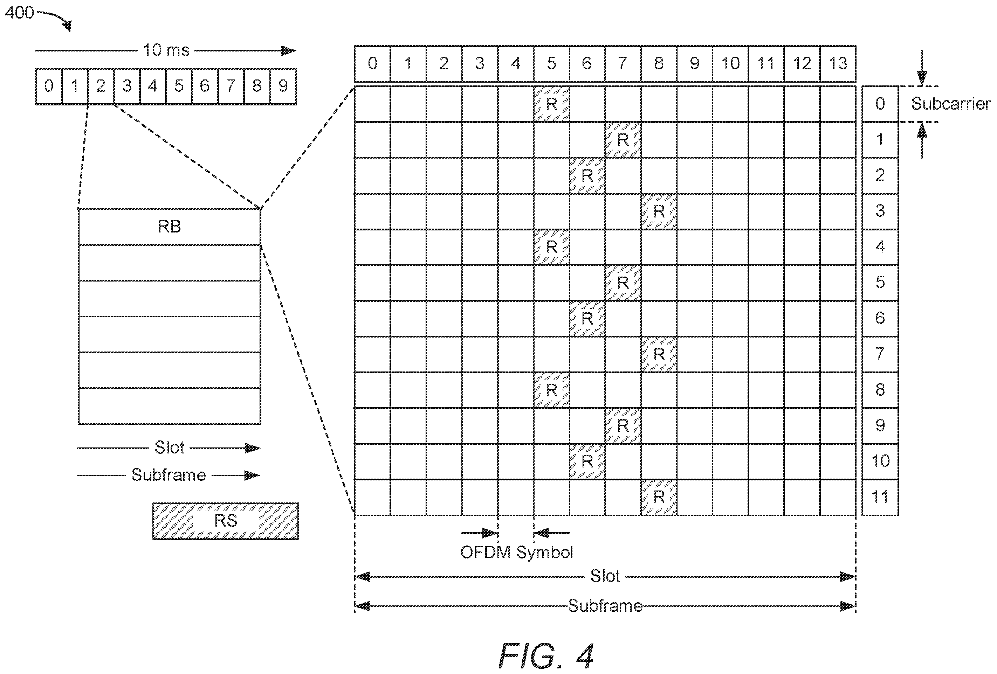

Various frame structures may be used to support downlink and uplink transmissions between network nodes (e.g., base stations and UEs). FIG. 4 is a diagram 400 illustrating an example frame structure, according to aspects of the disclosure. The frame structure may be a downlink or uplink frame structure. Other wireless communications technologies may have different frame structures and/or different channels.

LTE, and in some cases NR, utilizes orthogonal frequency-division multiplexing (OFDM) on the downlink and single-carrier frequency division multiplexing (SC-FDM) on the uplink. Unlike LTE, however, NR has an option to use OFDM on the uplink as well. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kilohertz (kHz) and the minimum resource allocation (resource block) may be 12 subcarriers (or 180 kHz). Consequently, the nominal fast Fourier transform (FFT) size may be equal to 128, 256, 512, 1024, or 2048 for system bandwidth of 1.25, 2.5, 5, 10, or 20 megahertz (MHz), respectively. The system bandwidth may also be partitioned into subbands. For example, a subband may cover 1.08 MHz (i.e., 6 resource blocks), and there may be 1, 2, 4, 8, or 16 subbands for system bandwidth of 1.25, 2.5, 5, 10, or 20 MHz, respectively.

LTE supports a single numerology (subcarrier spacing (SCS), symbol length, etc.). In contrast, NR may support multiple numerologies (µ), for example, subcarrier spacings of 15 kHz (µ=0), 30 kHz (µ=1), 60 kHz (µ=2), 120 kHz (µ=3), and 240 kHz (µ=4) or greater may be available. In each subcarrier spacing, there are 14 symbols per slot. For 15 kHz SCS (µ=0), there is one slot per subframe, 10 slots per frame, the slot duration is 1 millisecond (ms), the symbol duration is 66.7 microseconds (µs), and the maximum nominal system bandwidth (in MHz) with a 4K FFT size is 50. For 30 kHz SCS (µ=1), there are two slots per subframe, 20 slots per frame, the slot duration is 0.5 ms, the symbol duration is 33.3 µs, and the maximum nominal system bandwidth (in MHz) with a 4K FFT size is 100. For 60 kHz SCS (µ=2), there are four slots per subframe, 40 slots per frame, the slot duration is 0.25 ms, the symbol duration is 16.7 µs, and the maximum nominal system bandwidth (in MHz) with a 4K FFT size is 200. For 120 kHz SCS (µ=3), there are eight slots per subframe, 80 slots per frame, the slot duration is 0.125 ms, the symbol duration is 8.33 µs, and the maximum nominal system bandwidth (in MHz) with a 4K FFT size is 400. For 240 kHz SCS (µ=4), there are 16 slots per subframe, 160 slots per frame, the slot duration is 0.0625 ms, the symbol duration is 4.17 µs, and the maximum nominal system bandwidth (in MHz) with a 4K FFT size is 800.

In the example of FIG. 4, a numerology of 15 kHz is used. Thus, in the time domain, a 10 ms frame is divided into 10 equally sized subframes of 1 ms each, and each subframe includes one time slot. In FIG. 4, time is represented horizontally (on the X axis) with time increasing from left to right, while frequency is represented vertically (on the Y axis) with frequency increasing (or decreasing) from bottom to top.

A resource grid may be used to represent time slots, each time slot including one or more time-concurrent resource blocks (RBs) (also referred to as physical RBs (PRBs)) in the frequency domain. The resource grid is further divided into multiple resource elements (REs). An RE may correspond to one symbol length in the time domain and one subcarrier in the frequency domain. In the numerology of FIG. 4, for a normal cyclic prefix, an RB may contain 12 consecutive subcarriers in the frequency domain and seven consecutive symbols in the time domain, for a total of 84 REs. For an extended cyclic prefix, an RB may contain 12 consecutive subcarriers in the frequency domain and six consecutive symbols in the time domain, for a total of 72 REs. The number of bits carried by each RE depends on the modulation scheme.

Some of the REs may carry reference (pilot) signals (RS). The reference signals may include positioning reference signals (PRS), tracking reference signals (TRS), phase tracking reference signals (PTRS), cell-specific reference signals (CRS), channel state information reference signals (CSI-RS), demodulation reference signals (DMRS), primary synchronization signals (PSS), secondary synchronization signals (SSS), synchronization signal blocks (SSBs), sounding reference signals (SRS), etc., depending on whether the illustrated frame structure is used for uplink or downlink communication. FIG. 4 illustrates example locations of REs carrying a reference signal (labeled "R").

A collection of resource elements (REs) that are used for transmission of PRS is referred to as a "PRS resource." The collection of resource elements can span multiple PRBs in the frequency domain and 'N' (such as 1 or more) consecutive symbol(s) within a slot in the time domain. In a given OFDM symbol in the time domain, a PRS resource occupies consecutive PRBs in the frequency domain.

The transmission of a PRS resource within a given PRB has a particular comb size (also referred to as the "comb density"). A comb size 'N' represents the subcarrier spacing (or frequency/tone spacing) within each symbol of a PRS resource configuration. Specifically, for a comb size 'N,' PRS are transmitted in every Nth subcarrier of a symbol of a PRB. For example, for comb-4, for each symbol of the PRS resource configuration, REs corresponding to every fourth subcarrier (such as subcarriers 0, 4, 8) are used to transmit PRS of the PRS resource. Currently, comb sizes of comb-2, comb-4, comb-6, and comb-12 are supported for DL-PRS. FIG. 4 illustrates an example PRS resource configuration for comb-4 (which spans four symbols). That is, the locations of the shaded REs (labeled "R") indicate a comb-4 PRS resource configuration.

Currently, a DL-PRS resource may span 2, 4, 6, or 12 consecutive symbols within a slot with a fully frequency-domain staggered pattern. A DL-PRS resource can be configured in any higher layer configured downlink or flexible (FL) symbol of a slot. There may be a constant energy per resource element (EPRE) for all REs of a given DL-PRS resource. The following are the frequency offsets from symbol to symbol for comb sizes 2, 4, 6, and 12 over 2, 4, 6, and 12 symbols. 2-symbol comb-2: {0, 1}; 4-symbol comb-2: {0, 1, 0, 1}; 6-symbol comb-2: {0, 1, 0, 1, 0, 1}; 12-symbol comb-2: {0, 1, 0, 1, 0, 1, 0, 1, 0, 1, 0, 1}; 4-symbol comb-4: {0, 2, 1, 3} (as in the example of FIG. 4); 12-symbol comb-4: {0, 2, 1, 3, 0, 2, 1, 3, 0, 2, 1, 3}; 6-symbol comb-6: {0, 3, 1, 4, 2, 5}; 12-symbol comb-6: {0, 3, 1, 4, 2, 5, 0, 3, 1, 4, 2, 5}; and 12-symbol comb-12: {0, 6, 3, 9, 1, 7, 4, 10, 2, 8, 5, 11}.

A "PRS resource set" is a set of PRS resources used for the transmission of PRS signals, where each PRS resource has a PRS resource ID. In addition, the PRS resources in a PRS resource set are associated with the same TRP. A PRS resource set is identified by a PRS resource set ID and is associated with a particular TRP (identified by a TRP ID). In addition, the PRS resources in a PRS resource set have the same periodicity, a common muting pattern configuration, and the same repetition factor (such as "PRS-ResourceRepetitionFactor") across slots. The periodicity is the time from the first repetition of the first PRS resource of a first PRS instance to the same first repetition of the same first PRS resource of the next PRS instance. The periodicity may have a length selected from 2^µ*{4, 5, 8, 10, 16, 20, 32, 40, 64, 80, 160, 320, 640, 1280, 2560, 5120, 10240} slots, with µ = 0, 1, 2, 3. The repetition factor may have a length selected from {1, 2, 4, 6, 8, 16, 32} slots.

A PRS resource ID in a PRS resource set is associated with a single beam (or beam ID) transmitted from a single TRP (where a TRP may transmit one or more beams). That is, each PRS resource of a PRS resource set may be transmitted on a different beam, and as such, a "PRS resource," or simply "resource," also can be referred to as a "beam." Note that this does not have any implications on whether the TRPs and the beams on which PRS are transmitted are known to the UE.

A "PRS instance" or "PRS occasion" is one instance of a periodically repeated time window (such as a group of one or more consecutive slots) where PRS are expected to be transmitted. A PRS occasion also may be referred to as a "PRS positioning occasion," a "PRS positioning instance, a "positioning occasion," "a positioning instance," a "positioning repetition," or simply an "occasion," an "instance," or a "repetition."

A "positioning frequency layer" (also referred to simply as a "frequency layer") is a collection of one or more PRS resource sets across one or more TRPs that have the same values for certain parameters. Specifically, the collection of PRS resource sets has the same subcarrier spacing and cyclic prefix (CP) type (meaning all numerologies supported for the physical downlink shared channel (PDSCH) are also supported for PRS), the same Point A, the same value of the downlink PRS bandwidth, the same start PRB (and center frequency), and the same comb-size. The Point A parameter takes the value of the parameter "ARFCN-ValueNR" (where "ARFCN" stands for "absolute radio-frequency channel number") and is an identifier/code that specifies a pair of physical radio channel used for transmission and reception. The downlink PRS bandwidth may have a granularity of four PRBs, with a minimum of 24 PRBs and a maximum of 272 PRBs. Currently, up to four frequency layers have been defined, and up to two PRS resource sets may be configured per TRP per frequency layer.

The concept of a frequency layer is somewhat like the concept of component carriers and bandwidth parts (BWPs), but different in that component carriers and BWPs are used by one base station (or a macro cell base station and a small cell base station) to transmit data channels, while frequency layers are used by several (usually three or more) base stations to transmit PRS. A UE may indicate the number of frequency layers it can support when it sends the network its positioning capabilities, such as during an LTE positioning protocol (LPP) session. For example, a UE may indicate whether it can support one or four positioning frequency layers.

Note that the terms "positioning reference signal" and "PRS" generally refer to specific reference signals that are used for positioning in NR and LTE systems. However, as used herein, the terms "positioning reference signal" and "PRS" may also refer to any type of reference signal that can be used for positioning, such as but not limited to, PRS as defined in LTE and NR, TRS, PTRS, CRS, CSI-RS, DMRS, PSS, SSS, SSB, SRS, UL-PRS, etc. In addition, the terms "positioning reference signal" and "PRS" may refer to downlink, uplink, or sidelink positioning reference signals, unless otherwise indicated by the context. If needed to further distinguish the type of PRS, a downlink positioning reference signal may be referred to as a "DL-PRS," an uplink positioning reference signal (e.g., an SRS-for-positioning, PTRS) may be referred to as an "UL-PRS," and a sidelink positioning reference signal may be referred to as an "SL-PRS." In addition, for signals that may be transmitted in the downlink, uplink, and/or sidelink (e.g., DMRS), the signals may be prepended with "DL," "UL," or "SL" to distinguish the direction. For example, "UL-DMRS" is different from "DL-DMRS."

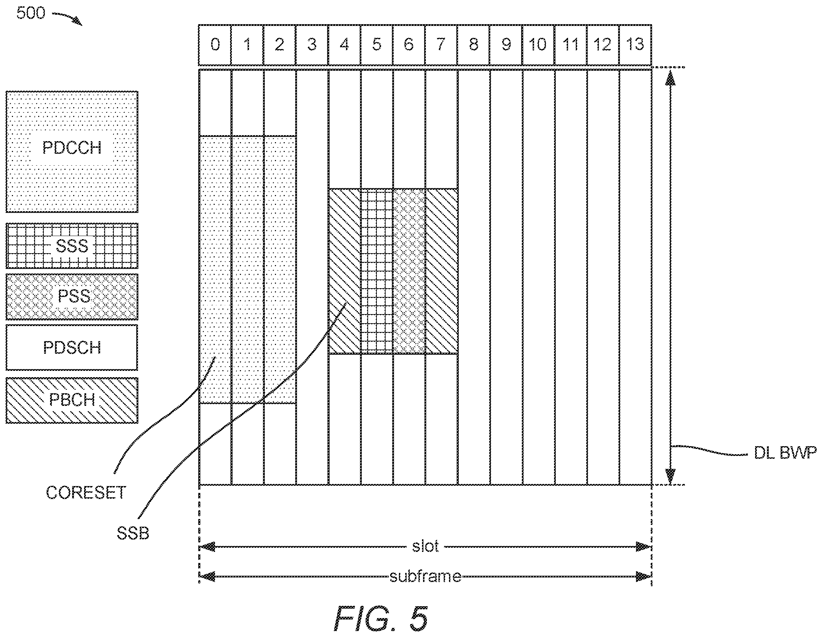

FIG. 5 is a diagram 500 illustrating various downlink channels within an example downlink slot. In FIG. 5, time is represented horizontally (on the X axis) with time increasing from left to right, while frequency is represented vertically (on the Y axis) with frequency increasing (or decreasing) from bottom to top. In the example of FIG. 5, a numerology of 15 kHz is used. Thus, in the time domain, the illustrated slot is one millisecond (ms) in length, divided into 14 symbols.

In NR, the channel bandwidth, or system bandwidth, is divided into multiple bandwidth parts (BWPs). A BWP is a contiguous set of RBs selected from a contiguous subset of the common RBs for a given numerology on a given carrier. Generally, a maximum of four BWPs can be specified in the downlink and uplink. That is, a UE can be configured with up to four BWPs on the downlink, and up to four BWPs on the uplink. Only one BWP (uplink or downlink) may be active at a given time, meaning the UE may only receive or transmit over one BWP at a time. On the downlink, the bandwidth of each BWP should be equal to or greater than the bandwidth of the SSB, but it may or may not contain the SSB.

Referring to FIG. 5, a primary synchronization signal (PSS) is used by a UE to determine subframe/symbol timing and a physical layer identity. A secondary synchronization signal (SSS) is used by a UE to determine a physical layer cell identity group number and radio frame timing. Based on the physical layer identity and the physical layer cell identity group number, the UE can determine a PCI. Based on the PCI, the UE can determine the locations of the aforementioned DL-RS. The physical broadcast channel (PBCH), which carries a master information block (MIB), may be logically grouped with the PSS and SSS to form an SSB (also referred to as an SS/PBCH). The MIB provides a number of RBs in the downlink system bandwidth and a system frame number (SFN). The physical downlink shared channel (PDSCH) carries user data, broadcast system information not transmitted through the PBCH, such as system information blocks (SIBs), and paging messages.

The physical downlink control channel (PDCCH) carries downlink control information (DCI) within one or more control channel elements (CCEs), each CCE including one or more RE group (REG) bundles (which may span multiple symbols in the time domain), each REG bundle including one or more REGs, each REG corresponding to 12 resource elements (one resource block) in the frequency domain and one OFDM symbol in the time domain. The set of physical resources used to carry the PDCCH/DCI is referred to in NR as the control resource set (CORESET). In NR, a PDCCH is confined to a single CORESET and is transmitted with its own DMRS. This enables UE-specific beamforming for the PDCCH.

In the example of FIG. 5, there is one CORESET per BWP, and the CORESET spans three symbols (although it may be only one or two symbols) in the time domain. Unlike LTE control channels, which occupy the entire system bandwidth, in NR, PDCCH channels are localized to a specific region in the frequency domain (i.e., a CORESET). Thus, the frequency component of the PDCCH shown in FIG. 5 is illustrated as less than a single BWP in the frequency domain. Note that although the illustrated CORESET is contiguous in the frequency domain, it need not be. In addition, the CORESET may span less than three symbols in the time domain.

The DCI within the PDCCH carries information about uplink resource allocation (persistent and non-persistent) and descriptions about downlink data transmitted to the UE, referred to as uplink and downlink grants, respectively. More specifically, the DCI indicates the resources scheduled for the downlink data channel (e.g., PDSCH) and the uplink data channel (e.g., physical uplink shared channel (PUSCH)). Multiple (e.g., up to eight) DCIs can be configured in the PDCCH, and these DCIs can have one of multiple formats. For example, there are different DCI formats for uplink scheduling, for downlink scheduling, for uplink transmit power control (TPC), etc. A PDCCH may be transported by 1, 2, 4, 8, or 16 CCEs in order to accommodate different DCI payload sizes or coding rates.

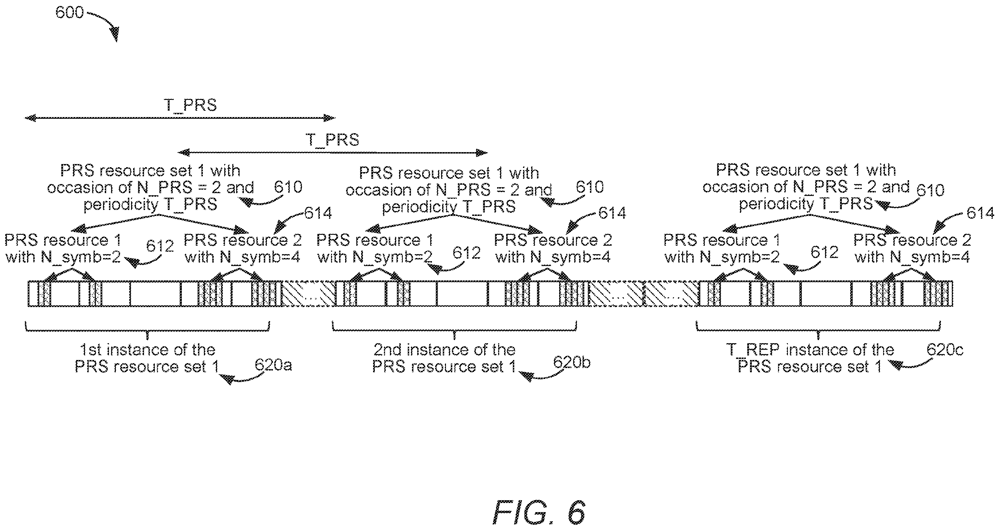

FIG. 6 is a diagram of an example PRS configuration 600 for the PRS transmissions of a given base station, according to aspects of the disclosure. In FIG. 6, time is represented horizontally, increasing from left to right. Each long rectangle represents a slot and each short (shaded) rectangle represents an OFDM symbol. In the example of FIG. 6, a PRS resource set 610 (labeled "PRS resource set 1") includes two PRS resources, a first PRS resource 612 (labeled "PRS resource 1") and a second PRS resource 614 (labeled "PRS resource 2"). The base station transmits PRS on the PRS resources 612 and 614 of the PRS resource set 610.

The PRS resource set 610 has an occasion length (N_PRS) of two slots and a periodicity (T_PRS) of, for example, 160 slots or 160 milliseconds (ms) (for 15 kHz subcarrier spacing). As such, both the PRS resources 612 and 614 are two consecutive slots in length and repeat every T_PRS slots, starting from the slot in which the first symbol of the respective PRS resource occurs. In the example of FIG. 6, the PRS resource 612 has a symbol length (N_symb) of two symbols, and the PRS resource 614 has a symbol length (N_symb) of four symbols. The PRS resource 612 and the PRS resource 614 may be transmitted on separate beams of the same base station.

Each instance of the PRS resource set 610, illustrated as instances 620a, 620b, and 620c, includes an occasion of length '2' (i.e., N_PRS=2) for each PRS resource 612, 614 of the PRS resource set. The PRS resources 612 and 614 are repeated every T_PRS slots up to the muting sequence periodicity T_REP. As such, a bitmap of length T_REP would be needed to indicate which occasions of instances 620a, 620b, and 620c of PRS resource set 610 are muted (i.e., not transmitted).

In an aspect, there may be additional constraints on the PRS configuration 600. For example, for all PRS resources (e.g., PRS resources 612, 614) of a PRS resource set (e.g., PRS resource set 610), the base station can configure the following parameters to be the same: (a) the occasion length (N_PRS), (b) the number of symbols (N_symb), (c) the comb type, and/or (d) the bandwidth. In addition, for all PRS resources of all PRS resource sets, the subcarrier spacing and the cyclic prefix can be configured to be the same for one base station or for all base stations. Whether it is for one base station or all base stations may depend on the UE's capability to support the first and/or second option.

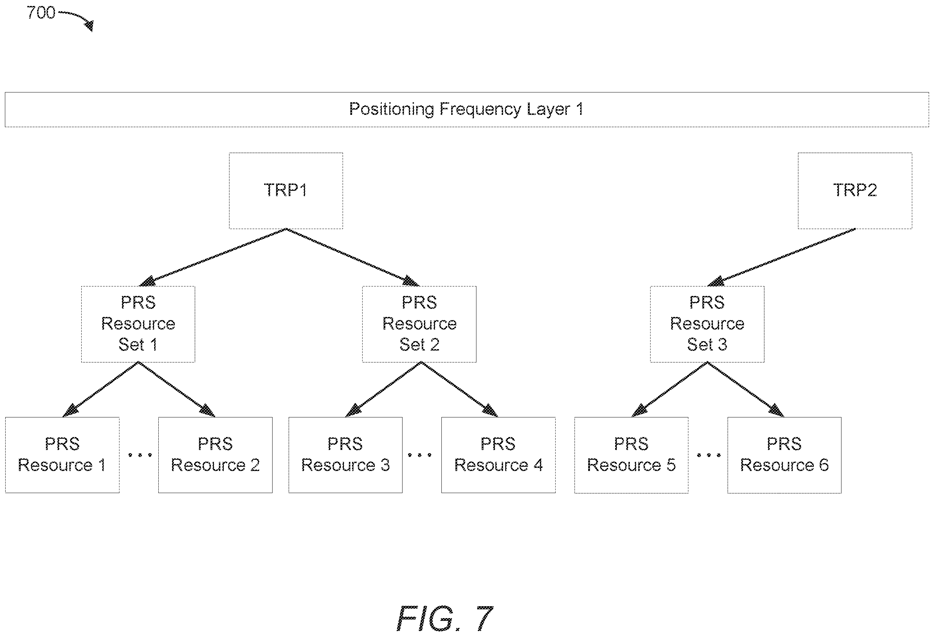

FIG. 7 is a diagram 700 illustrating an example PRS configuration for two TRPs (labeled "TRP1" and "TRP2") operating in the same positioning frequency layer (labeled "Positioning Frequency Layer 1"), according to aspects of the disclosure. For a positioning session, a UE may be provided with assistance data indicating the illustrated PRS configuration. In the example of FIG. 7, the first TRP ("TRP1") is associated with (e.g., transmits) two PRS resource sets, labeled "PRS Resource Set 1" and "PRS Resource Set 2," and the second TRP ("TRP2") is associated with one PRS resource set, labeled "PRS Resource Set 3." Each PRS resource set comprises at least two PRS resources. Specifically, the first PRS resource set ("PRS Resource Set 1") includes PRS resources labeled "PRS Resource 1" and "PRS Resource 2," the second PRS resource set ("PRS Resource Set 2") includes PRS resources labeled "PRS Resource 3" and "PRS Resource 4," and the third PRS resource set ("PRS Resource Set 3") includes PRS resources labeled "PRS Resource 5" and "PRS Resource 6."

When a UE is configured in the assistance data of a positioning method with a number of PRS resources beyond its capability, the UE assumes the PRS resources in the assistance data are sorted in a decreasing order of measurement priority. Currently, the 64 TRPs per frequency layer are sorted according to priority and the two PRS resource sets per TRP of the frequency layer are sorted according to priority. However, the four frequency layers may or may not be sorted according to priority, and the 64 PRS resources of the PRS resource set per TRP per frequency layer may or may not be sorted according to priority. The reference indicated by the assistance data parameter "nr-DL-PRS-ReferenceInfo" for each frequency layer has the highest priority, at least for DL-TDOA positioning procedures.

In some designs such as 3GPP Rel-16, DL-PRS is an "always-on" signal. Problems associated with an always-on approach to DL-PRS include unnecessary overhead, waste of energy, etc., in the case that no UE positioning is required during a particular time or in a particular area of a network. In some designs, always-on DL-PRS is associated with a static allocation of DL-PRS resources. In some designs, a static DL-PRS resource allocation does not allow for a temporary increase of the DL-PRS resources for meeting higher positioning accuracy and/or lower latency positioning requirements in certain areas or at certain times. Likewise, a static DL-PRS resource allocation does not allow for a decrease of DL-PRS resources in case the positioning requirements can be met with fewer DL-PRS resources. On-demand DL-PRS refers to the capability to allow a UE or LMF to request DL-PRS for positioning measurements or a change in available DL-PRS.

While power conservation in most communications systems focuses on the UE-side, so-called green networks also seek to save energy at the network side. In some designs, this is possible specially at low load scenarios such as low arrival rates and small number of connected UEs. In some designs, the gNB can reduce the consumption power by reducing a transmission power and/or reducing a number of antennas.

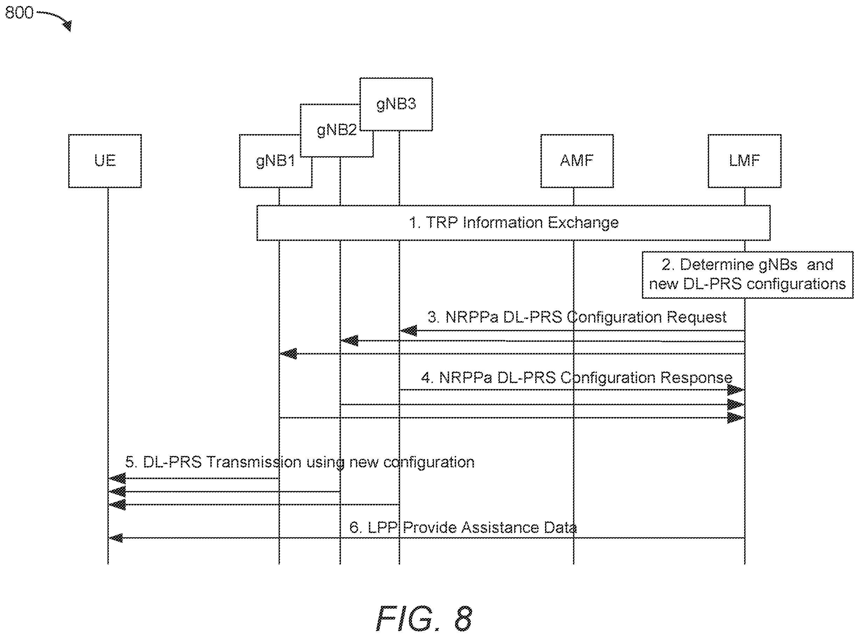

FIG. 8 illustrates an LMF-initiated on-demand PRS procedure 800, in accordance with aspects of the disclosure.

Referring to FIG. 8, at (1), the LMF may receive information on the possible On-Demand PRS configurations that the gNB can support during the TRP Information Exchange procedure. While not shown in FIG. 8, in some designs, the LMF and the UE may exchange LPP messages e.g., to obtain UE measurements or the DL-PRS positioning capabilities of the UE, etc. At (2), the LMF determines the need for PRS transmission or change to the transmission characteristics of an ongoing PRS transmission. At (3), the LMF requests the serving and non-serving gNBs/TRPs for new PRS transmission or PRS transmission with changes to the PRS configuration via NRPPa PRS CONFIGURATION REQUEST message. At (4), the gNBs/TRPs provide the successfully configured or updated PRS transmission in the NRPPa PRS CONFIGURATION RESPONSE message accordingly. At (5), the serving gNB transmits DL-PRS using the configured/Updated PRS configuration. At (6), the LMF may provide the PRS configuration used for PRS transmission or error cause via LPP Provide Assistance Data message to the UE.

In some designs, the TRP Information Exchange procedure at (1) of FIG. 8 provides the on-demand DL-PRS parameters supported by the TRPs to the LMF. In an example, an "On-demand PRS Request Allowed" Bit map provided by the TRPs to the LMF may include, e.g.:
- Bit1: Resource Set Periodicity
- Bit2: PRS Bandwidth
- Bit3: Resource Repetition Factor
- Bit4: Resource Number of Symbols
- Bit5: Comb Size
- Bit6: Number of Frequency Layers
- Bit7: Start Time and Duration
- Bit8: Off Indication
- Bit9: QCL Information

In some designs, for each "support bit", the supported values may also be provided to the LMF. In some designs,

The purpose of the TRP Information Exchange procedure at (1) of FIG. 8 is to allow the LMF to request the NG-RAN node to provide detailed information for TRPs hosted by the NG-RAN node. In some designs, this procedure applies only if the NG-RAN node is a gNB.

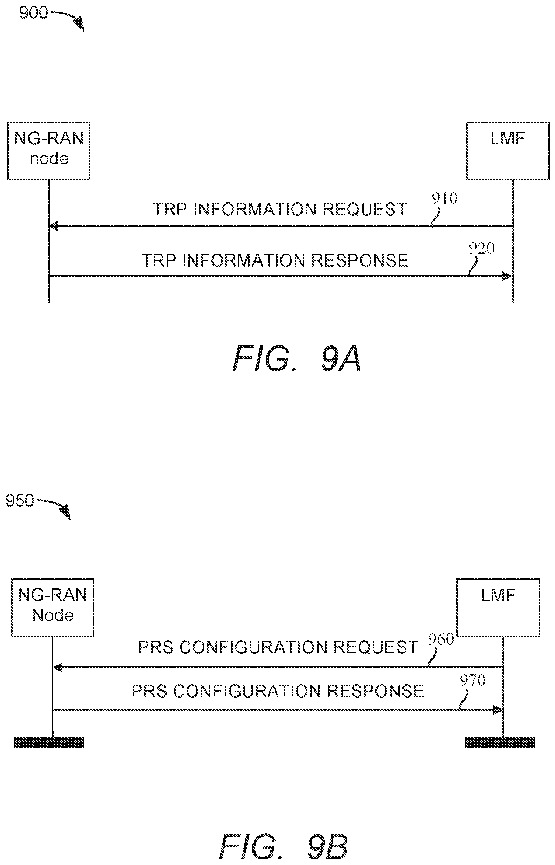

FIG. 9A illustrates a TRP Information Exchange procedure 900, in accordance with aspects of the disclosure.

Referring to FIG. 9A, at 910, the LMF initiates the procedure by sending a TRP INFORMATION REQUEST message. In some designs, the TRP INFORMATION REQUEST message is sent by an LMF to request information for TRPs hosted by an NG-RAN node. In some designs, the TRP INFORMATION REQUEST message may request TRP information such as NR PCI, NG-RAN CGI, NR ARFCN, PRS configuration, SSB configuration, SFN initiation time, spatial direction information, geo-coordinates, TRP type, on-demand PRS capability, TRP Tx TEG, beam antenna information, and so on.

Referring to FIG. 9A, at 920, the NG-RAN node responds with a TRP INFORMATION RESPONSE message that contains the requested TRP information (i.e., NG-RAN node to LMF). In some designs, the TRP may report the allowed (i.e., supported or available) parameters for on-demand DL-PRS requests at 920.

Referring to FIG. 9A, in some designs, if the *TRP List* IE is included in the TRP INFORMATION REQUEST message, the NG-RAN node should include in the TRP INFORMATION RESPONSE message, the requested information for all TRPs included in the *TRP List* IE. In some designs, if the *TRP List* IE is not included in the TRP INFORMATION REQUEST message, the NG-RAN node should include the requested information for all TRPs hosted by the NG-RAN node in the TRP INFORMATION RESPONSE message. In some designs, if the *PRS Muting* IE is included in the *PRS Configuration* IE in the TRP INFORMATION RESPONSE message, the LMF may take it into account as the muting information for the given PRS resource set. In some designs, if the *QCL Info* IE is included in the *PRS Configuration* IE in the TRP INFORMATION RESPONSE message, the LMF may take it into account for the given PRS resource list. In some designs, if the *DL-PRS Resource Coordinates* IE is included in the *Geographical Coordinates* IE in the *TRP Information* IE in the TRP INFORMATION RESPONSE message, the LMF may take it into account as the DL PRS Resource Coordinates relative to the TRP coordinate.

In some designs, the *TRP Information* IE contains information for one TRP within an NG-RAN node, e.g.:

**Table 1: TRP Information IE Examples**

| IE/Group Name | Presence | Range | IE Type and Reference |
|---|---|---|---|
| TRP ID | M | | 9.2.24 |
| TRP Information Type | | 1 .. <maxnoTRPInfoTypes> | |
| >CHOICE TRP Information Item | M | | |
| >>NR PCI | M | | INTEGER (0..1007) |
| >>NR CGI | M | | 9.2.9 |
| >>NR ARFCN | M | | INTEGER (0..3279165) |
| >>PRS Configuration | M | | 9.2.44 |
| >>SSB Information | M | | 9.2.54 |
| >>SFN Initialisation Time | M | | Relative Time 1900 |
| | | | 9.2.36 |
| >>Spatial Direction Information | M | | 9.2.45 |
| >>Geographical Coordinates | M | | 9.2.46 |
| >>TRP type | M | | ENUMERATED (prs-only-tp, srs-only-rp, tp, rp, trp...) |
| >>On-demand PRS TRP Information | M | | 9.2.65 |
| >>TRP Tx TEG Association | M | | 9.2.79 |
| >>TRP Beam Antenna Information | M | | 9.2.82 |

**Table 2: TRP Information IE Examples**

| IE/Group Name | IE Type and Reference | Semantics Description |
|---|---|---|
| On-demand PRS Request Allowed | BIT STRING (SIZE(16)) | Each position in the bitmap represents an on-demand PRS transmission parameter: |
| | | first bit: Resource Set Periodicity |
| | | second bit: PRS Bandwidth |
| | | third bit: Resource Repetition Factor |
| | | fourth bit: Resource Number of Symbols |
| | | fifth bit: Comb Size |
| | | sixth bit: Number of Frequency Layers |
| | | seventh bit: Start Time and Duration |
| | | eighth bit: Off Indication |
| | | ninth bit: QCL Information |
| | | Other bits reserved for future use. Value '1' indicates 'request allowed', Value '0' indicates 'request not allowed'. |
| Allowed Resource Set Periodicity Values | BIT STRING (SIZE(24)) | This IE applies only if the first bit of the On-demand PRS Request Allowed IE is set to '1'. |
| Allowed PRS Bandwidth Values | BIT STRING (SIZE(64)) | This IE applies only if the second bit of the On-demand PRS Request Allowed IE is set to '1'. |
| Allowed Resource Repetition Factor Values | BIT STRING (SIZE(8)) | This IE applies only if the third bit of the On-demand PRS Request Allowed IE is set to '1'. |
| Allowed Resource Number of Symbols Values | BIT STRING (SIZE(8)) | This IE applies only if the fourth bit of the On-demand PRS Request Allowed IE is set to '1'. |
| Allowed Comb Size Values | BIT STRING (SIZE(8)) | This IE applies only if the fifth bit of the On-demand PRS Request Allowed IE is set to '1'. |

FIG. 9B illustrates a PRS Configuration Exchange procedure 950, in accordance with aspects of the disclosure. The PRS Configuration Exchange procedure 950 is initiated by the LMF to request the NG-RAN node to configure or update (i.e., turn off) PRS transmission. This procedure applies only if the NG-RAN node is a gNB.

Referring to FIG. 9B, at 960, the LMF initiates the procedure by sending a PRS CONFIGURATION REQUEST message to the NG-RAN. In some designs, if the *PRS Configuration Request Type* IE is set to "configure", the NG-RAN node should use the information in the *Requested DL PRS Transmission Characteristics* IE to configure DL-PRS transmission by the indicated TRP(s). In some designs, if the *PRS Configuration Request Type* IE is set to "off", the NG-RAN node should, if supported, use the information in the *PRS Transmission Off Information* IE to turn off the DL-PRS transmission for the indicated TRP(s), PRS Resource Set(s), or PRS Resource(s). If DL-PRS transmission is successfully configured or updated for at least one of the TRPs, the NG-RAN node shall respond with a PRS CONFIGURATION RESPONSE message, 970.

In some designs, the PRS configuration request message of 960 may include the following:

**Table 3: PRS Configuration Request**

| IE/Group Name | Presence | Range | IE type and reference | Criticality | Assigned Criticality |
|---|---|---|---|---|---|
| Message Type | M | | 9.2.3 | YES | reject |
| NRPPa Transaction ID | M | | 9.2.4 | - | |
| PRS Configuration Request Type | M | | ENUMERAT ED(configure, off, ...) | YES | reject |
| PRS TRP List | | 1 | | YES | ignore |
| >PRS TRP Item | | 1 .. <maxnoTRPs> | | EACH | ignore |
| >>TRP ID | M | | 9.2.24 | - | |
| >>Requested DL PRS Transmission Characteristics | C-ifConf | | 9.2.61 | - | |
| >>PRS Transmission Off Information | C-ifOff | | 9.2.64 | - | |

In some designs, the IE containing a requested PRS configuration for transmission by the LMF may include the following:

**Table 4: PRS Configuration Request**

| IE/Group Name | Presence | Range | IE Type and Reference | Semantics Description |
|---|---|---|---|---|
| Requested DL-PRS Resource Set List | | 1 | | |
| >Requested DL-PRS Resource Set Item | | 1..<maxnoof PRSresourceSet> | | |
| >>PRS bandwidth | O | | INTEGER(1..63) | 24, 28, ..., 272 PRBs |
| >>Comb Size | O | | ENUMERATED(2, 4, 6, 12, ...) | |
| >>Resource Set Periodicity | O | | ENUMERATED(4, 5, 8, 10, 16, 20, 32, 40, 64, 80, 160, 320, 640, 1280, 2560, 5120, 10240, 20480, 40960, 81920, ...) | |
| >>Resource Repetition Factor | O | | ENUMERATED(rf1, rf2, rf4, rf6, rf8, rf16, rf32, ...) | |
| >>Resource Number of Symbols | O | | ENUMERATED(n2, n4, n6, n12, ...) | |
| >>Requested DL-PRS Resource List | O | | 9.2.62 | |
| >>Resource Set Start Time and Duration | O | | Start Time and Duration | This IE is ignored if the Start Time and Duration IE is present |
| | | | 9.2.63 | |
| Number of Frequency Layers | O | | INTEGER(1..4) | |
| Start Time and Duration | O | | 9.2.63 | |

In some designs, the IE containing the PRS configuration response may include the following:

**Table 4: PRS Configuration Response**

| IE/Group Name | Presenc e | Range | IE Type and Reference | Semantics Descriptio n |
|---|---|---|---|---|
| Requested DL-PRS Resource Set List | | 1 | | |
| >Requested DL-PRS Resource Set Item | | 1..<maxnoofPRSresourceS et> | | |
| >>PRS bandwidth | O | | INTEGER(1..63) | 24, 28, ..., 272 PRBs |
| >>Comb Size | O | | ENUMERATED(2 , 4, 6, 12, ...) | |
| >>Resourc e Set Periodicity | O | | ENUMERATED(4 , 5, 8, 10, 16, 20, 32, 40, 64, 80, 160, 320, 640, 1280, 2560, 5120, 10240, 20480, 40960, 81920, ...) | |
| >>Resourc e Repetition Factor | O | | ENUMERATED(r f1, rf2, rf4, rf6, rf8, rf16, rf32, ...) | |
| >>Resourc e Number of Symbols | O | | ENUMERATED(n 2, n4, n6, n12, ...) | |
| >>Request ed DL-PRS Resource List | O | | 9.2.62 | |
| >>Resourc e Set Start Time and Duration | O | | Start Time and Duration | This IE is ignored if the Start Time and Duration IE is present |
| | | | 9.2.63 | |
| Number of Frequency Layers | O | | INTEGER(1..4) | |
| Start Time and Duration | O | | 9.2.63 | |

In some designs, the gNBs can send different set of available on-demand PRS and start if
- Option 1: If the network decides to certain sleep modes.
- Option 2: Based on the number of served UEs and their traffic which may impact the network operation by reducing the number of Tx antennas or changing the transmission power.

In some designs, the available on-demand PRS signaled by gNB may also indicate their respective availability for different network power saving modes. For example, if the gNB is supporting 4 different network power saving modes, the indicated available PRS should also indicate in which of these 4 they will be available. Each one of the signaled PRS can be available in zero, one or more of the different network power saving modes. In some designs, an expiration timer is introduced such that the LMF and the UEs should not consider these PRS as valid for longer than a specific period of time.

Wireless communication signals (e.g., radio frequency (RF) signals configured to carry orthogonal frequency division multiplexing (OFDM) symbols in accordance with a wireless communications standard, such as LTE, NR, etc.) transmitted between a UE and a base station can be used for environment sensing (also referred to as "RF sensing" or "radar"). Using wireless communication signals for environment sensing can be regarded as consumer-level radar with advanced detection capabilities that enable, among other things, touchless/device-free interaction with a device/system. The wireless communication signals may be cellular communication signals, such as LTE or NR signals, WLAN signals, such as Wi-Fi signals, etc. As a particular example, the wireless communication signals may be an OFDM waveform as utilized in LTE and NR. Highfrequency communication signals, such as millimeter wave (mmW) RF signals, are especially beneficial to use as radar signals because the higher frequency provides, at least, more accurate range (distance) detection.

Possible use cases of RF sensing include health monitoring use cases, such as heartbeat detection, respiration rate monitoring, and the like, gesture recognition use cases, such as human activity recognition, keystroke detection, sign language recognition, and the like, contextual information acquisition use cases, such as location detection/tracking, direction finding, range estimation, and the like, and automotive radar use cases, such as smart cruise control, collision avoidance, and the like.

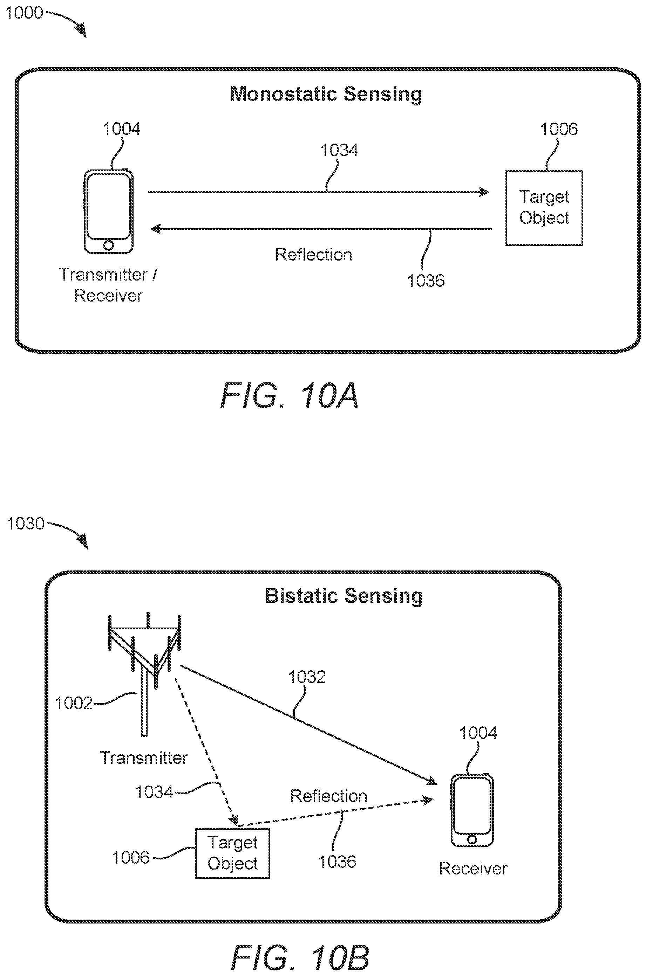

There are different types of sensing, including monostatic sensing (also referred to as "active sensing") and bistatic sensing (also referred to as "passive sensing"). FIGS. 10A and 10B illustrate these different types of sensing. Specifically, FIG. 10A is a diagram 1000 illustrating a monostatic sensing scenario and FIG. 10B is a diagram 1030 illustrating a bistatic sensing scenario. In FIG. 10A, the transmitter (Tx) and receiver (Rx) are co-located in the same sensing device 1004 (e.g., a UE). The sensing device 1004 transmits one or more RF sensing signals 1034 (e.g., uplink or sidelink positioning reference signals (PRS) where the sensing device 1004 is a UE), and some of the RF sensing signals 1034 reflect off a target object 1006. The sensing device 1004 can measure various properties (e.g., times of arrival (ToAs), angles of arrival (AoAs), phase shift, etc.) of the reflections 1036 of the RF sensing signals 1034 to determine characteristics of the target object 1006 (e.g., size, shape, speed, motion state, etc.).

In FIG. 10B, the transmitter (Tx) and receiver (Rx) are not co-located, that is, they are separate devices (e.g., a UE and a base station). Note that while FIG. 10B illustrates using a downlink RF signal as the RF sensing signal 1032, uplink RF signals or sidelink RF signals can also be used as RF sensing signals 1032. In a downlink scenario, as shown, the transmitter is a base station and the receiver is a UE, whereas in an uplink scenario, the transmitter is a UE and the receiver is a base station.

Referring to FIG. 10B in greater detail, the transmitter device 1002 transmits RF sensing signals 1032 and 1034 (e.g., positioning reference signals (PRS)) to the sensing device 1004, but some of the RF sensing signals 1034 reflect off a target object 1006. The sensing device 1004 (also referred to as the "sensing device") can measure the times of arrival (ToAs) of the RF sensing signals 1032 received directly from the transmitter device and the ToAs of the reflections 1036 of the RF sensing signals 1034 reflected from the target object 1006.

More specifically, as described above, a transmitter device (e.g., a base station) may transmit a single RF signal or multiple RF signals to a sensing device (e.g., a UE). However, the receiver may receive multiple RF signals corresponding to each transmitted RF signal due to the propagation characteristics of RF signals through multipath channels. Each path may be associated with a cluster of one or more channel taps. Generally, the time at which the receiver detects the first cluster of channel taps is considered the ToA of the RF signal on the line-of-site (LOS) path (i.e., the shortest path between the transmitter and the receiver). Later clusters of channel taps are considered to have reflected off objects between the transmitter and the receiver and therefore to have followed non-LOS (NLOS) paths between the transmitter and the receiver.

Thus, referring back to FIG. 10B, the RF sensing signals 1032 followed the LOS path between the transmitter device 1002 and the sensing device 1004, and the RF sensing signals 1034 followed an NLOS path between the transmitter device 1002 and the sensing device 1004 due to reflecting off the target object 1006. The transmitter device 1002 may have transmitted multiple RF sensing signals 1032, 1034, some of which followed the LOS path and others of which followed the NLOS path. Alternatively, the transmitter device 1002 may have transmitted a single RF sensing signal in a broad enough beam that a portion of the RF sensing signal followed the LOS path (RF sensing signal 1032) and a portion of the RF sensing signal followed the NLOS path (RF sensing signal 1034).

Based on the ToA of the LOS path, the ToA of the NLOS path, and the speed of light, the sensing device 1004 can determine the distance to the target object(s). For example, the sensing device 1004 can calculate the distance to the target object as the difference between the ToA of the LOS path and the ToA of the NLOS path multiplied by the speed of light. In addition, if the sensing device 1004 is capable of receive beamforming, the sensing device 1004 may be able to determine the general direction to a target object as the direction (angle) of the receive beam on which the RF sensing signal following the NLOS path was received. That is, the sensing device 1004 may determine the direction to the target object as the angle of arrival (AoA) of the RF sensing signal, which is the angle of the receive beam used to receive the RF sensing signal. The sensing device 1004 may then optionally report this information to the transmitter device 1002, its serving base station, an application server associated with the core network, an external client, a third-party application, or some other sensing entity. Alternatively, the sensing device 1004 may report the ToA measurements to the transmitter device 1002, or other sensing entity (e.g., if the sensing device 1004 does not have the processing capability to perform the calculations itself), and the transmitter device 1002 may determine the distance and, optionally, the direction to the target object 1006.

Note that if the RF sensing signals are uplink RF signals transmitted by a UE to a base station, the base station would perform object detection based on the uplink RF signals just like the UE does based on the downlink RF signals.

Like conventional radar, wireless communication-based radar signal can be used to estimate the range (distance), velocity (Doppler), and angle (AoA) of a target object. However, the performance (e.g., resolution and maximum values of range, velocity, and angle) may depend on the design of the reference signal.

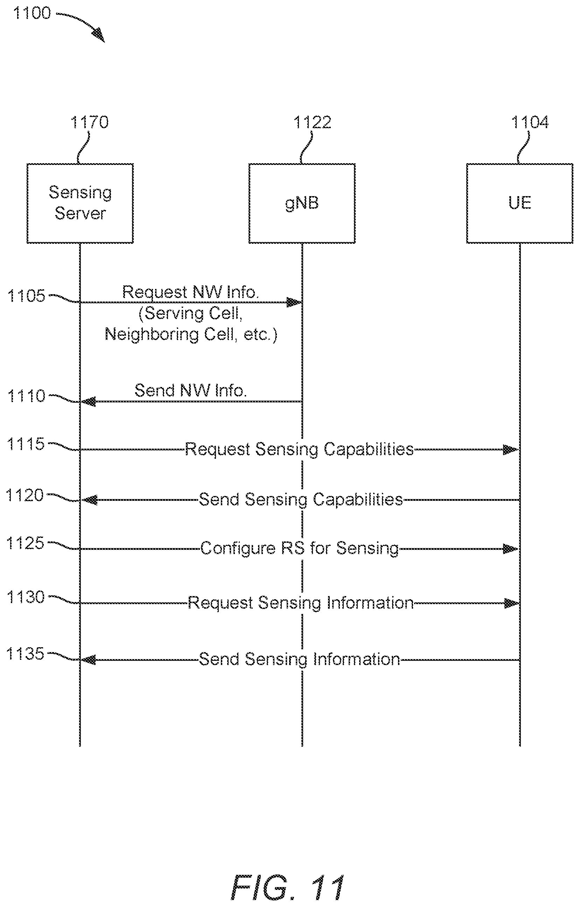

FIG. 11 illustrates an example call flow 1100 for an NR-based sensing procedure (e.g., a bistatic sensing procedure) in which the network configures the sensing parameters, according to aspects of the disclosure. Although FIG. 11 illustrates a network-coordinated sensing procedure, the sensing procedure could be coordinated over sidelink channels.

At stage 1105, a sensing server 1170 (e.g., inside or outside the core network) sends a request for network (NW) information to a gNB 1122 (e.g., the serving gNB of a UE 1104). The request may be for a list of the UE's 1104 serving cell and any neighboring cells. At stage 1110, the gNB 1122 sends the requested information to the sensing server 1170. At stage 1115, the sensing server 1170 sends a request for sensing capabilities to the UE 1104. At stage 1120, the UE 1104 provides its sensing capabilities to the sensing server 1170. At stage 1125, the sensing server 1170 sends a configuration to the UE 1104 indicating the reference signals (RS) that will be transmitted for sensing. The reference signals for sensing may be transmitted by the serving and/or neighboring cells identified at stage 1110. At stage 1130, the sensing server 1170 sends a request for sensing information to the UE 1104. The UE 1104 then measures the transmitted reference signals and, at stage 1135, sends the measurements, or any sensing results determined from the measurements, to the sensing server 1170.

In an aspect, the communication between the UE 1104 and the sensing server 1170 may be via the LTE positioning protocol (LPP). The communication between the sensing server 1170 and the gNB may be via NR positioning protocol type A (NRPPa).

Aspects of the disclosure are directed to a TRP waveform capability exchange for a downlink reference signal (DL-RS) procedure, such as on-demand DL-PRS or a DL-RS for sensing procedure. In some designs, knowledge of waveform(s) for DL-RS supported by TRP may facilitate a device (e.g., LMF) to make waveform-specific decisions. For example, some waveforms may be associated with higher network power consumption than others. Such aspects may thereby provide various technical advantages, including more control over network power consumption for DL-RS procedures, which may reduce power consumption on communications networks such as "green" networks.

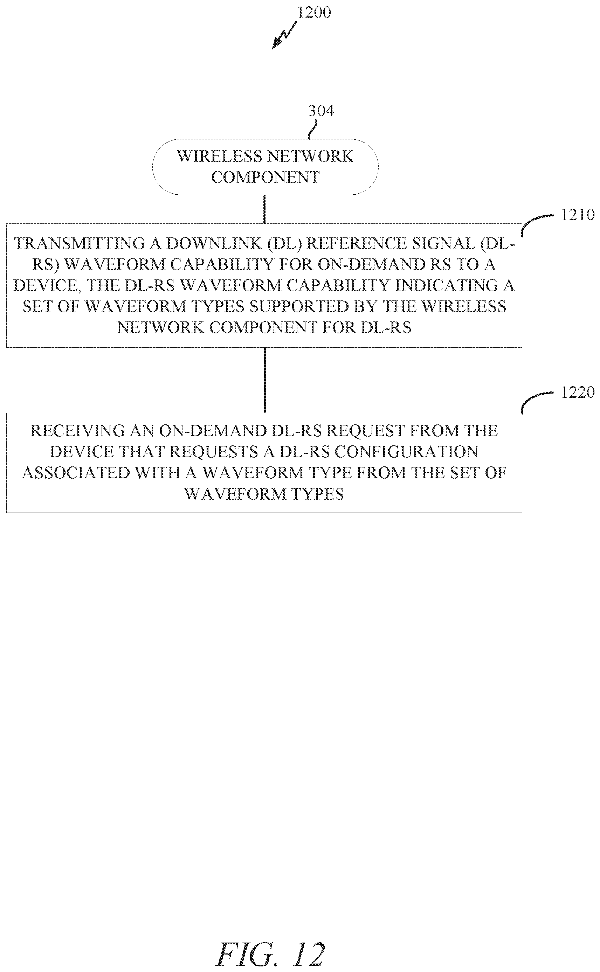

FIG. 12 illustrates an exemplary process 1200 of communications according to an aspect of the disclosure. The process 1200 of FIG. 12 is performed by a wireless network component. In some designs, the wireless network component may correspond to a gNB/BS 304 or TRP or an O-RAN component.

Referring to FIG. 12, at 1210, the wireless network component (e.g., transmitter 354 or 364 or network transceiver(s) 380, etc.) transmits a downlink reference signal (DL-RS) waveform capability for on-demand RS to a device (e.g., position estimation entity such as LMF, the UE or another UE, etc.), the DL-RS waveform capability indicating a set of waveform types supported by the wireless network component for L-PRS.

Referring to FIG. 12, at 1220, the wireless network component (e.g., receiver 352 or 362 or network transceiver(s) 380, etc.) receives an on-demand DL-RS request from the device (e.g., position estimation entity, LMF, etc.) that requests a DL-RS configuration associated with a waveform type from the set of waveform types.

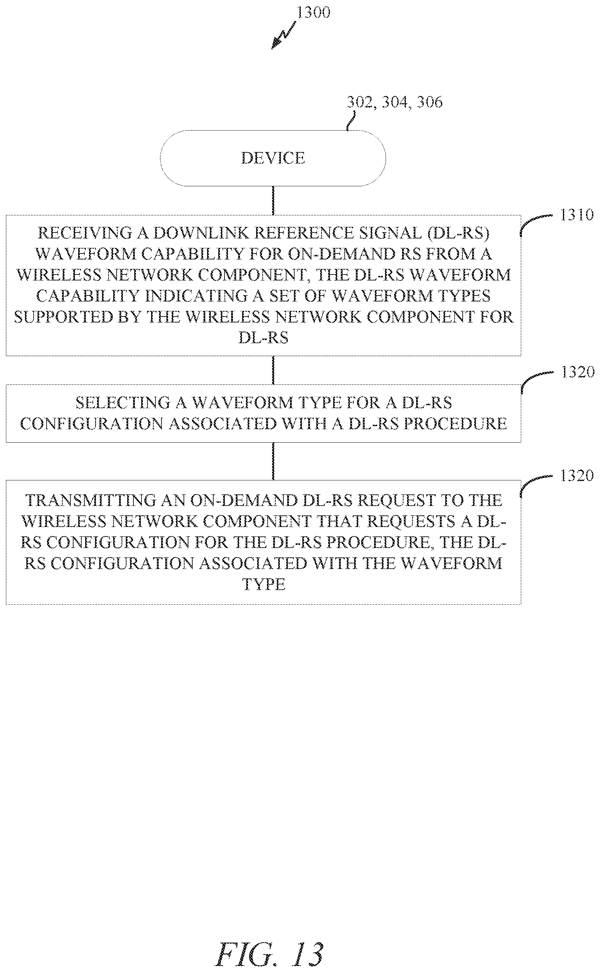

FIG. 13 illustrates an exemplary process 1300 of communications according to an aspect of the disclosure. The process 1300 of FIG. 13 is performed by a device, such as a UE or server or network component or position estimation entity. In an example where the device is a position estimation entity, the position estimation entity may correspond to a network component (e.g., an LMF integrated at gNB/BS 304 or O-RAN component or a remote location server such as network entity 306, etc.). In other designs, the position estimation entity may correspond to another UE (e.g., sidelink anchor UE) or to the target UE itself (e.g., for UE-based position estimation, in which case any Rx/Tx operations between the UE and the position estimation entity may correspond to transfer of information between different logical components of the UE over a data bus, etc.). In a further aspect, the process 1300 of FIG. 13 at the device (e.g., position estimation entity) may correspond to a process performed in parallel with the process 1200 of FIG. 12 at the wireless network component.

Referring to FIG. 13, at 1310, the device (e.g., receiver 312 or 322 or 352 or 362 or data bus 334 or data bus 382 or network transceiver(s) 380 or 390, etc.) receives a downlink reference signal (DL-RS) waveform capability for on-demand RS from a wireless network component, the DL-RS waveform capability indicating a set of waveform types supported by the wireless network component for DL-RS.

Referring to FIG. 13, at 1320, the device (e.g., processor(s) 332 or 384 or 394, DL-RS component 342 or 388 or 398, etc.) selects a waveform type for a DL-RS configuration associated with a DL-RS procedure.

Referring to FIG. 13, at 1330, the device (e.g., transmitter 314 or 324 or 354 or 364 or data bus 334 or data bus 382 or network transceiver(s) 380 or 390, etc.) transmits an on-demand DL-RS request to the wireless network component that requests a DL-RS configuration for the DL-RS procedure, the DL-RS configuration associated with the waveform type.

Referring to FIGS. 12-13, in some designs, the DL-RS waveform capability is a DL-PRS waveform capability for on-demand PRS, the on-demand DL-RS request is a DL-PRS request associated with a positioning session of a user equipment (UE), and the device is a position estimation entity. In some designs, the waveform type is configured per DL-PRS resource set or per positioning frequency layer (PFL). In some designs, the waveform type is associated with a first DL-PRS resource set or a first PFL of the DL-RS configuration (e.g., DL-PRS configuration), and another waveform type from the set of waveform types is associated with a second DL-PRS resource set or a second PFL of the DL-RS configuration (e.g., DL-PRS configuration).

Referring to FIGS. 12-13, in some designs, the DL-RS waveform capability is a DL-RS for sensing waveform capability for on-demand RS for sensing procedure, and the on-demand DL-RS request is an RS for sensing request.

Referring to FIGS. 12-13, in some designs, the set of waveform types comprises a cyclic prefix orthogonal frequency division multiplex (CP-OFDM) waveform type, a discrete Fourier transform (DFT)-spread OFDM (DFT-S-OFDM) waveform type, an orthogonal time frequency space (OTFS) waveform type, a frequency modulated continuous wave (FMCW) waveform type, or any combination thereof. For example, if DFT-S in DL, i.e., Zadoff-Chu (ZC)-based DL-PRS, is introduced, TRPs in the TRP exchange information may indicate whether DFT-S or CP-OFDM-based waveform is allowed.

Referring to FIGS. 12-13, in some designs, the waveform type is configured per positioning session or sensing session (e.g., or both, in case of joint communication and sensing (JCS)), with the waveform type required to be the same for each wireless network component associated with the positioning session or the sensing session, or the waveform type is configured per wireless network component, with the waveform type being the same or different across wireless network components associated with the positioning session or the sensing session.

Referring to FIGS. 12-13, in some designs, two or more waveform types from the set of waveform types are associated with different power consumption properties, and the position estimation entity selects (at 1120) the waveform type based in part upon a power consumption parameter.

In a more specific example of FIGS. 12-13 for a DL-PRS implementation, DFT-S-based waveforms for PRS is expected to have better power consumption properties as compared to CP-OFDM. In some designs, a TRP may include in the allowable PRS configuration whether an LMF can request a waveform (e.g., CP-OFDM and/or DFT-S-OFDM). In some designs, additional waveform(s) such as OTFS may be included. In another example, an LMF, based on the allowable PRS-configuration, may request a TRP to configure CP-OFDM or DFT-S-OFDM. The request may be applicable to:
- Option 1: One waveform type for all PRS resources of all TRPs
- Option 2: One waveform type for each TRP, but could be different for different TRPs
- Option 3: One waveform type for each PRS resource set of a TRP, but could be different for different PRS resource sets even of the same TRP

Additional aspects of the disclosure are directed to wireless network component-initiated (e.g., TRP-initiated) capability change indications for DL-RS (e.g., DL-PRS or DL-RS for sensing). For example, certain TRP capabilities may be gained or lost after the TRP Information Exchange procedure. In this case, wireless network component-initiated (e.g., TRP-initiated) capability change indications for DL-RS may allow a device (e.g., position estimation entity (e.g., LMF) in case of DL-PRS implementation) to update the DL-RS configuration to accommodate (or better utilize) the changed wireless network component capability. Such aspects may provide various technical advantages, such as reduced position estimation or sensing latency, reduced power consumption at the wireless network component, improved position estimation or sensing accuracy, and so on.

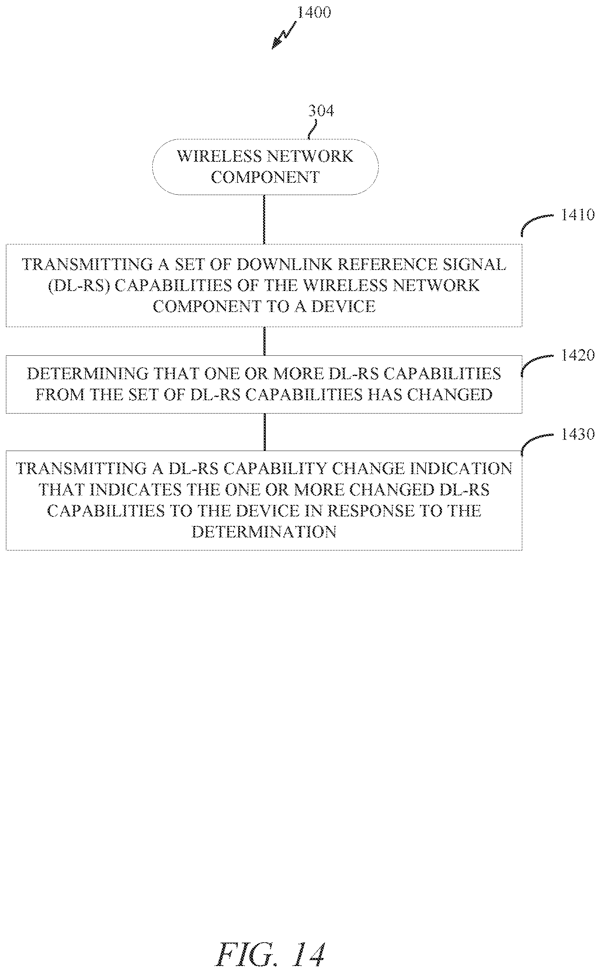

FIG. 14 illustrates an exemplary process 1400 of communications according to an aspect of the disclosure. The process 1400 of FIG. 12 is performed by a wireless network component. In some designs, the wireless network component may correspond to a gNB/BS 304 or TRP or an O-RAN component.

Referring to FIG. 14, at 1410, the wireless network component (e.g., transmitter 354 or 364 or network transceiver(s) 380, etc.) transmits a set of downlink reference signal (DL-RS) capabilities of the wireless network component to a device (e.g., position estimation entity or LMF).

Referring to FIG. 14, at 1420, the wireless network component (e.g., processor(s) 384, DL-RS component, etc.) determines that one or more DL-RS capabilities from the set of DL-RS capabilities has changed.

Referring to FIG. 14, at 1430, the wireless network component (e.g., transmitter 354 or 364 or network transceiver(s) 380, etc.) transmits a DL-RS capability change indication that indicates the one or more changed DL-PRS capabilities to the device in response to the determination.

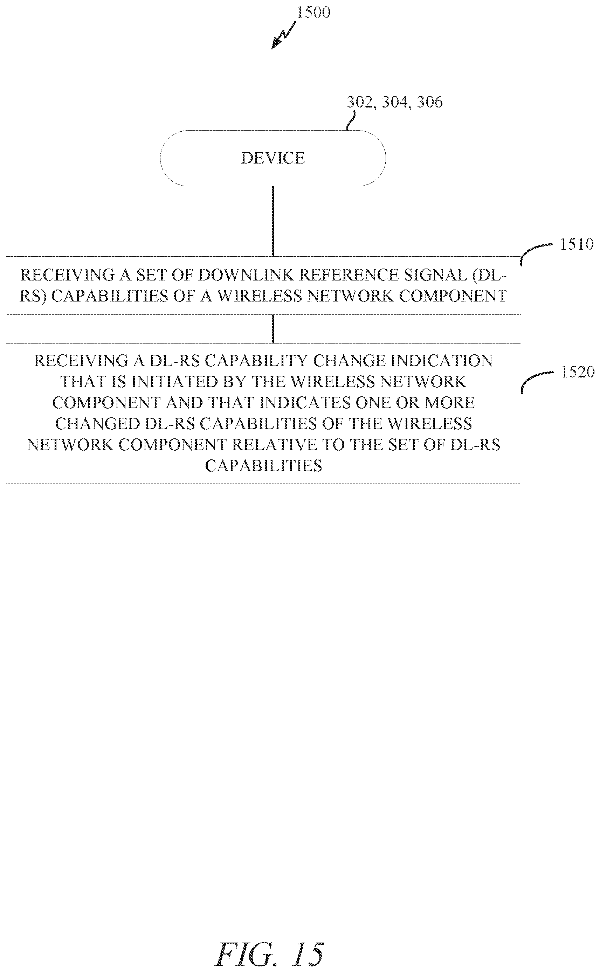

FIG. 15 illustrates an exemplary process 1500 of communications according to an aspect of the disclosure. The process 1500 of FIG. 15 is performed by a device, which in some designs corresponds to a position estimation entity. In some designs, the position estimation entity may correspond to a network component (e.g., an LMF integrated at gNB/BS 304 or O-RAN component or a remote location server such as network entity 306, etc.). In other designs, the position estimation entity may correspond to another UE (e.g., sidelink anchor UE) or to the target UE itself (e.g., for UE-based position estimation, in which case any Rx/Tx operations between the UE and the position estimation entity may correspond to transfer of information between different logical components of the UE over a data bus, etc.). In a further aspect, the process 1500 of FIG. 15 at the device may correspond to a process performed in parallel with the process 1400 of FIG. 14 at the wireless network component.

Referring to FIG. 15, at 1510, the device (e.g., receiver 312 or 322 or 352 or 362 or data bus 334 or data bus 382 or network transceiver(s) 380 or 390, etc.) receives a set of downlink reference signal (DL-RS) capabilities of a wireless network component.

Referring to FIG. 15, at 1520, the device (e.g., receiver 312 or 322 or 352 or 362 or data bus 334 or data bus 382 or network transceiver(s) 380 or 390, etc.) receives a DL-RS capability change indication that is initiated by the wireless network component and that indicates one or more changed DL-RS capabilities of the wireless network component relative to the set of DL-RS capabilities. In some designs, the device (e.g., position estimation entity) may set an initial DL-RS configuration based on the set of DL-RS capabilities received at 1510, and may then update the initial DL-RS configuration based on the DL-RS capability change indication received at 1520. Referring to FIGS. 14-15, in some designs, the set of DL-RS capabilities comprise a set of DL positioning RS (DL-PRS) capabilities, and the DL-RS capability change indication is a DL-PRS capability change indication. In other designs, the set of DL-RS capabilities comprise a set of DL-RS for sensing capabilities, and the DL-RS capability change indication is a DL-RS for sensing capability change indication.

Referring to FIGS. 14-15, in some designs, the transmission (from wireless network component perspective) or reception (from device e.g., position estimation entity, perspective) of the DL-RS capability change indication from the wireless network component is conditioned upon one or more DL-RS capability change constraints. For example, the one or more DL-RS capability change constraints comprise a time requirement that sets a minimum time between DL-RS capability change indication transmissions. In another example, the one or more DL-RS capability change constraints comprise a first subset of the set of DL-RS capabilities that is permitted to be changed and a second subset of the set of DL-RS capabilities that is not permitted to be changed. In another example, the one or more DL-RS capability change constraints comprise, for at least one DL-RS capability from the set of DL-RS capabilities, a first subset of DL-RS capability change options that is permitted, a second subset of DL-RS capability change options that is not permitted, or both.

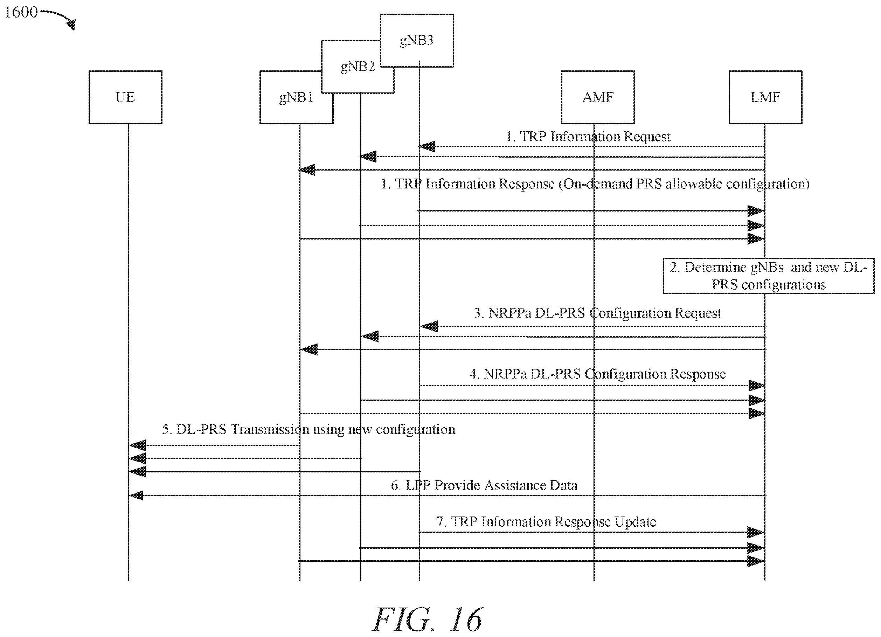

FIG. 16 illustrates an example implementation 1600 of the processes 1400-1500 of FIGS. 14-15, respectively, in accordance with aspects of the disclosure. In the example implementation 1600, the set of DL-RS capabilities comprises a set of DL-PRS capabilities, the wireless network component is a gNB, and the device is an LMF.

Referring to FIG. 16, (1)-(6) correspond to (1)-(6) from the LMF-initiated on-demand PRS procedure 800 of FIG. 8, and as such will not be described in additional detail here for the sake of brevity. At (7), the gNB transmits a TRP information response update which includes the DL-PRS capability change indication.

Referring to FIG. 16, in some designs, gNB can initiate (e.g., whenever RAN considers it useful) to update the allowable PRS configurations. In some designs, the RAN may be configured with a time constraint, e.g., LMF may set the minimum time between two requests. In some designs, operations (2)-(4) of LMF-initiated on-demand PRS procedure 800 of FIG. 8 may be re-executed in response to the TRP information response update (7) to update the PRS configuration.

In some designs, there may be limitations on what the "TRP Information Response Update" could entail, referred to above as DL-RS (in this case, DL-PRS) capability change constraints. For example, the RAN may only be allowed to switch OFF in that gNB-initiated TRP information response update, or may be allowed to decrease the active PRS resources, PRS resource sets, but may not be allowed to decrease PRS BW. In another example, the RAN may be allowed to change the QCL relationship of some of the PRS beams, but may not be allowed to switch OFF the beams. In some designs, the TRP information response update (7) may be arranged with a simple format of "TRP information change", and may trigger a restart of the LMF-initiated on-demand PRS procedure. In some designs, the TRP information response update (7) may include a time stamp of when the now allowable PRS configurations take effect (start time) or (start/end time) or (start & periodicity), etc.

Further aspects of the disclosure are directed to DL-RS pre-configurations for on-demand DL-RS, such as on-demand PRS or on-demand RS for sensing procedure. Such aspects may provide various technical advantages, such as permitting the wireless network component (e.g., TRP) to initiate a transition from one DL-RS (pre-)configuration to another, which may facilitate reduced position estimation or sensing latency, reduced power consumption at the wireless network component, improved position estimation or sensing accuracy, and so on.

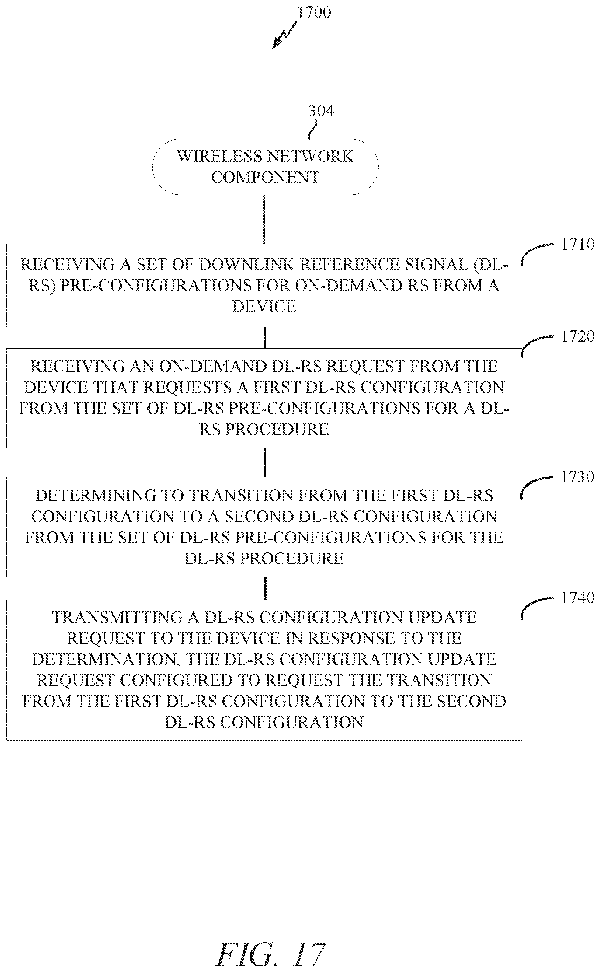

FIG. 27 illustrates an exemplary process 1700 of communications according to an aspect of the disclosure. The process 1700 of FIG. 17 is performed by a wireless network component. In some designs, the wireless network component may correspond to a gNB/BS 304 or TRP or an O-RAN component.

Referring to FIG. 17, at 1710, the wireless network component (e.g., receiver 352 or 362 or network transceiver(s) 380, etc.) receives a set of downlink reference signal (DL-RS) pre-configurations for on-demand RS from a device (e.g., position estimation entity).

Referring to FIG. 17, at 1720, the wireless network component (e.g., receiver 352 or 362 or network transceiver(s) 380, etc.) receives an on-demand DL-RS request from the device that requests a first DL-RS configuration from the set of DL-RS pre-configurations for a DL-RS procedure (e.g., a positioning session of a user equipment (UE), or a RS sensing procedure).

Referring to FIG. 17, at 1730, the wireless network component (e.g., processor(s) 384, DL-RS component , etc.) determines to transition from the first DL-RS configuration to a second DL-RS configuration from the set of DL-RS pre-configurations for the DL-RS procedure (e.g., positioning session of the UE or RS sensing procedure).

Referring to FIG. 17, at 1740, the wireless network component (e.g., transmitter 354 or 364 or network transceiver(s) 380, etc.) transmits a DL-RS configuration update request to the device (e.g., position estimation entity) in response to the determination, the DL-RS configuration update request configured to request the transition from the first DL-RS configuration to the second L-PRS configuration.

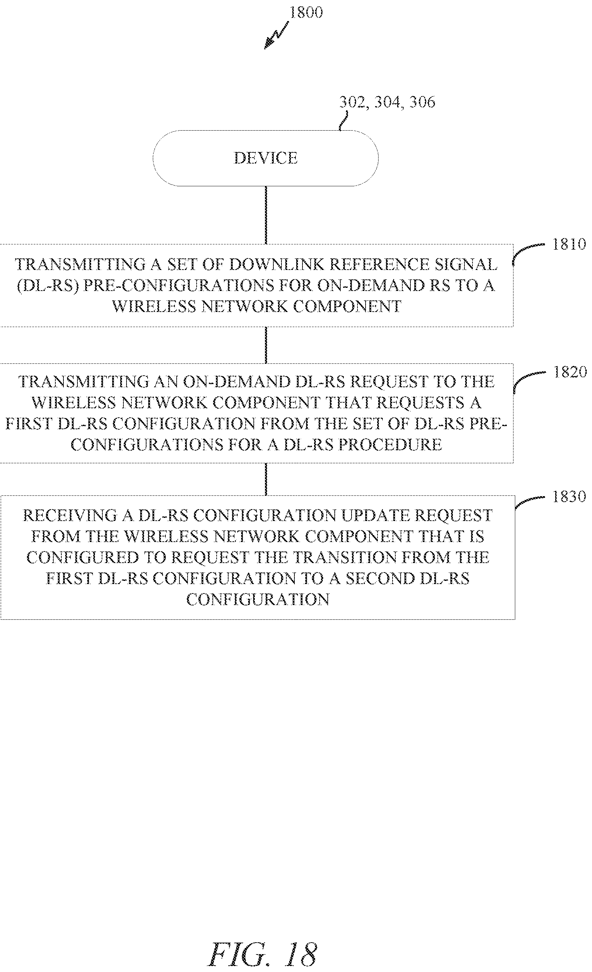

FIG. 18 illustrates an exemplary process 1800 of communications according to an aspect of the disclosure. The process 1800 of FIG. 18 is performed by a device, such as a position estimation entity or UE or network component. In some designs for a position estimation entity implementation, the position estimation entity may correspond to a network component (e.g., an LMF integrated at gNB/BS 304 or O-RAN component or a remote location server such as network entity 306, etc.). In other designs, the position estimation entity may correspond to another UE (e.g., sidelink anchor UE) or to the target UE itself (e.g., for UE-based position estimation, in which case any Rx/Tx operations between the UE and the position estimation entity may correspond to transfer of information between different logical components of the UE over a data bus, etc.). In a further aspect, the process 1800 of FIG. 18 at the device (e.g., position estimation entity) may correspond to a process performed in parallel with the process 1700 of FIG. 17 at the wireless network component.

Referring to FIG. 18, at 1810, the device (e.g., transmitter 314 or 324 or 354 or 364 or data bus 334 or data bus 382 or network transceiver(s) 380 or 390, etc.) transmits a set of downlink reference signal (DL-RS) pre-configurations for on-demand RS to a wireless network component.

Referring to FIG. 18, at 1820, the device (e.g., transmitter 314 or 324 or 354 or 364 or data bus 334 or data bus 382 or network transceiver(s) 380 or 390, etc.) transmits an on-demand DL-RS request to the wireless network component that requests a first DL-RS configuration from the set of DL-RS pre-configurations for a DL-RS procedure (e.g., a positioning session of a user equipment (UE) or a RS sensing procedure).

Referring to FIG. 18, at 1830, the device entity (e.g., receiver 312 or 322 or 352 or 362 or data bus 334 or data bus 382 or network transceiver(s) 380 or 390, etc.) receives a DL-RS configuration update request from the wireless network component that is configured to request the transition from the first DL-RS configuration to a second DL-RS configuration.

Referring to FIGS. 17-18, in some designs, the set of DL-RS pre-configurations comprises a set of DL positioning RS (DL-PRS) pre-configurations, the on-demand DL-RS request is an on-demand DL-PRS request, and the DL-RS procedure is a DL-PRS procedure. In other designs, the set of DL-RS pre-configurations comprises a set of DL-RS for sensing pre-configurations, the on-demand DL-RS request is an on-demand DL-RS for sensing request, and the DL-RS procedure is a DL-RS for sensing procedure.

Referring to FIGS. 17-18, in some designs, the set of DL-RS pre-configurations is ordered by DL-RS pre-configuration priority.

Referring to FIGS. 17-18, in some designs, the determination at 1730 is based on, and the DL-RS configuration update request is thereby associated with, one or more DL-RS configuration update constraints. For example, the one or more DL-RS configuration update constraints may include a set of threshold DL-RS configuration requirements that is acceptable for the DL-RS procedure, e.g., the positioning session of the UE and/or a RS sensing procedure. For example, the set of threshold DL-RS configuration requirements may include a minimum bandwidth, or a minimum number of active wireless network components, or a minimum number of active beams per wireless network component, or any combination thereof. In some designs, the one or more DL-RS configuration update constraints may include a minimum time following a DL-RS configuration acceptance or between DL-RS configuration update requests or both.

Referring to FIGS. 17-18, in some designs, the DL-RS configuration update request includes scheduling information associated with the second DL-RS configuration. In some designs, the scheduling information includes a start time, an end time, a periodicity, a duration, or any combination thereof.

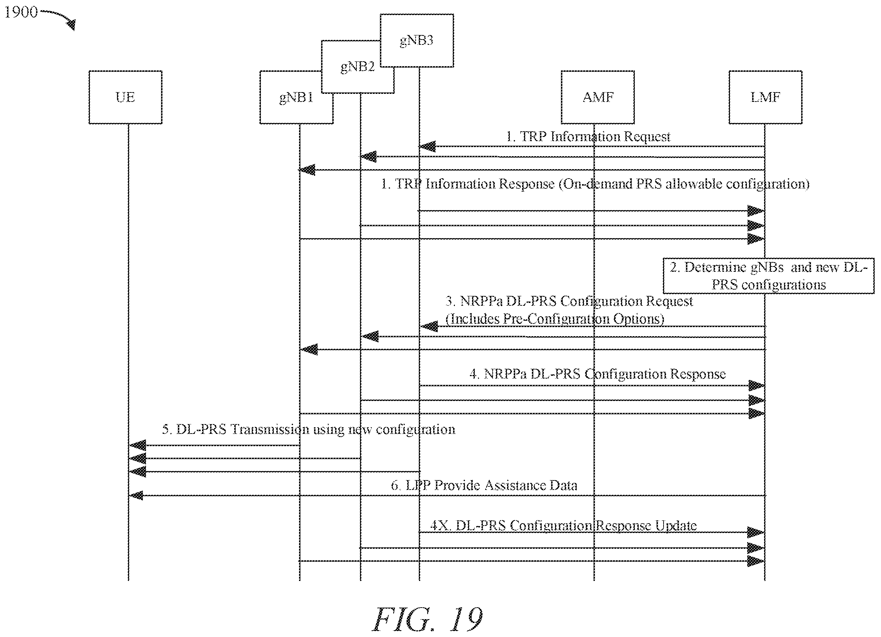

FIG. 19 illustrates an example implementation 1900 of the processes 1700-1800 of FIGS. 17-18, respectively, in accordance with aspects of the disclosure. In particular, the example implementation 1900 relates to positioning implementation whereby the wireless network component is a gNB, and the position estimation entity is an LMF.

Referring to FIG. 19, (1)-(2) and (4)-(6) correspond to (1)-(2) and (4)-(6), respectively, from the LMF-initiated on-demand PRS procedure 800 of FIG. 8, and as such will not be described in additional detail here for the sake of brevity. However, (3) is modified from (3) of the LMF-initiated on-demand PRS procedure 800 of FIG. 8, because (3) includes the DL-PRS configuration options (or DL-PRS pre-configurations) in order to facilitate the gNB to execute TRP-initiated DL-PRS configuration transitions. For example, at (3) LMF may include multiple pre-configuration on-demand requests to the LMF. These can be ordered based on priority according to LMF's based decisions/rules/criterial. In some designs, (3) may include a "minimum" PRS configuration that is acceptable (e.g. minimum BW, minimum number of active TRPs, minimum number of active beams per TRP, maximum periodicity, minimum number of PRS resource sets).

At some point after (6) during the position estimation procedure of the UE, one or more of the gNBs transmits DL-PRS Configuration Response Update at (4X), which identifies a different DL-PRS pre-configuration option from the one that is currently in effect (or configured) for the position estimation procedure of the UE. For example, gNBs may be allowed to initiate a change whenever the respective gNBs consider it useful to do so, without a request from the LMF. There may be a minimum time that after (4X) is sent out, there cannot be an update. This minimum time may be configured by the LMF. In some designs, (4) may include a time stamp of when the new PRS configuration take effect (start time) or (start/end time) or (start & periodicity).

In the detailed description above it can be seen that different features are grouped together in examples. This manner of disclosure should not be understood as an intention that the example clauses have more features than are explicitly mentioned in each clause. Rather, the various aspects of the disclosure may include fewer than all features of an individual example clause disclosed. Therefore, the following clauses should hereby be deemed to be incorporated in the description, wherein each clause by itself can stand as a separate example. Although each dependent clause can refer in the clauses to a specific combination with one of the other clauses, the aspect(s) of that dependent clause are not limited to the specific combination. It will be appreciated that other example clauses can also include a combination of the dependent clause aspect(s) with the subject matter of any other dependent clause or independent clause or a combination of any feature with other dependent and independent clauses. The various aspects disclosed herein expressly include these combinations, unless it is explicitly expressed or can be readily inferred that a specific combination is not intended (e.g., contradictory aspects, such as defining an element as both an electrical insulator and an electrical conductor). Furthermore, it is also intended that aspects of a clause can be included in any other independent clause, even if the clause is not directly dependent on the independent clause.

Implementation examples are described in the following numbered clauses:
Clause 1. A method of operating a wireless network component, comprising: transmitting a downlink (DL) reference signal (DL-RS) waveform capability for on-demand RS to a device, the DL-RS waveform capability indicating a set of waveform types supported by the wireless network component for DL-RS; and receiving an on-demand DL-RS request from the device that requests a DL-RS configuration associated with a waveform type from the set of waveform types.
Clause 2. The method of clause 1, wherein the DL-RS waveform capability is a DL-PRS waveform capability for on-demand PRS, the on-demand DL-RS request is a DL-PRS request associated with a positioning session of a user equipment (UE), and the device is a position estimation entity.
Clause 3. The method of clause 2, wherein the waveform type is configured per DL-PRS resource set or per positioning frequency layer (PFL).
Clause 4. The method of clause 3, wherein the waveform type is associated with a first DL-PRS resource set or a first PFL of the DL-RS configuration, and wherein another waveform type from the set of waveform types is associated with a second DL-PRS resource set or a second PFL of the DL-RS configuration.
Clause 5. The method of any of clauses 1 to 4, wherein the DL-RS waveform capability is a DL-RS for sensing waveform capability for on-demand RS for sensing procedure, and the on-demand DL-RS request is an RS for sensing request.
Clause 6. The method of any of clauses 1 to 5, wherein the set of waveform types comprises a cyclic prefix orthogonal frequency division multiplex (CP-OFDM) waveform type, a discrete Fourier transform (DFT)-spread OFDM (DFT-S-OFDM) waveform type, an orthogonal time frequency space (OTFS) waveform type, a frequency modulated continuous wave (FMCW) waveform type, or any combination thereof.
Clause 7. The method of any of clauses 1 to 6, wherein the waveform type is configured per positioning session or per sensing session, with the waveform type required to be the same for each wireless network component associated with the positioning session or the sensing session, or wherein the waveform type is configured per wireless network component, with the waveform type being the same or different across wireless network components associated with the positioning session or the sensing session.
Clause 8. The method of any of clauses 1 to 7, wherein the wireless network component is a transmission reception point (TRP).
Clause 9. A method of operating a device, comprising: receiving a downlink reference signal (DL-RS) waveform capability for on-demand RS from a wireless network component, the DL-RS waveform capability indicating a set of waveform types supported by the wireless network component for DL-RS; selecting a waveform type for a DL-RS configuration associated with a DL-RS procedure; and transmitting an on-demand DL-RS request to the wireless network component that requests a DL-RS configuration for the DL-RS procedure, the DL-RS configuration associated with the waveform type.
Clause 10. The method of clause 9, wherein the DL-RS waveform capability is a DL-PRS waveform capability for on-demand PRS, the on-demand DL-RS request is a DL-PRS request associated with a positioning session of a user equipment (UE), and the device is a position estimation entity.
Clause 11. The method of clause 10, wherein the waveform type is configured per DL-PRS resource set or per positioning frequency layer (PFL).
Clause 12. The method of clause 11, wherein the waveform type is associated with a first DL-PRS resource set or a first PFL of the DL-RS configuration, and wherein another waveform type from the set of waveform types is associated with a second DL-PRS resource set or a second PFL of the DL-RS configuration.
Clause 13. The method of any of clauses 9 to 12, wherein two or more waveform types from the set of waveform types are associated with different power consumption properties, and wherein the selecting selects the waveform type based in part upon a power consumption parameter.
Clause 14. The method of any of clauses 9 to 13, wherein the set of waveform types comprises a cyclic prefix orthogonal frequency division multiplex (CP-OFDM) waveform type, a discrete Fourier transform (DFT)-spread OFDM (DFT-S-OFDM) waveform type, an orthogonal time frequency space (OTFS) waveform type, a frequency modulated continuous wave (FMCW) waveform type, or any combination thereof.
Clause 15. The method of any of clauses 9 to 14, wherein the waveform type is configured per positioning session or per sensing session, with the waveform type required to be the same for each wireless network component associated with the positioning session or the sensing session, or wherein the waveform type is configured per wireless network component, with the waveform type being the same or different across wireless network components associated with the positioning session or the sensing session.
Clause 16. The method of any of clauses 9 to 15, wherein the wireless network component is a transmission reception point (TRP).
Clause 17. A method of operating a wireless network component, comprising: transmitting a set of downlink reference signal (DL-RS) capabilities of the wireless network component to a device; determining that one or more DL-RS capabilities from the set of DL-RS capabilities has changed; and transmitting a DL-RS capability change indication that indicates the one or more changed DL-RS capabilities to the device in response to the determination.
Clause 18. The method of clause 17, wherein the set of DL-RS capabilities comprise a set of DL positioning RS (DL-PRS) capabilities, and wherein the DL-RS capability change indication is a DL-PRS capability change indication.
Clause 19. The method of any of clauses 17 to 18, wherein the set of DL-RS capabilities comprise a set of DL-RS for sensing capabilities, and wherein the DL-RS capability change indication is a DL-RS for sensing capability change indication.
Clause 20. The method of any of clauses 17 to 19, wherein the transmission of the DL-RS capability change indication is conditioned upon one or more DL-RS capability change constraints.
Clause 21. The method of clause 20, wherein the one or more DL-RS capability change constraints comprise a time requirement that sets a minimum time between DL-RS capability change indication transmissions.
Clause 22. The method of any of clauses 20 to 21, wherein the one or more DL-RS capability change constraints comprise a first subset of the set of DL-RS capabilities that is permitted to be changed and a second subset of the set of DL-RS capabilities that is not permitted to be changed.
Clause 23. The method of any of clauses 20 to 22, wherein the one or more DL-RS capability change constraints comprise, for at least one DL-RS capability from the set of DL-RS capabilities, a first subset of DL-RS capability change options that is permitted, a second subset of DL-RS capability change options that is not permitted, or both.
Clause 24. The method of any of clauses 17 to 23, wherein the wireless network component is a transmission reception point (TRP).
Clause 25. A method of operating a device, comprising: receiving a set of downlink reference signal (DL-RS) capabilities of a wireless network component; and receiving a DL-RS capability change indication that is initiated by the wireless network component and that indicates one or more changed DL-RS capabilities of the wireless network component relative to the set of DL-RS capabilities.
Clause 26. The method of clause 25, wherein the set of DL-RS capabilities comprise a set of DL positioning RS (DL-PRS) capabilities, and wherein the DL-RS capability change indication is a DL-PRS capability change indication.
Clause 27. The method of any of clauses 25 to 26, wherein the set of DL-RS capabilities comprise a set of DL-RS for sensing capabilities, and wherein the DL-RS capability change indication is a DL-RS for sensing capability change indication.
Clause 28. The method of any of clauses 25 to 27, wherein the reception of the DL-RS capability change indication is conditioned upon one or more DL-RS capability change constraints.
Clause 29. The method of clause 28, wherein the one or more DL-RS capability change constraints comprise a time requirement that sets a minimum time between DL-RS capability change indication transmissions from the wireless network component.
Clause 30. The method of any of clauses 28 to 29, wherein the one or more DL-RS capability change constraints comprise a first subset of the set of DL-RS capabilities that is permitted to be changed and a second subset of the set of DL-RS capabilities that is not permitted to be changed.
Clause 31. The method of any of clauses 28 to 30, wherein the one or more DL-RS capability change constraints comprise, for at least one DL-RS capability from the set of DL-RS capabilities, a first subset of DL-RS capability change options that is permitted, a second subset of DL-RS capability change options that is not permitted, or both.
Clause 32. The method of any of clauses 25 to 31, wherein the wireless network component is a transmission reception point (TRP).
Clause 33. A method of operating a wireless network component, comprising: receiving a set of downlink reference signal (DL-RS) pre-configurations for on-demand RS from a device; receiving an on-demand DL-RS request from the device that requests a first DL-RS configuration from the set of DL-RS pre-configurations for a DL-RS procedure; determining to transition from the first DL-RS configuration to a second DL-RS configuration from the set of DL-RS pre-configurations for the DL-RS procedure; and transmitting a DL-RS configuration update request to the device in response to the determination, the DL-RS configuration update request configured to request the transition from the first DL-RS configuration to the second DL-RS configuration.
Clause 34. The method of clause 33, wherein the set of DL-RS pre-configurations comprises a set of DL positioning RS (DL-PRS) pre-configurations, the on-demand DL-RS request is an on-demand DL-PRS request, and the DL-RS procedure is a DL-PRS procedure.
Clause 35. The method of any of clauses 33 to 34, wherein the set of DL-RS pre-configurations comprises a set of DL-RS for sensing pre-configurations, the on-demand DL-RS request is an on-demand DL-RS for sensing request, and the DL-RS procedure is a DL-RS for sensing procedure.
Clause 36. The method of any of clauses 33 to 35, wherein the set of DL-RS pre-configurations is ordered by DL-RS pre-configuration priority.
Clause 37. The method of any of clauses 33 to 36, wherein the determination is based on one or more DL-RS configuration update constraints.
Clause 38. The method of clause 37, wherein the one or more DL-RS configuration update constraints comprise a set of threshold DL-RS configuration requirements that is acceptable for the DL-RS procedure.
Clause 39. The method of clause 38, wherein the set of threshold DL-RS configuration requirements comprise: a minimum bandwidth, or a minimum number of active wireless network components, or a minimum number of active beams per wireless network component, or any combination thereof.
Clause 40. The method of any of clauses 37 to 39, wherein the one or more DL-RS configuration update constraints comprise a minimum time following a DL-RS configuration acceptance or between DL-RS configuration update requests or both.
Clause 41. The method of any of clauses 33 to 40, wherein the DL-RS configuration update request comprises scheduling information associated with the second DL-RS configuration.
Clause 42. The method of clause 41, wherein the scheduling information comprises a start time, an end time, a periodicity, a duration, or any combination thereof.
Clause 43. A method of operating a device, comprising: transmitting a set of downlink reference signal (DL-RS) pre-configurations for on-demand RS to a wireless network component; transmitting an on-demand DL-RS request to the wireless network component that requests a first DL-RS configuration from the set of DL-RS pre-configurations for a DL-RS procedure; and receiving a DL-RS configuration update request from the wireless network component that is configured to request the transition from the first DL-RS configuration to a second DL-RS configuration.
Clause 44. The method of clause 43, wherein the set of DL-RS pre-configurations comprises a set of DL positioning RS (DL-PRS) pre-configurations, the on-demand DL-RS request is an on-demand DL-PRS request, and the DL-RS procedure is a DL-PRS procedure.
Clause 45. The method of any of clauses 43 to 44, wherein the set of DL-RS pre-configurations comprise a set of DL-RS for sensing pre-configurations, the on-demand DL-RS request is an on-demand DL-RS for sensing request, and the DL-RS procedure is a DL-RS for sensing procedure.
Clause 46. The method of any of clauses 43 to 45, wherein the set of DL-RS pre-configurations is ordered by DL-RS pre-configuration priority.
Clause 47. The method of any of clauses 43 to 46, wherein the DL-RS configuration update request is associated with one or more DL-RS configuration update constraints.
Clause 48. The method of clause 47, wherein the one or more DL-RS configuration update constraints comprise a set of threshold DL-RS configuration requirements that is acceptable for the DL-RS procedure.
Clause 49. The method of clause 48, wherein the set of threshold DL-RS configuration requirements comprise: a minimum bandwidth, or a minimum number of active wireless network components, or a minimum number of active beams per wireless network component, or any combination thereof.
Clause 50. The method of clause 49, wherein the one or more DL-RS configuration update constraints comprise a minimum time following a DL-RS configuration acceptance or between DL-RS configuration update requests or both.
Clause 51. The method of any of clauses 43 to 50, wherein the DL-RS configuration update request comprises scheduling information associated with the second DL-RS configuration.
Clause 52. The method of clause 51, wherein the scheduling information comprises a start time, an end time, a periodicity, a duration, or any combination thereof.
Clause 53. A wireless network component, comprising: a memory; and at least one processor communicatively coupled to the memory, the at least one processor configured to: transmit a downlink (DL) reference signal (DL-RS) waveform capability for on-demand RS to a device, the DL-RS waveform capability indicating a set of waveform types supported by the wireless network component for DL-RS; and receive an on-demand DL-RS request from the device that requests a DL-RS configuration associated with a waveform type from the set of waveform types.
Clause 54. The wireless network component of clause 53, wherein the DL-RS waveform capability is a DL-PRS waveform capability for on-demand PRS, the on-demand DL-RS request is a DL-PRS request associated with a positioning session of a user equipment (UE), and the device is a position estimation entity.
Clause 55. The wireless network component of clause 54, wherein the waveform type is configured per DL-PRS resource set or per positioning frequency layer (PFL).
Clause 56. The wireless network component of clause 55, wherein the waveform type is associated with a first DL-PRS resource set or a first PFL of the DL-RS configuration, and wherein another waveform type from the set of waveform types is associated with a second DL-PRS resource set or a second PFL of the DL-RS configuration.
Clause 57. The wireless network component of any of clauses 53 to 56, wherein the DL-RS waveform capability is a DL-RS for sensing waveform capability for on-demand RS for sensing procedure, and the on-demand DL-RS request is an RS for sensing request.
Clause 58. The wireless network component of any of clauses 53 to 57, wherein the set of waveform types comprises a cyclic prefix orthogonal frequency division multiplex (CP-OFDM) waveform type, a discrete Fourier transform (DFT)-spread OFDM (DFT-S-OFDM) waveform type, an orthogonal time frequency space (OTFS) waveform type, a frequency modulated continuous wave (FMCW) waveform type, or any combination thereof.
Clause 59. The wireless network component of any of clauses 53 to 58, wherein the waveform type is configured per positioning session or per sensing session, with the waveform type required to be the same for each wireless network component associated with the positioning session or the sensing session, or wherein the waveform type is configured per wireless network component, with the waveform type being the same or different across wireless network components associated with the positioning session or the sensing session.
Clause 60. The wireless network component of any of clauses 53 to 59, wherein the wireless network component is a transmission reception point (TRP).
Clause 61. A device, comprising: a memory; and at least one processor communicatively coupled to the memory, the at least one processor configured to: receive a downlink reference signal (DL-RS) waveform capability for on-demand RS from a wireless network component, the DL-RS waveform capability indicating a set of waveform types supported by the wireless network component for DL-RS; select a waveform type for a DL-RS configuration associated with a DL-RS procedure; and transmit an on-demand DL-RS request to the wireless network component that requests a DL-RS configuration for the DL-RS procedure, the DL-RS configuration associated with the waveform type.
Clause 62. The device of clause 61, wherein the DL-RS waveform capability is a DL-PRS waveform capability for on-demand PRS, the on-demand DL-RS request is a DL-PRS request associated with a positioning session of a user equipment (UE), and the device is a position estimation entity.
Clause 63. The device of clause 62, wherein the waveform type is configured per DL-PRS resource set or per positioning frequency layer (PFL).
Clause 64. The device of clause 63, wherein the waveform type is associated with a first DL-PRS resource set or a first PFL of the DL-RS configuration, and wherein another waveform type from the set of waveform types is associated with a second DL-PRS resource set or a second PFL of the DL-RS configuration.
Clause 65. The device of any of clauses 61 to 64, wherein two or more waveform types from the set of waveform types are associated with different power consumption properties, and wherein the selecting selects the waveform type based in part upon a power consumption parameter.
Clause 66. The device of any of clauses 61 to 65, wherein the set of waveform types comprises a cyclic prefix orthogonal frequency division multiplex (CP-OFDM) waveform type, a discrete Fourier transform (DFT)-spread OFDM (DFT-S-OFDM) waveform type, an orthogonal time frequency space (OTFS) waveform type, a frequency modulated continuous wave (FMCW) waveform type, or any combination thereof.
Clause 67. The device of any of clauses 61 to 66, wherein the waveform type is configured per positioning session or per sensing session, with the waveform type required to be the same for each wireless network component associated with the positioning session or the sensing session, or wherein the waveform type is configured per wireless network component, with the waveform type being the same or different across wireless network components associated with the positioning session or the sensing session.
Clause 68. The device of any of clauses 61 to 67, wherein the wireless network component is a transmission reception point (TRP).
Clause 69. A wireless network component, comprising: a memory; and at least one processor communicatively coupled to the memory, the at least one processor configured to: transmit a set of downlink reference signal (DL-RS) capabilities of the wireless network component to a device; determine that one or more DL-RS capabilities from the set of DL-RS capabilities has changed; and transmit a DL-RS capability change indication that indicates the one or more changed DL-RS capabilities to the device in response to the determination.
Clause 70. The wireless network component of clause 69, wherein the set of DL-RS capabilities comprise a set of DL positioning RS (DL-PRS) capabilities, and wherein the DL-RS capability change indication is a DL-PRS capability change indication.
Clause 71. The wireless network component of any of clauses 69 to 70, wherein the set of DL-RS capabilities comprise a set of DL-RS for sensing capabilities, and wherein the DL-RS capability change indication is a DL-RS for sensing capability change indication.
Clause 72. The wireless network component of any of clauses 69 to 71, wherein the transmission of the DL-RS capability change indication is conditioned upon one or more DL-RS capability change constraints.
Clause 73. The wireless network component of clause 72, wherein the one or more DL-RS capability change constraints comprise a time requirement that sets a minimum time between DL-RS capability change indication transmissions.
Clause 74. The wireless network component of any of clauses 72 to 73, wherein the one or more DL-RS capability change constraints comprise a first subset of the set of DL-RS capabilities that is permitted to be changed and a second subset of the set of DL-RS capabilities that is not permitted to be changed.
Clause 75. The wireless network component of any of clauses 72 to 74, wherein the one or more DL-RS capability change constraints comprise, for at least one DL-RS capability from the set of DL-RS capabilities, a first subset of DL-RS capability change options that is permitted, a second subset of DL-RS capability change options that is not permitted, or both.
Clause 76. The wireless network component of any of clauses 69 to 75, wherein the wireless network component is a transmission reception point (TRP).
Clause 77. A device, comprising: a memory; and at least one processor communicatively coupled to the memory, the at least one processor configured to: receive a set of downlink reference signal (DL-RS) capabilities of a wireless network component; and receive a DL-RS capability change indication that is initiated by the wireless network component and that indicates one or more changed DL-RS capabilities of the wireless network component relative to the set of DL-RS capabilities.
Clause 78. The device of clause 77, wherein the set of DL-RS capabilities comprise a set of DL positioning RS (DL-PRS) capabilities, and wherein the DL-RS capability change indication is a DL-PRS capability change indication.
Clause 79. The device of any of clauses 77 to 78, wherein the set of DL-RS capabilities comprise a set of DL-RS for sensing capabilities, and wherein the DL-RS capability change indication is a DL-RS for sensing capability change indication.
Clause 80. The device of any of clauses 77 to 79, wherein the reception of the DL-RS capability change indication is conditioned upon one or more DL-RS capability change constraints.
Clause 81. The device of clause 80, wherein the one or more DL-RS capability change constraints comprise a time requirement that sets a minimum time between DL-RS capability change indication transmissions from the wireless network component.
Clause 82. The device of any of clauses 80 to 81, wherein the one or more DL-RS capability change constraints comprise a first subset of the set of DL-RS capabilities that is permitted to be changed and a second subset of the set of DL-RS capabilities that is not permitted to be changed.
Clause 83. The device of any of clauses 80 to 82, wherein the one or more DL-RS capability change constraints comprise, for at least one DL-RS capability from the set of DL-RS capabilities, a first subset of DL-RS capability change options that is permitted, a second subset of DL-RS capability change options that is not permitted, or both.
Clause 84. The device of any of clauses 77 to 83, wherein the wireless network component is a transmission reception point (TRP).
Clause 85. A wireless network component, comprising: a memory; and at least one processor communicatively coupled to the memory, the at least one processor configured to: receive a set of downlink reference signal (DL-RS) pre-configurations for on-demand RS from a device; receive an on-demand DL-RS request from the device that requests a first DL-RS configuration from the set of DL-RS pre-configurations for a DL-RS procedure; determine to transition from the first DL-RS configuration to a second DL-RS configuration from the set of DL-RS pre-configurations for the DL-RS procedure; and transmit a DL-RS configuration update request to the device in response to the determination, the DL-RS configuration update request configured to request the transition from the first DL-RS configuration to the second DL-RS configuration.
Clause 86. The wireless network component of clause 85, wherein the set of DL-RS pre-configurations comprises a set of DL positioning RS (DL-PRS) pre-configurations, the on-demand DL-RS request is an on-demand DL-PRS request, and the DL-RS procedure is a DL-PRS procedure.
Clause 87. The wireless network component of any of clauses 85 to 86, wherein the set of DL-RS pre-configurations comprises a set of DL-RS for sensing pre-configurations, the on-demand DL-RS request is an on-demand DL-RS for sensing request, and the DL-RS procedure is a DL-RS for sensing procedure.
Clause 88. The wireless network component of any of clauses 85 to 87, wherein the set of DL-RS pre-configurations is ordered by DL-RS pre-configuration priority.
Clause 89. The wireless network component of any of clauses 85 to 88, wherein the determination is based on one or more DL-RS configuration update constraints.
Clause 90. The wireless network component of clause 89, wherein the one or more DL-RS configuration update constraints comprise a set of threshold DL-RS configuration requirements that is acceptable for the DL-RS procedure.
Clause 91. The wireless network component of clause 90, wherein the set of threshold DL-RS configuration requirements comprise: a minimum bandwidth, or a minimum number of active wireless network components, or a minimum number of active beams per wireless network component, or any combination thereof.
Clause 92. The wireless network component of any of clauses 89 to 91, wherein the one or more DL-RS configuration update constraints comprise a minimum time following a DL-RS configuration acceptance or between DL-RS configuration update requests or both.
Clause 93. The wireless network component of any of clauses 85 to 92, wherein the DL-RS configuration update request comprises scheduling information associated with the second DL-RS configuration.
Clause 94. The wireless network component of clause 93, wherein the scheduling information comprises a start time, an end time, a periodicity, a duration, or any combination thereof.
Clause 95. A device, comprising: a memory; and at least one processor communicatively coupled to the memory, the at least one processor configured to: transmit a set of downlink reference signal (DL-RS) pre-configurations for on-demand RS to a wireless network component; transmit an on-demand DL-RS request to the wireless network component that requests a first DL-RS configuration from the set of DL-RS pre-configurations for a DL-RS procedure; and receive a DL-RS configuration update request from the wireless network component that is configured to request the transition from the first DL-RS configuration to a second DL-RS configuration.
Clause 96. The device of clause 95, wherein the set of DL-RS pre-configurations comprises a set of DL positioning RS (DL-PRS) pre-configurations, the on-demand DL-RS request is an on-demand DL-PRS request, and the DL-RS procedure is a DL-PRS procedure.
Clause 97. The device of any of clauses 95 to 96, wherein the set of DL-RS pre-configurations comprise a set of DL-RS for sensing pre-configurations, the on-demand DL-RS request is an on-demand DL-RS for sensing request, and the DL-RS procedure is a DL-RS for sensing procedure.
Clause 98. The device of any of clauses 95 to 97, wherein the set of DL-RS pre-configurations is ordered by DL-RS pre-configuration priority.
Clause 99. The device of any of clauses 95 to 98, wherein the DL-RS configuration update request is associated with one or more DL-RS configuration update constraints.
Clause 100. The device of clause 99, wherein the one or more DL-RS configuration update constraints comprise a set of threshold DL-RS configuration requirements that is acceptable for the DL-RS procedure.
Clause 101. The device of clause 100, wherein the set of threshold DL-RS configuration requirements comprise: a minimum bandwidth, or a minimum number of active wireless network components, or a minimum number of active beams per wireless network component, or any combination thereof.
Clause 102. The device of clause 101, wherein the one or more DL-RS configuration update constraints comprise a minimum time following a DL-RS configuration acceptance or between DL-RS configuration update requests or both.
Clause 103. The device of any of clauses 95 to 102, wherein the DL-RS configuration update request comprises scheduling information associated with the second DL-RS configuration.
Clause 104. The device of clause 103, wherein the scheduling information comprises a start time, an end time, a periodicity, a duration, or any combination thereof.
Clause 105. A wireless network component, comprising: means for transmitting a downlink (DL) reference signal (DL-RS) waveform capability for on-demand RS to a device, the DL-RS waveform capability indicating a set of waveform types supported by the wireless network component for DL-RS; and means for receiving an on-demand DL-RS request from the device that requests a DL-RS configuration associated with a waveform type from the set of waveform types.
Clause 106. The wireless network component of clause 105, wherein the DL-RS waveform capability is a DL-PRS waveform capability for on-demand PRS, the on-demand DL-RS request is a DL-PRS request associated with a positioning session of a user equipment (UE), and the device is a position estimation entity.
Clause 107. The wireless network component of clause 106, wherein the waveform type is configured per DL-PRS resource set or per positioning frequency layer (PFL).
Clause 108. The wireless network component of clause 107, wherein the waveform type is associated with a first DL-PRS resource set or a first PFL of the DL-RS configuration, and wherein another waveform type from the set of waveform types is associated with a second DL-PRS resource set or a second PFL of the DL-RS configuration.
Clause 109. The wireless network component of any of clauses 105 to 108, wherein the DL-RS waveform capability is a DL-RS for sensing waveform capability for on-demand RS for sensing procedure, and the on-demand DL-RS request is an RS for sensing request.
Clause 110. The wireless network component of any of clauses 105 to 109, wherein the set of waveform types comprises a cyclic prefix orthogonal frequency division multiplex (CP-OFDM) waveform type, a discrete Fourier transform (DFT)-spread OFDM (DFT-S-OFDM) waveform type, an orthogonal time frequency space (OTFS) waveform type, a frequency modulated continuous wave (FMCW) waveform type, or any combination thereof.
Clause 111. The wireless network component of any of clauses 105 to 110, wherein the waveform type is configured per positioning session or per sensing session, with the waveform type required to be the same for each wireless network component associated with the positioning session or the sensing session, or wherein the waveform type is configured per wireless network component, with the waveform type being the same or different across wireless network components associated with the positioning session or the sensing session.
Clause 112. The wireless network component of any of clauses 105 to 111, wherein the wireless network component is a transmission reception point (TRP).
Clause 113. A device, comprising: means for receiving a downlink reference signal (DL-RS) waveform capability for on-demand RS from a wireless network component, the DL-RS waveform capability indicating a set of waveform types supported by the wireless network component for DL-RS; means for selecting a waveform type for a DL-RS configuration associated with a DL-RS procedure; and means for transmitting an on-demand DL-RS request to the wireless network component that requests a DL-RS configuration for the DL-RS procedure, the DL-RS configuration associated with the waveform type.
Clause 114. The device of clause 113, wherein the DL-RS waveform capability is a DL-PRS waveform capability for on-demand PRS, the on-demand DL-RS request is a DL-PRS request associated with a positioning session of a user equipment (UE), and the device is a position estimation entity.
Clause 115. The device of clause 114, wherein the waveform type is configured per DL-PRS resource set or per positioning frequency layer (PFL).
Clause 116. The device of clause 115, wherein the waveform type is associated with a first DL-PRS resource set or a first PFL of the DL-RS configuration, and wherein another waveform type from the set of waveform types is associated with a second DL-PRS resource set or a second PFL of the DL-RS configuration.
Clause 117. The device of any of clauses 113 to 116, wherein two or more waveform types from the set of waveform types are associated with different power consumption properties, and wherein the selecting selects the waveform type based in part upon a power consumption parameter.
Clause 118. The device of any of clauses 113 to 117, wherein the set of waveform types comprises a cyclic prefix orthogonal frequency division multiplex (CP-OFDM) waveform type, a discrete Fourier transform (DFT)-spread OFDM (DFT-S-OFDM) waveform type, an orthogonal time frequency space (OTFS) waveform type, a frequency modulated continuous wave (FMCW) waveform type, or any combination thereof.
Clause 119. The device of any of clauses 113 to 118, wherein the waveform type is configured per positioning session or per sensing session, with the waveform type required to be the same for each wireless network component associated with the positioning session or the sensing session, or wherein the waveform type is configured per wireless network component, with the waveform type being the same or different across wireless network components associated with the positioning session or the sensing session.
Clause 120. The device of any of clauses 113 to 119, wherein the wireless network component is a transmission reception point (TRP).
Clause 121. A wireless network component, comprising: means for transmitting a set of downlink reference signal (DL-RS) capabilities of the wireless network component to a device; means for determining that one or more DL-RS capabilities from the set of DL-RS capabilities has changed; and means for transmitting a DL-RS capability change indication that indicates the one or more changed DL-RS capabilities to the device in response to the determination.
Clause 122. The wireless network component of clause 121, wherein the set of DL-RS capabilities comprise a set of DL positioning RS (DL-PRS) capabilities, and wherein the DL-RS capability change indication is a DL-PRS capability change indication.
Clause 123. The wireless network component of any of clauses 121 to 122, wherein the set of DL-RS capabilities comprise a set of DL-RS for sensing capabilities, and wherein the DL-RS capability change indication is a DL-RS for sensing capability change indication.
Clause 124. The wireless network component of any of clauses 121 to 123, wherein the transmission of the DL-RS capability change indication is conditioned upon one or more DL-RS capability change constraints.
Clause 125. The wireless network component of clause 124, wherein the one or more DL-RS capability change constraints comprise a time requirement that sets a minimum time between DL-RS capability change indication transmissions.
Clause 126. The wireless network component of any of clauses 124 to 125, wherein the one or more DL-RS capability change constraints comprise a first subset of the set of DL-RS capabilities that is permitted to be changed and a second subset of the set of DL-RS capabilities that is not permitted to be changed.
Clause 127. The wireless network component of any of clauses 124 to 126, wherein the one or more DL-RS capability change constraints comprise, for at least one DL-RS capability from the set of DL-RS capabilities, a first subset of DL-RS capability change options that is permitted, a second subset of DL-RS capability change options that is not permitted, or both.
Clause 128. The wireless network component of any of clauses 121 to 127, wherein the wireless network component is a transmission reception point (TRP).
Clause 129. A device, comprising: means for receiving a set of downlink reference signal (DL-RS) capabilities of a wireless network component; and means for receiving a DL-RS capability change indication that is initiated by the wireless network component and that indicates one or more changed DL-RS capabilities of the wireless network component relative to the set of DL-RS capabilities.
Clause 130. The device of clause 129, wherein the set of DL-RS capabilities comprise a set of DL positioning RS (DL-PRS) capabilities, and wherein the DL-RS capability change indication is a DL-PRS capability change indication.
Clause 131. The device of any of clauses 129 to 130, wherein the set of DL-RS capabilities comprise a set of DL-RS for sensing capabilities, and wherein the DL-RS capability change indication is a DL-RS for sensing capability change indication.
Clause 132. The device of any of clauses 129 to 131, wherein the reception of the DL-RS capability change indication is conditioned upon one or more DL-RS capability change constraints.
Clause 133. The device of clause 132, wherein the one or more DL-RS capability change constraints comprise a time requirement that sets a minimum time between DL-RS capability change indication transmissions from the wireless network component.
Clause 134. The device of any of clauses 132 to 133, wherein the one or more DL-RS capability change constraints comprise a first subset of the set of DL-RS capabilities that is permitted to be changed and a second subset of the set of DL-RS capabilities that is not permitted to be changed.
Clause 135. The device of any of clauses 132 to 134, wherein the one or more DL-RS capability change constraints comprise, for at least one DL-RS capability from the set of DL-RS capabilities, a first subset of DL-RS capability change options that is permitted, a second subset of DL-RS capability change options that is not permitted, or both.
Clause 136. The device of any of clauses 129 to 135, wherein the wireless network component is a transmission reception point (TRP).
Clause 137. A wireless network component, comprising: means for receiving a set of downlink reference signal (DL-RS) pre-configurations for on-demand RS from a device; means for receiving an on-demand DL-RS request from the device that requests a first DL-RS configuration from the set of DL-RS pre-configurations for a DL-RS procedure; means for determining to transition from the first DL-RS configuration to a second DL-RS configuration from the set of DL-RS pre-configurations for the DL-RS procedure; and means for transmitting a DL-RS configuration update request to the device in response to the determination, the DL-RS configuration update request configured to request the transition from the first DL-RS configuration to the second DL-RS configuration.
Clause 138. The wireless network component of clause 137, wherein the set of DL-RS pre-configurations comprises a set of DL positioning RS (DL-PRS) pre-configurations, the on-demand DL-RS request is an on-demand DL-PRS request, and the DL-RS procedure is a DL-PRS procedure.
Clause 139. The wireless network component of any of clauses 137 to 138, wherein the set of DL-RS pre-configurations comprises a set of DL-RS for sensing pre-configurations, the on-demand DL-RS request is an on-demand DL-RS for sensing request, and the DL-RS procedure is a DL-RS for sensing procedure.
Clause 140. The wireless network component of any of clauses 137 to 139, wherein the set of DL-RS pre-configurations is ordered by DL-RS pre-configuration priority.
Clause 141. The wireless network component of any of clauses 137 to 140, wherein the determination is based on one or more DL-RS configuration update constraints.
Clause 142. The wireless network component of clause 141, wherein the one or more DL-RS configuration update constraints comprise a set of threshold DL-RS configuration requirements that is acceptable for the DL-RS procedure.
Clause 143. The wireless network component of clause 142, wherein the set of threshold DL-RS configuration requirements comprise: a minimum bandwidth, or a minimum number of active wireless network components, or a minimum number of active beams per wireless network component, or any combination thereof.
Clause 144. The wireless network component of any of clauses 141 to 143, wherein the one or more DL-RS configuration update constraints comprise a minimum time following a DL-RS configuration acceptance or between DL-RS configuration update requests or both.
Clause 145. The wireless network component of any of clauses 137 to 144, wherein the DL-RS configuration update request comprises scheduling information associated with the second DL-RS configuration.
Clause 146. The wireless network component of clause 145, wherein the scheduling information comprises a start time, an end time, a periodicity, a duration, or any combination thereof.
Clause 147. A device, comprising: means for transmitting a set of downlink reference signal (DL-RS) pre-configurations for on-demand RS to a wireless network component; means for transmitting an on-demand DL-RS request to the wireless network component that requests a first DL-RS configuration from the set of DL-RS pre-configurations for a DL-RS procedure; and means for receiving a DL-RS configuration update request from the wireless network component that is configured to request the transition from the first DL-RS configuration to a second DL-RS configuration.
Clause 148. The device of clause 147, wherein the set of DL-RS pre-configurations comprises a set of DL positioning RS (DL-PRS) pre-configurations, the on-demand DL-RS request is an on-demand DL-PRS request, and the DL-RS procedure is a DL-PRS procedure.
Clause 149. The device of any of clauses 147 to 148, wherein the set of DL-RS pre-configurations comprise a set of DL-RS for sensing pre-configurations, the on-demand DL-RS request is an on-demand DL-RS for sensing request, and the DL-RS procedure is a DL-RS for sensing procedure.
Clause 150. The device of any of clauses 147 to 149, wherein the set of DL-RS pre-configurations is ordered by DL-RS pre-configuration priority.
Clause 151. The device of any of clauses 147 to 150, wherein the DL-RS configuration update request is associated with one or more DL-RS configuration update constraints.
Clause 152. The device of clause 151, wherein the one or more DL-RS configuration update constraints comprise a set of threshold DL-RS configuration requirements that is acceptable for the DL-RS procedure.
Clause 153. The device of clause 152, wherein the set of threshold DL-RS configuration requirements comprise: a minimum bandwidth, or a minimum number of active wireless network components, or a minimum number of active beams per wireless network component, or any combination thereof.
Clause 154. The device of clause 153, wherein the one or more DL-RS configuration update constraints comprise a minimum time following a DL-RS configuration acceptance or between DL-RS configuration update requests or both.
Clause 155. The device of any of clauses 147 to 154, wherein the DL-RS configuration update request comprises scheduling information associated with the second DL-RS configuration.
Clause 156. The device of clause 155, wherein the scheduling information comprises a start time, an end time, a periodicity, a duration, or any combination thereof.
Clause 157. A non-transitory computer-readable medium storing computer-executable instructions that, when executed by a wireless network component, cause the wireless network component to: transmit a downlink (DL) reference signal (DL-RS) waveform capability for on-demand RS to a device, the DL-RS waveform capability indicating a set of waveform types supported by the wireless network component for DL-RS; and receive an on-demand DL-RS request from the device that requests a DL-RS configuration associated with a waveform type from the set of waveform types.
Clause 158. The non-transitory computer-readable medium of clause 157, wherein the DL-RS waveform capability is a DL-PRS waveform capability for on-demand PRS, the on-demand DL-RS request is a DL-PRS request associated with a positioning session of a user equipment (UE), and the device is a position estimation entity.
Clause 159. The non-transitory computer-readable medium of clause 158, wherein the waveform type is configured per DL-PRS resource set or per positioning frequency layer (PFL).
Clause 160. The non-transitory computer-readable medium of clause 159, wherein the waveform type is associated with a first DL-PRS resource set or a first PFL of the DL-RS configuration, and wherein another waveform type from the set of waveform types is associated with a second DL-PRS resource set or a second PFL of the DL-RS configuration.
Clause 161. The non-transitory computer-readable medium of any of clauses 157 to 160, wherein the DL-RS waveform capability is a DL-RS for sensing waveform capability for on-demand RS for sensing procedure, and the on-demand DL-RS request is an RS for sensing request.
Clause 162. The non-transitory computer-readable medium of any of clauses 157 to 161, wherein the set of waveform types comprises a cyclic prefix orthogonal frequency division multiplex (CP-OFDM) waveform type, a discrete Fourier transform (DFT)-spread OFDM (DFT-S-OFDM) waveform type, an orthogonal time frequency space (OTFS) waveform type, a frequency modulated continuous wave (FMCW) waveform type, or any combination thereof.
Clause 163. The non-transitory computer-readable medium of any of clauses 157 to 162, wherein the waveform type is configured per positioning session or per sensing session, with the waveform type required to be the same for each wireless network component associated with the positioning session or the sensing session, or wherein the waveform type is configured per wireless network component, with the waveform type being the same or different across wireless network components associated with the positioning session or the sensing session.
Clause 164. The non-transitory computer-readable medium of any of clauses 157 to 163, wherein the wireless network component is a transmission reception point (TRP).
Clause 165. A non-transitory computer-readable medium storing computer-executable instructions that, when executed by a device, cause the device to: receive a downlink reference signal (DL-RS) waveform capability for on-demand RS from a wireless network component, the DL-RS waveform capability indicating a set of waveform types supported by the wireless network component for DL-RS; select a waveform type for a DL-RS configuration associated with a DL-RS procedure; and transmit an on-demand DL-RS request to the wireless network component that requests a DL-RS configuration for the DL-RS procedure, the DL-RS configuration associated with the waveform type.
Clause 166. The non-transitory computer-readable medium of clause 165, wherein the DL-RS waveform capability is a DL-PRS waveform capability for on-demand PRS, the on-demand DL-RS request is a DL-PRS request associated with a positioning session of a user equipment (UE), and the device is a position estimation entity.
Clause 167. The non-transitory computer-readable medium of clause 166, wherein the waveform type is configured per DL-PRS resource set or per positioning frequency layer (PFL).
Clause 168. The non-transitory computer-readable medium of clause 167, wherein the waveform type is associated with a first DL-PRS resource set or a first PFL of the DL-RS configuration, and wherein another waveform type from the set of waveform types is associated with a second DL-PRS resource set or a second PFL of the DL-RS configuration.
Clause 169. The non-transitory computer-readable medium of any of clauses 165 to 168, wherein two or more waveform types from the set of waveform types are associated with different power consumption properties, and wherein the selecting selects the waveform type based in part upon a power consumption parameter.
Clause 170. The non-transitory computer-readable medium of any of clauses 165 to 169, wherein the set of waveform types comprises a cyclic prefix orthogonal frequency division multiplex (CP-OFDM) waveform type, a discrete Fourier transform (DFT)-spread OFDM (DFT-S-OFDM) waveform type, an orthogonal time frequency space (OTFS) waveform type, a frequency modulated continuous wave (FMCW) waveform type, or any combination thereof.
Clause 171. The non-transitory computer-readable medium of any of clauses 165 to 170, wherein the waveform type is configured per positioning session or per sensing session, with the waveform type required to be the same for each wireless network component associated with the positioning session or the sensing session, or wherein the waveform type is configured per wireless network component, with the waveform type being the same or different across wireless network components associated with the positioning session or the sensing session.
Clause 172. The non-transitory computer-readable medium of any of clauses 165 to 171, wherein the wireless network component is a transmission reception point (TRP).
Clause 173. A non-transitory computer-readable medium storing computer-executable instructions that, when executed by a wireless network component, cause the wireless network component to: transmit a set of downlink reference signal (DL-RS) capabilities of the wireless network component to a device; determine that one or more DL-RS capabilities from the set of DL-RS capabilities has changed; and transmit a DL-RS capability change indication that indicates the one or more changed DL-RS capabilities to the device in response to the determination.
Clause 174. The non-transitory computer-readable medium of clause 173, wherein the set of DL-RS capabilities comprise a set of DL positioning RS (DL-PRS) capabilities, and wherein the DL-RS capability change indication is a DL-PRS capability change indication.
Clause 175. The non-transitory computer-readable medium of any of clauses 173 to 174, wherein the set of DL-RS capabilities comprise a set of DL-RS for sensing capabilities, and wherein the DL-RS capability change indication is a DL-RS for sensing capability change indication.
Clause 176. The non-transitory computer-readable medium of any of clauses 173 to 175, wherein the transmission of the DL-RS capability change indication is conditioned upon one or more DL-RS capability change constraints.
Clause 177. The non-transitory computer-readable medium of clause 176, wherein the one or more DL-RS capability change constraints comprise a time requirement that sets a minimum time between DL-RS capability change indication transmissions.
Clause 178. The non-transitory computer-readable medium of any of clauses 176 to 177, wherein the one or more DL-RS capability change constraints comprise a first subset of the set of DL-RS capabilities that is permitted to be changed and a second subset of the set of DL-RS capabilities that is not permitted to be changed.
Clause 179. The non-transitory computer-readable medium of any of clauses 176 to 178, wherein the one or more DL-RS capability change constraints comprise, for at least one DL-RS capability from the set of DL-RS capabilities, a first subset of DL-RS capability change options that is permitted, a second subset of DL-RS capability change options that is not permitted, or both.
Clause 180. The non-transitory computer-readable medium of any of clauses 173 to 179, wherein the wireless network component is a transmission reception point (TRP).
Clause 181. A non-transitory computer-readable medium storing computer-executable instructions that, when executed by a device, cause the device to: receive a set of downlink reference signal (DL-RS) capabilities of a wireless network component; and receive a DL-RS capability change indication that is initiated by the wireless network component and that indicates one or more changed DL-RS capabilities of the wireless network component relative to the set of DL-RS capabilities.
Clause 182. The non-transitory computer-readable medium of clause 181, wherein the set of DL-RS capabilities comprise a set of DL positioning RS (DL-PRS) capabilities, and wherein the DL-RS capability change indication is a DL-PRS capability change indication.
Clause 183. The non-transitory computer-readable medium of any of clauses 181 to 182, wherein the set of DL-RS capabilities comprise a set of DL-RS for sensing capabilities, and wherein the DL-RS capability change indication is a DL-RS for sensing capability change indication.
Clause 184. The non-transitory computer-readable medium of any of clauses 181 to 183, wherein the reception of the DL-RS capability change indication is conditioned upon one or more DL-RS capability change constraints.
Clause 185. The non-transitory computer-readable medium of clause 184, wherein the one or more DL-RS capability change constraints comprise a time requirement that sets a minimum time between DL-RS capability change indication transmissions from the wireless network component.
Clause 186. The non-transitory computer-readable medium of any of clauses 184 to 185, wherein the one or more DL-RS capability change constraints comprise a first subset of the set of DL-RS capabilities that is permitted to be changed and a second subset of the set of DL-RS capabilities that is not permitted to be changed.
Clause 187. The non-transitory computer-readable medium of any of clauses 184 to 186, wherein the one or more DL-RS capability change constraints comprise, for at least one DL-RS capability from the set of DL-RS capabilities, a first subset of DL-RS capability change options that is permitted, a second subset of DL-RS capability change options that is not permitted, or both.
Clause 188. The non-transitory computer-readable medium of any of clauses 181 to 187, wherein the wireless network component is a transmission reception point (TRP).
Clause 189. A non-transitory computer-readable medium storing computer-executable instructions that, when executed by a wireless network component, cause the wireless network component to: receive a set of downlink reference signal (DL-RS) pre-configurations for on-demand RS from a device; receive an on-demand DL-RS request from the device that requests a first DL-RS configuration from the set of DL-RS pre-configurations for a DL-RS procedure; determine to transition from the first DL-RS configuration to a second DL-RS configuration from the set of DL-RS pre-configurations for the DL-RS procedure; and transmit a DL-RS configuration update request to the device in response to the determination, the DL-RS configuration update request configured to request the transition from the first DL-RS configuration to the second DL-RS configuration.
Clause 190. The non-transitory computer-readable medium of clause 189, wherein the set of DL-RS pre-configurations comprises a set of DL positioning RS (DL-PRS) pre-configurations, the on-demand DL-RS request is an on-demand DL-PRS request, and the DL-RS procedure is a DL-PRS procedure.
Clause 191. The non-transitory computer-readable medium of any of clauses 189 to 190, wherein the set of DL-RS pre-configurations comprises a set of DL-RS for sensing pre-configurations, the on-demand DL-RS request is an on-demand DL-RS for sensing request, and the DL-RS procedure is a DL-RS for sensing procedure.
Clause 192. The non-transitory computer-readable medium of any of clauses 189 to 191, wherein the set of DL-RS pre-configurations is ordered by DL-RS pre-configuration priority.
Clause 193. The non-transitory computer-readable medium of any of clauses 189 to 192, wherein the determination is based on one or more DL-RS configuration update constraints.
Clause 194. The non-transitory computer-readable medium of clause 193, wherein the one or more DL-RS configuration update constraints comprise a set of threshold DL-RS configuration requirements that is acceptable for the DL-RS procedure.
Clause 195. The non-transitory computer-readable medium of clause 194, wherein the set of threshold DL-RS configuration requirements comprise: a minimum bandwidth, or a minimum number of active wireless network components, or a minimum number of active beams per wireless network component, or any combination thereof.
Clause 196. The non-transitory computer-readable medium of any of clauses 193 to 195, wherein the one or more DL-RS configuration update constraints comprise a minimum time following a DL-RS configuration acceptance or between DL-RS configuration update requests or both.
Clause 197. The non-transitory computer-readable medium of any of clauses 189 to 196, wherein the DL-RS configuration update request comprises scheduling information associated with the second DL-RS configuration.
Clause 198. The non-transitory computer-readable medium of clause 197, wherein the scheduling information comprises a start time, an end time, a periodicity, a duration, or any combination thereof.
Clause 199. A non-transitory computer-readable medium storing computer-executable instructions that, when executed by a device, cause the device to: transmit a set of downlink reference signal (DL-RS) pre-configurations for on-demand RS to a wireless network component; transmit an on-demand DL-RS request to the wireless network component that requests a first DL-RS configuration from the set of DL-RS pre-configurations for a DL-RS procedure; and receive a DL-RS configuration update request from the wireless network component that is configured to request the transition from the first DL-RS configuration to a second DL-RS configuration.
Clause 200. The non-transitory computer-readable medium of clause 199, wherein the set of DL-RS pre-configurations comprises a set of DL positioning RS (DL-PRS) pre-configurations, the on-demand DL-RS request is an on-demand DL-PRS request, and the DL-RS procedure is a DL-PRS procedure.
Clause 201. The non-transitory computer-readable medium of any of clauses 199 to 200, wherein the set of DL-RS pre-configurations comprise a set of DL-RS for sensing pre-configurations, the on-demand DL-RS request is an on-demand DL-RS for sensing request, and the DL-RS procedure is a DL-RS for sensing procedure.
Clause 202. The non-transitory computer-readable medium of any of clauses 199 to 201, wherein the set of DL-RS pre-configurations is ordered by DL-RS pre-configuration priority.
Clause 203. The non-transitory computer-readable medium of any of clauses 199 to 202, wherein the DL-RS configuration update request is associated with one or more DL-RS configuration update constraints.
Clause 204. The non-transitory computer-readable medium of clause 203, wherein the one or more DL-RS configuration update constraints comprise a set of threshold DL-RS configuration requirements that is acceptable for the DL-RS procedure.
Clause 205. The non-transitory computer-readable medium of clause 204, wherein the set of threshold DL-RS configuration requirements comprise: a minimum bandwidth, or a minimum number of active wireless network components, or a minimum number of active beams per wireless network component, or any combination thereof.
Clause 206. The non-transitory computer-readable medium of clause 205, wherein the one or more DL-RS configuration update constraints comprise a minimum time following a DL-RS configuration acceptance or between DL-RS configuration update requests or both.
Clause 207. The non-transitory computer-readable medium of any of clauses 199 to 206, wherein the DL-RS configuration update request comprises scheduling information associated with the second DL-RS configuration.
Clause 208. The non-transitory computer-readable medium of clause 207, wherein the scheduling information comprises a start time, an end time, a periodicity, a duration, or any combination thereof.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a general purpose processor, a digital signal processor (DSP), an ASIC, a field-programable gate array (FPGA), or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, for example, a combination of a DSP and a microprocessor, a plurality of microprocessors, one or more microprocessors in conjunction with a DSP core, or any other such configuration.

The methods, sequences and/or algorithms described in connection with the aspects disclosed herein may be embodied directly in hardware, in a software module executed by a processor, or in a combination of the two. A software module may reside in random access memory (RAM), flash memory, read-only memory (ROM), erasable programmable ROM (EPROM), electrically erasable programmable ROM (EEPROM), registers, hard disk, a removable disk, a CD-ROM, or any other form of storage medium known in the art. An example storage medium is coupled to the processor such that the processor can read information from, and write information to, the storage medium. In the alternative, the storage medium may be integral to the processor. The processor and the storage medium may reside in an ASIC. The ASIC may reside in a user terminal (e.g., UE). In the alternative, the processor and the storage medium may reside as discrete components in a user terminal.

In one or more example aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

While the foregoing disclosure shows illustrative aspects of the disclosure, it should be noted that various changes and modifications could be made herein without departing from the scope of the disclosure as defined by the appended claims. The functions, steps and/or actions of the method claims in accordance with the aspects of the disclosure described herein need not be performed in any particular order. Furthermore, although elements of the disclosure may be described or claimed in the singular, the plural is contemplated unless limitation to the singular is explicitly stated.
Embodiments of the invention can be described with reference to the following numbered clauses, with preferred features laid out in the dependent clauses:
1. A method of operating a wireless network component, comprising:
   transmitting a downlink (DL) reference signal (DL-RS) waveform capability for on-demand RS to a device, the DL-RS waveform capability indicating a set of waveform types supported by the wireless network component for DL-RS; and
   receiving an on-demand DL-RS request from the device that requests a DL-RS configuration associated with a waveform type from the set of waveform types.
2. The method of clause 1, wherein the DL-RS waveform capability is a DL-PRS waveform capability for on-demand PRS, the on-demand DL-RS request is a DL-PRS request associated with a positioning session of a user equipment (UE), and the device is a position estimation entity.
3. The method of clause 2, wherein the waveform type is configured per DL-PRS resource set or per positioning frequency layer (PFL).
4. The method of clause 3,
   wherein the waveform type is associated with a first DL-PRS resource set or a first PFL of the DL-RS configuration, and
   wherein another waveform type from the set of waveform types is associated with a second DL-PRS resource set or a second PFL of the DL-RS configuration.
5. The method of clause 1, wherein the DL-RS waveform capability is a DL-RS for sensing waveform capability for on-demand RS for sensing procedure, and the on-demand DL-RS request is an RS for sensing request.
6. The method of clause 1, wherein the set of waveform types comprises a cyclic prefix orthogonal frequency division multiplex (CP-OFDM) waveform type, a discrete Fourier transform (DFT)-spread OFDM (DFT-S-OFDM) waveform type, an orthogonal time frequency space (OTFS) waveform type, a frequency modulated continuous wave (FMCW) waveform type, or any combination thereof.
7. The method of clause 1,
   wherein the waveform type is configured per positioning session or per sensing session, with the waveform type required to be the same for each wireless network component associated with the positioning session or the sensing session, or
   wherein the waveform type is configured per wireless network component, with the waveform type being the same or different across wireless network components associated with the positioning session or the sensing session.
8. The method of clause 1, wherein the wireless network component is a transmission reception point (TRP).
9. A method of operating a device, comprising:
   receiving a downlink reference signal (DL-RS) waveform capability for on-demand RS from a wireless network component, the DL-RS waveform capability indicating a set of waveform types supported by the wireless network component for DL-RS;
   selecting a waveform type for a DL-RS configuration associated with a DL-RS procedure; and
   transmitting an on-demand DL-RS request to the wireless network component that requests a DL-RS configuration for the DL-RS procedure, the DL-RS configuration associated with the waveform type.
10. The method of clause 9, wherein the DL-RS waveform capability is a DL-PRS waveform capability for on-demand PRS, the on-demand DL-RS request is a DL-PRS request associated with a positioning session of a user equipment (UE), and the device is a position estimation entity.
11. The method of clause 10, wherein the waveform type is configured per DL-PRS resource set or per positioning frequency layer (PFL).
12. The method of clause 11,
   wherein the waveform type is associated with a first DL-PRS resource set or a first PFL of the DL-RS configuration, and
   wherein another waveform type from the set of waveform types is associated with a second DL-PRS resource set or a second PFL of the DL-RS configuration.
13. The method of clause 9,
   wherein two or more waveform types from the set of waveform types are associated with different power consumption properties, and
   wherein the selecting selects the waveform type based in part upon a power consumption parameter.
14. The method of clause 9, wherein the set of waveform types comprises a cyclic prefix orthogonal frequency division multiplex (CP-OFDM) waveform type, a discrete Fourier transform (DFT)-spread OFDM (DFT-S-OFDM) waveform type, an orthogonal time frequency space (OTFS) waveform type, a frequency modulated continuous wave (FMCW) waveform type, or any combination thereof.
15. The method of clause 9,
   wherein the waveform type is configured per positioning session or per sensing session, with the waveform type required to be the same for each wireless network component associated with the positioning session or the sensing session, or
   wherein the waveform type is configured per wireless network component, with the waveform type being the same or different across wireless network components associated with the positioning session or the sensing session.
16. The method of clause 9, wherein the wireless network component is a transmission reception point (TRP).
17. A method of operating a wireless network component, comprising:
   transmitting a set of downlink reference signal (DL-RS) capabilities of the wireless network component to a device;
   determining that one or more DL-RS capabilities from the set of DL-RS capabilities has changed; and
   transmitting a DL-RS capability change indication that indicates the one or more changed DL-RS capabilities to the device in response to the determination.
18. The method of clause 17,
   wherein the set of DL-RS capabilities comprise a set of DL positioning RS (DL-PRS) capabilities, and
   wherein the DL-RS capability change indication is a DL-PRS capability change indication.
19. The method of clause 17,
   wherein the set of DL-RS capabilities comprise a set of DL-RS for sensing capabilities, and
   wherein the DL-RS capability change indication is a DL-RS for sensing capability change indication.
20. The method of clause 17, wherein the transmission of the DL-RS capability change indication is conditioned upon one or more DL-RS capability change constraints.
21. The method of clause 20, wherein the one or more DL-RS capability change constraints comprise a time requirement that sets a minimum time between DL-RS capability change indication transmissions.
22. The method of clause 20, wherein the one or more DL-RS capability change constraints comprise a first subset of the set of DL-RS capabilities that is permitted to be changed and a second subset of the set of DL-RS capabilities that is not permitted to be changed.
23. The method of clause 20, wherein the one or more DL-RS capability change constraints comprise, for at least one DL-RS capability from the set of DL-RS capabilities, a first subset of DL-RS capability change options that is permitted, a second subset of DL-RS capability change options that is not permitted, or both.
24. The method of clause 17, wherein the wireless network component is a transmission reception point (TRP).
25. A method of operating a device, comprising:
   receiving a set of downlink reference signal (DL-RS) capabilities of a wireless network component; and
   receiving a DL-RS capability change indication that is initiated by the wireless network component and that indicates one or more changed DL-RS capabilities of the wireless network component relative to the set of DL-RS capabilities.
26. The method of clause 25,
   wherein the set of DL-RS capabilities comprise a set of DL positioning RS (DL-PRS) capabilities, and
   wherein the DL-RS capability change indication is a DL-PRS capability change indication.
27. The method of clause 25,
   wherein the set of DL-RS capabilities comprise a set of DL-RS for sensing capabilities, and
   wherein the DL-RS capability change indication is a DL-RS for sensing capability change indication.
28. The method of clause 25, wherein the reception of the DL-RS capability change indication is conditioned upon one or more DL-RS capability change constraints.
29. The method of clause 28,
   wherein the one or more DL-RS capability change constraints comprise a time requirement that sets a minimum time between DL-RS capability change indication transmissions from the wireless network component, or
   wherein the one or more DL-RS capability change constraints comprise a first subset of the set of DL-RS capabilities that is permitted to be changed and a second subset of the set of DL-RS capabilities that is not permitted to be changed, or
   wherein the one or more DL-RS capability change constraints comprise, for at least one DL-RS capability from the set of DL-RS capabilities, a first subset of DL-RS capability change options that is permitted, a second subset of DL-RS capability change options that is not permitted, or both.
30. The method of clause 25, wherein the wireless network component is a transmission reception point (TRP).

## Claims

1. A method of operating a wireless network component, comprising:
transmitting a set of downlink reference signal (DL-RS) capabilities of the wireless network component to a device;
determining that one or more DL-RS capabilities from the set of DL-RS capabilities has changed; and
transmitting a DL-RS capability change indication that indicates the one or more changed DL-RS capabilities to the device in response to the determination.

2. The method of claim 1,
wherein the set of DL-RS capabilities comprise a set of DL positioning RS (DL-PRS) capabilities, and
wherein the DL-RS capability change indication is a DL-PRS capability change indication.

3. The method of claim 1,
wherein the set of DL-RS capabilities comprise a set of DL-RS for sensing capabilities, and
wherein the DL-RS capability change indication is a DL-RS for sensing capability change indication.

4. The method of claim 1, wherein the transmission of the DL-RS capability change indication is conditioned upon one or more DL-RS capability change constraints.

5. The method of claim 4, wherein the one or more DL-RS capability change constraints comprise a time requirement that sets a minimum time between DL-RS capability change indication transmissions.

6. The method of claim 4, wherein the one or more DL-RS capability change constraints comprise a first subset of the set of DL-RS capabilities that is permitted to be changed and a second subset of the set of DL-RS capabilities that is not permitted to be changed.

7. The method of claim 4, wherein the one or more DL-RS capability change constraints comprise, for at least one DL-RS capability from the set of DL-RS capabilities, a first subset of DL-RS capability change options that is permitted, a second subset of DL-RS capability change options that is not permitted, or both.

8. The method of claim 4, wherein the wireless network component is a transmission reception point (TRP).

9. A method of operating a device, comprising:
receiving a set of downlink reference signal (DL-RS) capabilities of a wireless network component; and
receiving a DL-RS capability change indication that is initiated by the wireless network component and that indicates one or more changed DL-RS capabilities of the wireless network component relative to the set of DL-RS capabilities.

10. The method of claim 9,
wherein the set of DL-RS capabilities comprise a set of DL positioning RS (DL-PRS) capabilities, and
wherein the DL-RS capability change indication is a DL-PRS capability change indication.

11. The method of claim 9,
wherein the set of DL-RS capabilities comprise a set of DL-RS for sensing capabilities, and
wherein the DL-RS capability change indication is a DL-RS for sensing capability change indication.

12. The method of claim 9, wherein the reception of the DL-RS capability change indication is conditioned upon one or more DL-RS capability change constraints.

13. The method of claim 12,
wherein the one or more DL-RS capability change constraints comprise a time requirement that sets a minimum time between DL-RS capability change indication transmissions from the wireless network component, or
wherein the one or more DL-RS capability change constraints comprise a first subset of the set of DL-RS capabilities that is permitted to be changed and a second subset of the set of DL-RS capabilities that is not permitted to be changed, or
wherein the one or more DL-RS capability change constraints comprise, for at least one DL-RS capability from the set of DL-RS capabilities, a first subset of DL-RS capability change options that is permitted, a second subset of DL-RS capability change options that is not permitted, or both.

14. The method of claim 9, wherein the wireless network component is a transmission reception point (TRP).
